(19) Europäisches Patentamt
European Patent Office
Office européen des brevets

(11) **EP 4 604 534 A1**

(12) **EUROPEAN PATENT APPLICATION**
published in accordance with Art. 153(4) EPC

(43) Date of publication:
**20.08.2025 Bulletin 2025/34**

(21) Application number: **22961761.8**

(22) Date of filing: **13.10.2022**

(51) International Patent Classification (IPC):
**H04N 19/52** (2014.01)    **H04N 19/86** (2014.01)

(52) Cooperative Patent Classification (CPC):
**H04N 19/52; H04N 19/86**

(86) International application number:
**PCT/CN2022/125219**

(87) International publication number:
**WO 2024/077572 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **HAO, Xue**
  **Dongguan, Guangdong 523860 (CN)**

• **HUO, Junyan**
  **Dongguan, Guangdong 523860 (CN)**
• **MA, Yanzhuo**
  **Dongguan, Guangdong 523860 (CN)**
• **YANG, Fuzheng**
  **Dongguan, Guangdong 523860 (CN)**
• **LI, Ming**
  **Dongguan, Guangdong 523860 (CN)**

(74) Representative: **Penza, Giancarlo**
**Bugnion S.p.A.**
**Viale Lancetti, 17**
**20158 Milano (IT)**

(54) **ENCODING METHOD, DECODING METHOD, ENCODERS, DECODERS, AND STORAGE MEDIUM**

(57)    Provided in the embodiments of the present application are an encoding method and a decoding method. The decoding method comprises: at a decoding end, decoding a code stream to determine a BVD absolute value and BVD symbol index information of a current block; according to the BVD absolute value of the current block, sorting candidate BVDs of the current block to determine a sorting result; according to the BVD symbol index information and the sorting result, determining a BVD of the current block; and, according to the BVD of the current block, determining a reconstruction value of the current block. The encoding method comprises: at an encoding end, sorting candidate BVDs of a current block according to a BVD absolute value of the current block to determine a sorting result; according to BVD symbol information and the sorting result of the current block, determining BVD symbol index information of the current block; and writing the BVD absolute value and the BVD symbol index information into a code stream.

| Decode a bitstream, to determine an absolute value of a BVD of a current block and BVD sign index information of the current block | 101 |
| Sort, according to the absolute value of the BVD of the current block, candidate BVDs of the current block, to determine a sorting result | 102 |
| Determine, according to the BVD sign index information and the sorting result, the BVD of the current block | 103 |
| Determine, according to the BVD of the current block, a reconstruction value of the current block | 104 |

**FIG. 5**

**Description**

TECHNICAL FIELD

Embodiments of the disclosure relates to the technical field of picture processing, and in particular to an encoding method, a decoding method, an encoder, a decoder, and a storage medium.

BACKGROUND

With the increase of people's requirements on video display quality, new video application forms such as a High Definition (HD) video, an Ultra High Definition (UHD) video or the like have been emerged. H.265/High Efficiency Video Coding (HEVC) cannot meet demands of rapid development of video applications any more. The Joint Video Exploration Team (JVET) has proposed a next-generation video coding standard H.266/Versatile Video Coding (VVC), of which a corresponding test model is a VVC Test Model (VTM).

Intra Block Copy (IBC) is an extended tool of VVC with respect to coding of video sequences with a screen content type (screen content coding), which significantly improves coding efficiency of screen content sequences. However, in an IBC mode, methods for transmission of information on signs of Block Vector Differences (BVDs) are usually relatively complicated, which increases a transmission bitrate to a certain extent, thereby reducing coding performance in the IBC mode.

SUMMARY

Embodiments of the disclosure provide an encoding method, a decoding method, an encoder, a decoder, and a storage medium, which may effectively reduce a bitrate required for transmission of signs of BVDs in a IBC mode, and thus may improve coding efficiency.

Technical solutions of the embodiments of the disclosure may be implemented as follows.

According to a first aspect, an embodiment of the disclosure provides a decoding method. The method is applied to a decoder and includes the following operations.

A bitstream is decoded, to determine an absolute value of a BVD of a current block and BVD sign index information of the current block.

One or more candidate BVDs of the current block is sorted according to the absolute value of the BVD of the current block, to determine a sorting result.

The BVD of the current block is determined according to the BVD sign index information and the sorting result.

A reconstruction value of the current block is determined according to the BVD of the current block.

According to a second aspect, an embodiment of the disclosure provides an encoding method. The method is applied to an encoder and includes the following operations.

One or more candidate BVDs of a current block is sorted according to an absolute value of a BVD of the current block, to determine a sorting result.

BVD sign index information of the current block is determined according to BVD sign information of the current block and the sorting result.

The absolute value of the BVD and the BVD sign index information are written into a bitstream.

According to a third aspect, an embodiment of the disclosure provides an encoder, the encoder includes a first determination unit and a coding unit.

The first determination unit is configured to: sort, according to an absolute value of a BVD of a current block, one or more candidate BVDs of the current block, to determine a sorting result; and determine, according to BVD sign information of the current block and the sorting result, BVD sign index information of the current block.

The coding unit is configured to write the absolute value of the BVD and the BVD sign index information into a bitstream.

According to a fourth aspect, an embodiment of the disclosure provides an encoder. The encoder includes a first memory and a first processor.

The first memory is configured to store computer programs executable on the first processor.

The first processor is configured to perform, when executing the computer programs, the method of the second aspect.

According to a fifth aspect, an embodiment of the disclosure provides a decoder. The decoder includes a decoding unit and a second determination unit.

The decoding unit is configured to decode a bitstream.

The second determination unit is configured to: determine an absolute value of a BVD of a current block and BVD sign index information of the current block; sort, according to the absolute value of the BVD of the current block, one or more candidate BVDs of the current block, to determine a sorting result; determine, according to the BVD sign index information and the sorting result, the BVD of the current block; and determine, according to the BVD of the current block, a reconstruction value of the current block.

According to a sixth aspect, an embodiment of the disclosure provides a decoder. The decoder includes a second memory and a second processor.

The second memory is configured to store computer programs executable on the second processor.

The second processor is configured to perform, when executing the computer programs, the method of the first aspect.

According to a seventh aspect, an embodiment of the disclosure provides a computer-readable storage medium. The computer-readable storage medium has stored thereon computer programs. The computer programs implement, when being executed, the method of the first aspect or the method of the second aspect.

The embodiments of the disclosure provide an encoding method, a decoding method, an encoder, a decoder, and a storage medium. At the decoding side, a bitstream is decoded, to determine an absolute value of a BVD of a current block and BVD sign index information of the current block; one or more candidate BVDs of the current block is sorted according to the absolute value of the BVD of the current block, to determine a sorting result; the BVD of the current block is determined according to the BVD sign index information and the sorting result; and a reconstruction value of the current block is determined according to the BVD of the current block. At the encoding side, one or more candidate BVDs of a current block is sorted according to an absolute value of a BVD of the current block, to determine a sorting result; BVD sign index information of the current block is determined according to BVD sign information of the current block and the sorting result; and the absolute value of the BVD and the BVD sign index information are written into a bitstream. It may be seen that in the embodiments of the disclosure, the one or more candidate BVDs of the current block may be effectively sorted according to the absolute value of the BVD of the current block, so that the BVD sign index information may be determined and transmitted by using the sorting result during encoding, and the BVD sign information of the current block may be parsed by using the sorting result during decoding. Furthermore, the BVD sign information may be encoded and decoded by using Context-Adaptive Binary Arithmetic Coding (CABAC) encoding and decoding technologies, which may effectively reduce the bitrate required for transmission of signs of the BVDs in the IBC mode, and thus may improve coding efficiency.

BRIEF DESCRIPTION OF THE DRAWINGS

FIG. 1 is a schematic diagram of prediction in an IBC mode.
FIG. 2 is a schematic diagram of adjacent blocks.
FIG. 3 is a block diagram of a video encoding system provided in an embodiment of the disclosure.
FIG. 4 is a block diagram of a video decoding system provided in an embodiment of the disclosure.
FIG. 5 is a first schematic diagram of a decoding method in an embodiment of the disclosure.
FIG. 6 is a schematic diagram of template types.
FIG. 7 is a schematic diagram of BVD and Block Vector Prediction (BVP) of a current Coding Block (CB).
FIG. 8 is a schematic diagram of motion compensation of templates.
FIG. 9 is a schematic diagram of a BVD combination.
FIG. 10 is a second schematic diagram of a decoding method in an embodiment of the disclosure.
FIG. 11 is a schematic diagram of calculating cost.
FIG. 12 is a first schematic diagram of an encoding method in an embodiment of the disclosure.
FIG. 13 is a second schematic diagram of an encoding method in an embodiment of the disclosure.
FIG. 14 is a first schematic diagram of structures of an encoder.
FIG. 15 is a second schematic diagram of structures of an encoder.
FIG. 16 is a first schematic diagram of structures of a decoder.
FIG. 17 is a second schematic diagram of structures of a decoder.

DETAILED DESCRIPTION

In order to understand features and technical contents of the embodiments of the disclosure in more detail, implementations of the embodiments of the disclosure will set forth in detail below with reference to the drawings. The attached drawings are only for reference and explanation, and are not intended to limit the embodiments of the disclosure.

In the following descriptions, reference is made to "some embodiments" which describe a subset of all possible embodiments. However, it may be understood that "some embodiments" may be the same or different subsets of all possible embodiments, and may be combined with each other without conflict. It should also be noted that terms "first

"\second\third" involved in the embodiments of the disclosure are only intended to distinguish similar objects and do not represent a specific order of the objects. It may be understood that "first\second\third" may be interchanged in a specific order or sequence if allowable, so that the embodiments of the disclosure described here may be implemented in an order other than that shown or described here.

In a video picture, a first picture component, a second picture component and a third picture component are usually used to characterize a Coding Block (CB). The three picture components are a luma component, a blue chroma component and a red chroma component respectively. Specifically, the luma component is usually represented by a symbol Y, the blue chroma component is usually represented by a symbol Cb or U, and the red chroma component is usually represented by a symbol Cr or V. In this way, the video picture may be represented in a YCbCr format or a YUV format.

In the embodiments of the disclosure, the first picture component may be a luma component, the second picture component may be a blue chroma component, and the third picture component may be a red chroma component. However, the embodiments of the disclosure do not make any specific limitation thereto.

General video coding and decoding standards generally use a block-based hybrid coding framework. Each frame in the video pictures is partitioned into square Largest Coding Units (LCUs) or Coding Tree Units (CTUs) with the same size (such as 128×128, 64×64, etc.). Each LCU or CTU may also be divided into rectangular Coding Units (CUs) according to rules. A CU may also be divided into smaller Prediction Units (PUs), Transform Units (TUs), etc.

The hybrid coding framework may include a prediction module, a transform module, a quantization module, an entropy coding module, an inloop filter module, etc. The prediction module may include intra prediction and inter prediction. The inter prediction may include motion estimation and motion compensation. Since there is a strong correlation between adjacent pixels in a frame in the video pictures, spatial redundancy between adjacent pixels may be eliminated by way of using intra prediction in video coding and decoding technologies. However, since there is also a strong similarity between adjacent frames in the video pictures, temporal redundancy between adjacent frames may be eliminated by way of using inter prediction in video coding and decoding technologies. Therefore, coding and decoding efficiencies may be improved.

A basic process of a video codec is as follows. At the encoding side, a picture is divided into blocks, intra prediction or inter prediction is used for a current block to generate a prediction block of the current block, the prediction block is subtracted from an original block of the current block to obtain a residual block, the residual block is transformed and quantized to obtain a quantization coefficient matrix, and the quantization coefficient matrix is entropy coded and output to a bitstream. At the decoding side, intra prediction or inter prediction is used for the current block to generate a prediction block of the current block, and on the other hand, the bitstream is decoded to obtain a quantization coefficient matrix, the quantization coefficient matrix is inversely quantized and inversely transformed to obtain a residual block, and the prediction block is added to the residual block to obtain a reconstructed block. The reconstructed blocks constitute a reconstructed picture, and the reconstructed picture is loop-filtered based on the picture or block to obtain a decoded picture. Operations similar to those at the decoding side are also required at the encoding side, to obtain a decoded picture. The decoded picture may be used as a reference frame of inter prediction for subsequent frames. Mode information or parameter information determined at the encoding side, such as block division information, prediction, transform, quantization, entropy coding, inloop filter or the like need to be output to the bitstream if necessary. The same mode information or parameter information (such as block division information, prediction, transform, quantization, entropy coding, inloop filter or the like) as those of the encoding side are determined at the decoding side by decoding and analyzing according to existing information, to ensure that the decoded picture obtained at the encoding side is the same as the decoded picture obtained at the decoding side. The decoded picture obtained at the encoding side is usually referred to as a reconstructed picture. The current block may be divided into PUs during prediction. The current block may be divided into TUs during transform. Division of PUs may be different from division of TUs. The above is a basic process of the video codec in the block-based hybrid coding framework. With the development of technologies, some modules or operations in the framework or process may be optimized. The embodiments of the disclosure are applicable to the basic process of the video codec in the block-based hybrid coding framework, but are not limited to the framework and process.

The current block may be a current CU or a current PU, etc.

Intra Block Copy (IBC) is an extended tool of Versatile Video Coding (VVC) with respect to coding of video sequences with a screen content type (screen content coding), which significantly improves coding efficiency of screen content sequences.

The IBC is a block-level coding mode. Similar to an inter technology, motion search, i.e., Block Matching (BM) is performed at the encoding side, to find a best Block Vector (BV) which may also be referred to as a Motion Vector (MV), for each CU. The BV is a vector pointing from the current block to a reference block. What different from the inter technology is that the best BV of the IBC is obtained by performing searching in a reconstructed area of a frame where the current CU is located (i.e. a current coding frame), while an inter MV is obtained by performing searching in adjacent reference frames of the current coding frame in a time domain.

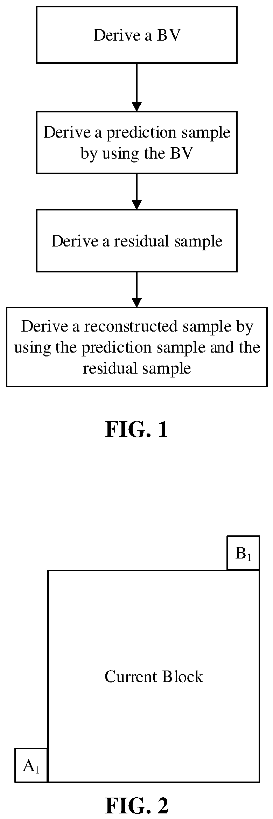

FIG. 1 is a schematic diagram of prediction in an IBC mode. As shown in FIG. 1, a specific process of obtaining a reconstructed pixel of a current CB in the IBC mode in H.266/VVC may include deriving a BV, deriving a prediction sample by using the BV, deriving a residual sample, and deriving a reconstructed sample by using the prediction sample and the residual sample.

A specific process of deriving the BV is as follows.

(1) Luma

Input: a luma position (xCb, yCb), specifying a luma position of a top-left sample of the current CB relative to a top-left luma sample of the current picture; a variable cbWidth, specifying width of the current CB in the luma sample; and a variable cbHeight, specifying height of the current CB in the luma sample.

Output: a Block Vector Luma (bvL) of luma.

The IBC mode is divided into IBCMERGE and IBCAMVP. When the bvL is derived, it needs to establish an IBC BV candidate list bvCandList. A process of establishing a list of IBCMERGE will be introduced below. A process of establishing a list of IBCAMVP is consistent with the process of establishing the list of IBCMERGE. However, a maximum number of candidates of establishing the list of IBCAMVP and a maximum number of candidates of establishing the list of IBCMERGE are inconsistent.

First operation: when IsGt4by4 is equal to TRUE (a variable IsGt4by4 is a product of a width for luma multiplied by a height for luma, and is TRUE when IsGt4by4 is greater than 16), a process of deriving spatial BV candidates from adjacent CUs specified in a decoding specification is called using the position (xCb, yCb) of the luma CB, the width cbWidth and the height cbHeight of the luma CB, as an input, and outputs are availability flags availableFlagA1, availableFlagB1, and BVs bvA1 and bvB1. A1 and B1 are adjacent blocks. FIG. 2 is a schematic diagram of adjacent blocks. As shown in FIG. 2, positions of adjacent blocks where A1 and B1 are located relative to the current CB are a lower-left position and a top-right position respectively.

Second operation: when IsGt4by4 is equal to TRUE, the BV candidate list bvCandList is constructed as follows:

```
i = 0
 if (availableFlagA1)
 bvCandList[i++] = bvA1
 if (availableFlagB1)
 bvCandList[i++] = bvB1
```

Third operation: a variable numCurrCand represents a number of candidates obtained currently. A process of deriving the numCurrCand is as follows:

If IsGt4by4 is equal to TRUE, the numCurrCand is set to be equal to a number of candidates in the bvCandList, otherwise, the numCurrCand is set as 0.

Fourth operation: when the numCurrCand is less than MaxNumIbcMergeCand (a maximum number of candidates in a MERGE mode) and NumHmvpIbcCand (a maximum number of candidates characterizing a historical optimal BV (Hmvp) in the IBC mode) is greater than 0, a process of deriving history-based IBC BV candidates specified in the decoding specification is called with the bvCandList and the numCurrCand as inputs and modified bvCandList and numCurrCand as outputs.

Fifth operation: when the numCurrCand is less than the MaxNumIbcMergeCand, the following contents are applicable until the numCurrCand is equal to the MaxNumIbcMergeCand:

bvCandList[numCurrCand] [0] (i.e., a horizontal component of bv) is set to be equal to 0.
bvCandList[numCurrCand][1] (i.e., a vertical component of bv) is set to be equal to 0.

The numCurrCand increases by 1.

In this way, the BV candidate list bvCandList is established, and whether it is an IBCMERGE mode, is indicated by general_merge_flag. An index bvIdx of the candidate is derived as follows:

bvIdx=general_merge_flag[xCb][yCb]? merge_idx[xCb][yCb]:mvp_10_flag[xCb][yCb]

In this way, a specific bvL may be obtained according to the index bvIdx and the BV candidate list bvCandList:

$$bvL[0] = bvCandList[bvIdx][0]$$

$$bvL[1] = bvCandList[bvIdx][1]$$

With respect to an IBCAMVP mode, a specific bvL may be obtained by the index bvIdx and the BV candidate list bvCandList, as a predicted bvL, and it also needs to add a Block Vector Difference (BVD) to obtain a real bvL. A specific process thereof is as follows.

First operation: horizontal and vertical components of the BVD are obtained, here MvdL0 is a forward MV difference.

$$bvd[0] = MvdL0[xCb][yCb][0]$$

$$bvd[1] = MvdL0[xCb][yCb][1]$$

Second operation: a rounding operation is performed on the predicted bvL obtained as above, here a right shift parameter AmvrShift is used for rounding, and a left shift parameter AmvrShift is used for improving resolution.

offset = (AmvrShift==0)?0:((1<<(AmvrShift-1))-1) bvL[0] = Sign(bvL[0])×(((Abs(bvL[0])+offset)>>AmvrShift)<<AmvrShift)

bvL[1] = Sign(bvL[1])×(((Abs(bvL[1])+offset)>>AmvrShift)<<AmvrShift)

Third operation: derivation of the real bvL is as follows, and a range thereof needs to be controlled between -217 and 217-1:

$$u[0] = (bvL[0]+bvd[0]+218)\%218$$

$$bvL[0] = (u[0]>=217)? (u[0]-218):u[0]$$

$$u[1] = (bvL[1]+bvd[1]+218)\%218$$

$$bvL[1] = (u[1]>=217)? (u[1]-218):u[1]$$

(2) Chroma: in case of dual-tree division, the IBC is not performed for the chroma; in case of single-tree division, a BV for the chroma needs to be derived.

Input: a bvL of luma (1/16 pixel precision)
Output: a Block Vector chroma (bvC) of chroma (1/32 pixel precision)

A derivation process is as follows.

$$bvC[0] = ((bvL[0]>>(3+SubWidthC))×32)$$

$$bvC[1] = ((bvL[1]>>(3+SubHeightC))×32)$$

A specific process of deriving the prediction sample by using the BV is as follows.
Input: a luma position (xCb, yCb), specifying a luma position of a top-left sample of the current CB relative to a top-left luma sample of the current picture; a variable cbWidth, specifying width of the current CB in the luma samples; a variable cbHeight, specifying height of the current CB in the luma samples; a BV bv; and a variable cIdx, specifying a color component index of the current block.
Output: an array of prediction samples predSamples.
A derivation process is as follows.
When the cIdx is equal to 0, that is, when it is a luma component, for x = xCb..xCb+cbWidth-1 and y = yCb..yCb+cbHeight-1:

$$xVb = (x+(bv[0]>>4))\&(IbcBufWidthY-1)$$

$$yVb = (y+(bv[1]>>4))\&(CtbSizeY-1)$$

$$predSamples[x][y] = ibcVirBuf[0][xVb][yVb]$$

The IbcBufWidthY is width of luma pixels of a reconstructed buffer stored for the IBC, the CtbSizeY is a size of a CTU, and the ibcVirBuf is reconstructed pixels stored for the IBC.

When the cIdx is not equal to 0, that is, when it is a chroma component, for x = xCb/SubWidthC..xCb/Sub-WidthC+cbWidth/SubWidthC-1 and y = yCb/SubHeightC..yCb/SubHeightC+cbHeight/SubHeightC-1:

$$xVb = (x+(bv[0]>>5))\&(IbcBufWidthC-1)$$

$$yVb = (y+(bv[1]>>5))\&((CtbSizeY/subHeightC)-1)$$

$$predSamples[x][y] = ibcVirBuf[cIdx][xVb][yVb]$$

Variables SubWidthC and SubHeightC specifically depend on a chroma format sampling structure specified by sps_chroma_format_idc, and specific correspondences are shown in the following table:

Table 1

| sps_chroma_format_idc | color sampling format | SubWidthC | SubHeightC |
|---|---|---|---|
| 0 | monochrome | 1 | 1 |
| 1 | 4:2:0 | 2 | 2 |
| 2 | 4:2:2 | 2 | 1 |
| 3 | 4:4:4 | 1 | 1 |

When the residual sample is derived, a process of decoding a residual signal of the CB in an inter prediction mode specified in the decoding specification may be called. When the reconstructed sample is derived by using the prediction sample and the residual sample, a picture reconstruction process of a specified color component specified in the decoding specification may be called.

Furthermore, in a process of coding the BVD of the IBC, for the IBCAMVP mode, motion estimation may be performed by using a basic Block Vector Prediction (BVP) to search for a best block MV, and a difference between the searched best block MV and a basic BV is the BVD.

The process of coding the BVD is as follows. For horizontal and vertical components of the BVD, flags indicating whether the BVD is zero are coded first respectively. If the BVD is not zero, an absolute value of a BVD is coded, and then a BVD sign is bypass coded; otherwise, any bit will not continue to be coded.

Furthermore, for a process of decoding the BVD of the IBC in H.266/VVC, a method for decoding the BVD in the VVC is the same as a method for decoding a Motion Vector Difference (MVD) between frames. A specific process of decoding the MVD is as follows.

| | |
|---|---|
| if (general_merge_flag[x0][y0]) | |
| ... | |
| else if (CuPredMode[chType] [x0] [y0] == MODE_IBC){ | |
| **mvd_coding (x0, y0, 0, 0)** | |
| ... | |
| } | |

| mvd_coding (x0, y0, refList, cpIdx){ | **Descriptor** |
|---|---|
| **abs_mvd_greater0_flag**[0] | ae(v) |
| **abs_mvd_greater0_flag**[1] | ae(v) |
| if (abs_mvd_greater0_flag[0]) | |
| **abs_mvd_greater1_flag**[0] | ae(v) |
| if (abs_mvd_greater0_flag[1]) | |
| **abs_mvd_greater1_flag**[1] | ae(v) |

(continued)

| | |
|---|---|
| if (abs mvd_greater0 flag[0]){ | |
| if (abs_mvd_greaterl_flag[0]) | |
| **abs_mvd_minus2**[0] | ae(v) |
| **mvd_sign_flag**[0] | ae(v) |
| } | |
| if (abs_mvd_greater0_flag[1]){ | |
| if (abs_mvd_greaterl_flag[1]) | |
| **abs_mvd_minus2**[1] | ae(v) |
| **mvd_sign_flag**[1] | ae(v) |
| } | |
| } | |

mvd_sign_flag[compIdx] represents a sign of a MVD for a certain (horizontal or vertical) component compIdx. If mvd_sign_flag[compIdx] is equal to 0, a corresponding MV component difference is a positive value; otherwise (that is, mvd_sign_flag[compIdx] is equal to 1), the corresponding MV component difference is a negative value. When mvd_sign_flag[compIdx] is not present, it is inferred that mvd_sign_flag[compIdx] is equal to 0.

A MVD 1Mvd[compIdx] for compIdx=0..1 is derived as follows. A value of 1Mvd[compIdx] should be in a range of -217 to 217-1:

1Mvd[compIdx]=abs_mvd_greater0_flag[compIdx]×(abs_mvd_minus2[compIdx]+2)×(1- 2×mvd_sign_flag[compIdx])

In the IBC mode, refList is equal to 0, and for compIdx = 0..1 (0 represents the horizontal component, and 1 represents the vertical component), MvdL0[x0] [y0] [compIdx] is set to be equal to 1Mvd[compIdx], and then horizontal and vertical components of the BVD are derived:

$$bvd[0] = MvdL0[x0][y0][0]$$

$$bvd[1] = MvdL0[x0][y0][1]$$

Table 2

| Syntax element | binIdx | | | | | |
|---|---|---|---|---|---|---|
| | 0 | 1 | 2 | 3 | 4 | >=5 |
| **mvd_sign_flag[0]** | bypass | na | na | na | na | na |
| **mvd_sign_flag[1]** | bypass | na | na | na | na | na |

Furthermore, a process of decoding the BVD for the IBC in Beyond VVC is as follows.

| | |
|---|---|
| if (general_merge_flag[x0][y0]) | |
| ... | |
| else if (CuPredMode[chType] [x0] [y0] == MODE_IBC){ | |
| **bvd_coding (x0, y0, 0, 0)** | |
| ... | |
| } | |

| bvd_coding (x0, y0, refList, cpIdx){ | Descriptor |
|---|---|
| **abs_bvd_greater0_flag**[0] | ae(v) |
| **abs_bvd_greater0_flag**[1] | ae(v) |
| if (abs_bvd_greater0_flag[0]){ | |
| **abs_bvd_minus1**[0] | ae(v) |
| b**vd_sign_flag[0]** | ae(v) |
| } | |
| if (abs_bvd_greater0_flag[1]){ | |
| **abs_mvd_minus1[1]** | ae(v) |
| **bvd_sign_flag[1]** | ae(v) |
| } | |
| } | |

bvd_sign_flag[compIdx] represents a sign of a MVD of a certain (horizontal or vertical) component compIdx. If bvd_sign_flag[compIdx] is equal to 0, a corresponding MV component difference is a positive value; otherwise (that is, bvd_sign_flag[compIdx] is equal to 1), the corresponding MV component difference is a negative value. When bvd_sign_flag[compIdx] is not present, it is inferred that bvd_sign_flag[compIdx] is equal to 0.

MVD bvd[compIdx] for compIdx=0..1 is derived as follows.

$$bvd[compIdx] = abs\_bvd\_greater0\_flag[compIdx] \times (abs\_bvd\_minus1[compIdx]+1) \times (1- 2 \times bvd\_sign\_flag[compIdx])$$

Table 3

| Syntax element | binIdx | | | | | |
|---|---|---|---|---|---|---|
| | 0 | 1 | 2 | 3 | 4 | >=5 |
| **bvd_sign_flag[0]** | bypass | na | na | na | na | na |
| **bvd_sign_flag[1]** | bypass | na | na | na | na | na |

As shown above, at present, bypass coding is used for signs of the BVD in the IBC mode. However, the bypass coding is an equal-probability coding method which does not require adaptive update of the probability, instead, performs coding by using a fixed probability where a probability of each of 0 and 1 is 1/2. The coding method is simple, and cannot be adaptively updated according to video information and historical coding information. One BVD sign information corresponds to one bit of the bitstream, therefore there is a large bitrate redundancy.

It may be seen that there is still a lot of room for improvement in common BVD coding solutions at present.

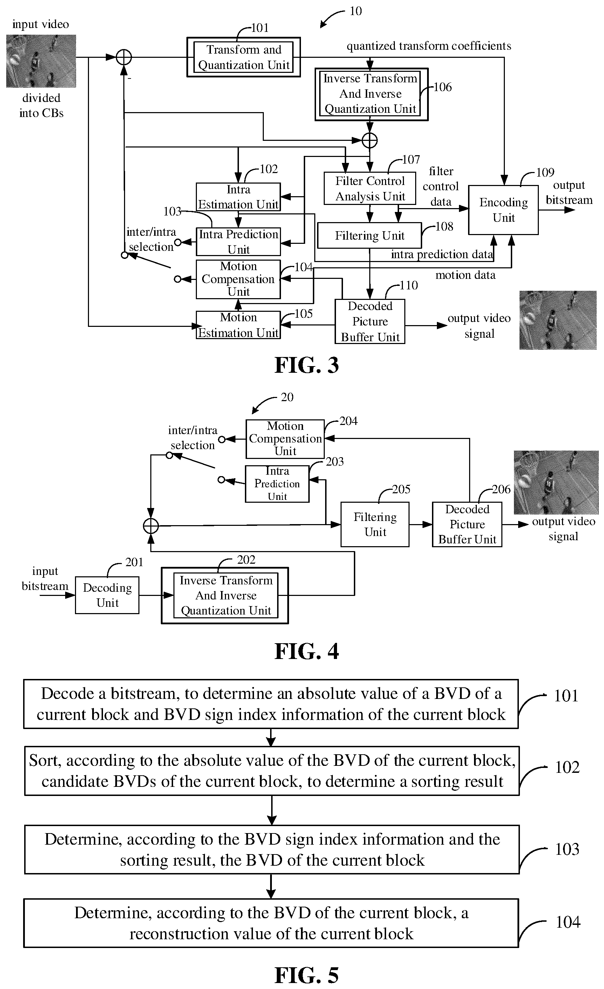

With reference to FIG. 3, an example of a block diagram of a video encoding system provided in an embodiment of the disclosure is shown. As shown in FIG. 3, the video encoding system 10 includes a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, a decoded picture buffer unit 110, etc. The filtering unit 108 may implement de-blocking filtering and Sample Adaptive Offset (SAO) filtering. The encoding unit 109 may implement coding of header information and Context-based Adaptive Binary Arithmetic Coding (CABAC). For an input original video signal, a video CB may be obtained by dividing CTUs. For residual pixel information obtained after intra or inter prediction, the transforming is performed for the video CB by the transform and quantization unit 101, including transforming the residual information from a pixel domain to a transform domain, and quantizing obtained transform coefficients to further reduce the bitrate. The intra estimation unit 102 and the intra prediction unit 103 are configured to perform intra prediction on the video CB. Specifically, the intra estimation unit 102 and the intra prediction unit 103 are configured to determine an intra prediction mode to be used to code the video CB. The motion compensation unit 104 and the motion estimation unit 105 are configured to perform inter prediction coding of the received video CB relative to one or more blocks in one or more reference frames, to provide temporal prediction information. Motion estimation performed by the motion estimation unit 105 is a process of generating a MV. The MV may be used to estimate motion of the video CB. Then, motion compensation is performed by the motion compensation unit 104 based on the MV determined by the motion estimation unit 105. After the intra prediction mode is determined, the intra prediction unit 103 is further configured to provide selected intra prediction data to the encoding unit 109, and the motion estimation unit 105 also sends calculated MV data to the encoding unit 109. Furthermore, the inverse transform and inverse quantization unit 106 is configured to reconstruct the video CB, to reconstruct a residual block in the pixel domain. A block effect artifact is removed from the reconstructed residual block by the filter control analysis unit 107 and the filtering unit 108, and then the reconstructed residual block is added to a predictive block in a frame in the decoded picture buffer unit 110, to generate a reconstructed video CB. The encoding unit 109 is configured to code various coding parameters and quantized transform coefficients. In a CABAC-based coding algorithm, contents of the context may be based on adjacent CBs. The encoding unit 109 may be configured to code information indicating the determined intra prediction mode, and output a bitstream of the video signal. The decoded picture buffer unit 110 is configured to store the reconstructed video CBs, for reference by prediction. As coding of the video picture proceeds, new reconstructed video CBs are continuously generated, and these reconstructed video CBs are stored in the decoded picture buffer unit 110.

With reference to FIG. 4, an example of a block diagram of a video decoding system provided in an embodiment of the disclosure is shown. As shown in FIG. 4, the video decoding system 20 includes a decoding unit 201, an inverse transform and inverse quantization unit 202, an intra prediction unit 203, a motion compensation unit 204, a filtering unit 205, a decoded picture buffer unit 206, etc. The decoding unit 201 may implement decoding of header information and CABAC decoding. The filtering unit 205 may implement de-blocking filtering and SAO filtering. After an input video signal is coded as shown in FIG. 4, a bitstream of the video signal is output. The bitstream is input into the video decoding system 20 and passes through the decoding unit 201 first, to obtain decoded transform coefficients. The transform coefficients are processed by the inverse transform and inverse quantization unit 202, to generate residual blocks in the pixel domain. The intra prediction unit 203 may be configured to generate prediction data of a current video decoding block based on the determined intra prediction mode and data of a previously decoded block from the current frame or picture. The motion compensation unit 204 is configured to determine prediction information for the video decoding block by analyzing the MV and other associated syntax elements, and use the prediction information to generate a predictive block of the video decoding block being decoded. A decoded video block is formed by summing the residual block from the inverse transform and inverse quantization unit 202 and the corresponding predictive block generated by the intra prediction unit 203 or the motion compensation unit 204. The decoded video signal passes through the filtering unit 205 to remove the block effect artifact, which may improve quality of the video. Then, the decoded video block is stored in the decoded picture buffer unit 206. The decoded picture buffer unit 206 is configured to store reference pictures for subsequent intra prediction or motion compensation, and is also configured to output the video signal, that is, a restored original video signal is obtained.

The encoding method in the embodiments of the disclosure may be applied to the intra prediction unit 103 and a part of the encoding unit 109 which may implement a CABAC coding algorithm as shown in FIG. 3. Furthermore, the decoding method in the embodiments of the disclosure may also be applied to the intra prediction unit 203 and the decoding unit 201 which may implement a CABAC decoding algorithm as shown in FIG. 4. That is, the encoding method and the decoding methods in the embodiments of the disclosure may be applied to the video encoding system, may also be applied to the video decoding system, and may even be applied to both the video encoding system and the video decoding system. However, the embodiments of the disclosure do not make any specific limitation thereto. It should also be noted that when the encoding method and the decoding method are applied to the video encoding system, "current block" specifically refers to a current CB in the intra prediction, when the encoding method and the decoding method are applied to the video decoding system, "current block" specifically refers to a current decoding block in the intra prediction.

Technical solutions in the embodiments of the disclosure will be clearly and completely described below with reference to the drawings in the embodiments of the disclosure.

An embodiment of the disclosure proposes a decoding method. The decoding method may be applied to a decoder. FIG. 5 is a first schematic diagram of a decoding method in an embodiment of the disclosure. As shown in FIG. 5, the method for performing decoding processes by the decoder may include the following operations 101 to 104.

In operation 101, a bitstream is decoded, to determine an absolute value of a BVD of a current block and BVD sign index information of the current block.

In the embodiment of the disclosure, the decoder may determine the absolute value of the BVD and the BVD sign index information of the current block by decoding the bitstream.

It should be noted that in the embodiment of the disclosure, the decoder may directly parse a real absolute value of a BVD of the current block from the bitstream. That is, the decoder may determine the absolute value of the BVD of the current block by decoding the bitstream.

Furthermore, in the embodiment of the disclosure, the decoder may also determine the BVD sign index information of the current block by decoding the bitstream. That is, the decoder performs parsing to obtain a sign prediction index of the current block.

It may be understood that in the embodiment of the disclosure, the absolute value of the BVD includes an absolute value of a first component absBvdX and an absolute value of a second component absBvdY That is, the absolute value of the BVD includes an absolute value of a horizontal component and an absolute value of a vertical component.

Correspondingly, the BVD of the current block may include a first component candBvdX and a second component candBvdY, while a candidate BVD of the current block also includes the first component candBvdX and the second component candBvdY. That is, the BVD may include a horizontal component and avertical component.

Furthermore, in the embodiment of the disclosure, when both the absBvdX and the absBvdY are not 0, it may be determined that the number of bits of the BVD sign index information is 2; and when the absBvdX or the absBvdY is 0, it may be determined that the number of bits of the BVD sign index information is 1.

It should be noted that in the embodiment of the disclosure, besides for example the above fixed-length coding method, the BVD sign index information may also be coded by using a variable-length coding method. For example, the BVD sign index information may be coded by using a truncated unary code. That is, binarization process may be performed by using a truncated binarization, and the number of bits of the BVD sign index information may not necessarily be 2 at this time.

That is, in the embodiment of the disclosure, if the BVD sign index information is coded by using a truncated unary code (here, the BVD sign index information may be an index value in a candidate BVD list), the number of bits of the sign index information corresponding to different candidate BVDs is not exactly the same, which is variable-length coding.

It should be noted that in the embodiment of the disclosure, the number of bits of a binary number of the BVD sign index information may be determined according to the absolute value of the BVD parsed during decoding. If absolute values of both horizontal and vertical components of the BVD are not 0, the number of bits of the binary number of the BVD sign index information is 2. If the horizontal component of the BVD is 0 and the absolute value of the vertical component of the BVD is not 0, the number of bits of the binary number of the BVD sign index information is 1. If the horizontal component of the BVD is not 0 and the absolute value of the vertical component of the BVD is 0, the number of bits of the binary number of the BVD sign index information is 1.

Then, the decoder may use the CABAC or a decoding process corresponding to a bypass mode to parse the binary number corresponding to the BVD sign index information from the bitstream.

For a context model of the CABAC used for the BVD sign index information, a single probability model or multiple probability models may be used, which may include but may not be limited to different probability models which are distinguished according to the absolute value of the horizontal component or the vertical component of the BVD, a sum of the horizontal component and the vertical component of the BVD, or a difference between the horizontal component and the vertical component of the BVD, etc.

For example, different probability models used for the bits of the BVD sign index information of the BVD may be classified by using the size of the absolute value of the horizontal component or the vertical component of the BVD.

(1) It is assumed that a threshold for classifying the absolute value of the horizontal component or the vertical component of the BVD is set as THRO, and there are a total of two probability models. When the BVD sign index information has two bits, for a $0^{th}$ bit of the binary number, the two probability models are distinguished according to a size relationship between the absolute value of the horizontal component of the BVD and THRO. That is, when the absolute value of the horizontal component of the BVD is less than or equal to THRO, a first probability model is used, and when the absolute value of the horizontal component of the BVD is greater than THRO, a second probability model is used. Then, for a $1^{st}$ bit of the above binary number, the two probability models are distinguished according to a size relationship between the absolute value of the vertical component of the BVD and THRO. That is, when the absolute value of the vertical component of the BVD is less than or equal to THRO, the first probability model is used, and when the absolute value of the vertical component of the BVD is greater than THRO, the second probability model is used.

(2) It is assumed that a threshold for classifying the absolute value of the horizontal component of the BVD is set as THRO, a threshold for classifying the absolute value of the vertical component of the BVD is set as THR1, and there are a total of four probability models. When the BVD sign index information has two bits, for a $0^{th}$ bit of the binary number, different probability models are distinguished according to a size relationship between the absolute value of the horizontal component of the BVD and THRO. That is, when the absolute value of the horizontal component of the BVD is less than or equal to THRO, a first probability model is used, and when the absolute value of the horizontal component of the BVD is greater than THRO, a second probability model is used. Then, for a $1^{st}$ bit of the above binary number, different probability models are distinguished according to a size relationship between the absolute value of the vertical component of the BVD and THR1. That is, when the absolute value of the vertical component of the BVD is less than or equal to THR1, a third probability model is used, and when the absolute value of the vertical component of the BVD is greater than THR1, a fourth probability model is used.

Furthermore, in the embodiment of the disclosure, after the absolute value of the BVD of the current block is determined, a BVD combination list may be determined by using the absolute value of the BVD. The BVD combination list includes any number of candidate BVDs of the current block. That is, candidate BVDs of the current block may be determined by using the absolute value of the BVD, which may also be understood as determining an initial set of candidate BVDs of the current block by using the absolute value of the BVD.

It should be noted that in the embodiment of the disclosure, the BVD combination list (the candidate BVDs) may be created based on possible signs of the BVD and the absolute value of the BVD, which may include a situation where only the horizontal BVD is present, a situation where only the vertical BVD is present, and a situation where both horizontal and vertical BVDs are present.

Furthermore, in the embodiment of the disclosure, when the BVD combination list (the candidate BVDs) is created, it mainly includes arranging and combining possible signs of the BVD, and multiplying possible horizontal and vertical signs by a horizontal absolute value component and a vertical absolute value component of the BVD respectively.

Exemplarily, in the embodiment of the disclosure, if only the vertical BVD is present, that is, if the absBvdX is equal to 0, the candidate BVDs may be determined according to the absBvdY.

For example, the BVD is divided into a horizontal component and a vertical component. When the horizontal component is zero, only the vertical component is coded. Therefore, a combination list is created for signs of the vertical component only, which specifically includes the following two situations.

First situation: the horizontal component is always positive and is just a placeholder and the vertical component is positive first and then is negative, to create a sign list. Then the created sign list is multiplied by absolute values of horizontal and vertical components of the BVD, to obtain the BVD combination list.

$$\{$$
$$\{+1, +1 \},$$
$$\{+1, -1 \},$$
$$\};$$
$$\{$$
$$\{ 0, +BVD_{VER} \},$$
$$\{ 0, -BVD_{VER} \},$$
$$\}.$$

Second situation: the horizontal component is always positive and is just a placeholder and the vertical component is negative first and then is positive, to create a sign list. Then the created sign list is multiplied by absolute values of horizontal and vertical components of the BVD, to obtain the BVD combination list.

$$\{$$
$$\{+1, -1 \},$$
$$\{+1, +1 \},$$
$$\};$$
$$\{$$
$$\{ 0, -BVD_{VER} \},$$
$$\{ 0, +BVD_{VER} \},$$
$$\}.$$

Exemplarily, in the embodiment of the disclosure, if only the horizontal BVD is present, that is, if the absBvdY is equal to 0, the candidate BVDs may be determined according to the absBvdX.

For example, the BVD is divided into a horizontal component and a vertical component. When the vertical component is zero, only the horizontal component is coded. Therefore, a combination list is created for signs of the horizontal component only, which specifically includes the following two situations.

First situation: the vertical component is always positive and is just a placeholder, and the horizontal component is positive first, and then is negative, to create a sign list. Then the created sign list is multiplied by absolute values of vertical and horizontal components of the BVD, to obtain the BVD combination list.

```
{
    {+1, +1 },
    {-1, +1 },
};
{
    { +BVD_HOR, 0 },
    { -BVD_HOR, 0 },
}.
```

Second situation: the vertical component is always positive and is just a placeholder, and the horizontal component is negative first, and then is positive, to create a sign list. Then the created sign list is multiplied by absolute values of vertical and horizontal components of the BVD, to obtain the BVD combination list.

```
{
    {-1, +1 },
    {+1, +1 },
};
{
    { -BVD_HOR, 0 },
    { +BVD_HOR, 0 },
}.
```

Exemplarily, in the embodiment of the disclosure, if both horizontal and vertical BVDs are present, that is, if both the absBvdX and the absBvdY are not equal to 0, the candidate BVDs may be determined according to the absBvdX and the absBvdY.

For example, the BVD is divided into a horizontal component and a vertical component. When the two components are not zero, the two components need to be coded. Therefore, a BVD list is created for the horizontal component and the vertical component together, which is specifically divided into 24 situations, that is, any arrangement of four combinations of {+1, +1}, {+1, -1}, {-1, +1} and {-1, -1}, which are exemplified below.

A 0th position in the list indicates that both horizontal and vertical components are positive, a 1st position in the list indicates that the horizontal component is positive and the vertical component is negative, a 2nd position in the list indicates that the horizontal component is negative and the vertical component is positive, and a 3rd position in the list indicates that both horizontal and vertical components are negative, to create a sign list. Then the created sign list is multiplied by absolute values of vertical and horizontal components of the BVD, to obtain the BVD combination list.

$$\{$$
$$\{+1, +1 \ \},$$
$$\{+1, -1 \ \},$$
$$\{-1, +1 \ \},$$
$$\{-1, -1 \ \},$$
$$\};$$
$$\{$$
$$\{ +BVD_{HOR}, +BVD_{VER} \ \},$$
$$\{ +BVD_{HOR}, -BVD_{VER} \ \},$$
$$\{ -BVD_{HOR}, +BVD_{VER} \ \},$$
$$\{ -BVD_{HOR}, -BVD_{VER} \ \},$$
$$\}.$$

In operation 102, one or more candidate BVDs of the current block is sorted according to the absolute value of the BVD of the current block, to determine a sorting result.

In the embodiment of the disclosure, after the absolute value of the BVD and the BVD sign index information of the current block are determined, the candidate BVDs of the current block may be further sorted according to the absolute value of the BVD of the current block, to determine the sorting result.

Furthermore, in the embodiment of the disclosure, when the candidate BVDs of the current block are sorted according to the absolute value of the BVD of the current block to determine the sorting result, one or more first cost values corresponding to one or more candidate BVDs of the current block may be determined first according to the absolute value of the BVD, and then the candidate BVDs may be sorted according to the one or more first cost values, to determine the sorting result.

It may be understood that in the embodiment of the disclosure, the one or more candidate BVDs may include one or more BVDs for which the candBvdX is set to be equal to -absBvdX or absBvdX respectively, and the candBvdY is set to be equal to -absBvdY or absBvdY respectively.

It should be noted that in the embodiment of the disclosure, when the one or more first cost values corresponding to one or more candidate BVDs of the current block are determined according to the absolute value of the BVD of the current block, a first matching template may be determined first according to a candidate BVD, and then a matching error between a first template of the current block and the first matching template may be calculated according to a preset error criterion, to determine a first cost value corresponding to the candidate BVD.

Exemplarily, in the embodiment of the disclosure, when the cost is calculated, that is, when the one or more first cost values are determined, there are multiple cost functions for calculating cost of the template area to be selected. That is, there may be multiple preset error criteria to be selected. For example, evaluation criteria such as Sum of Absolute Differences (SAD), Sum of Absolute Transformed Differences (SATD), Sum of Squared Errors (SSE), Mean Absolute Differences (MAD), Mean Absolute Error (MAE), Mean Squared Error (MSE), Rate Distortion Optimization (RDO) or the like may be selected. A certain evaluation criterion mentioned in the following contents may be selected from one of the above criteria. Taking an evaluation criterion of the SAD as an example, a calculation formula is as follows:

$$SAD = \sum_{i=0}^{predTempSizeW-1} \sum_{j=0}^{predTempSizeH-1} |predTemp[i][j] - recTempC[i][j]| \qquad (1)$$

*predTempSizeW* is width of a template, *predTempSizeH* is height of the template, *predTemp[i][j]* is a pixel point of the template at the BV, and *recTempC[i][j]* is a pixel point of a template of the current block.

That is, in the embodiment of the disclosure, the preset error criterion may include any one of SAD, SATD, SSE, MAD, MAE, MSE, or RDO.

It may be understood that in the embodiment of the disclosure, the first template includes one or more sample values in an adjacent decoded area of the current block.

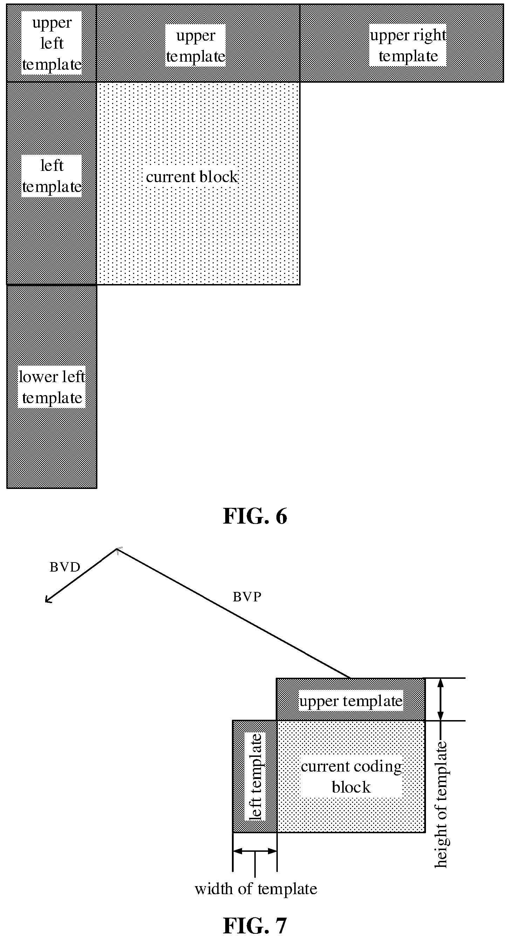

Exemplarily, in the embodiment of the disclosure, when a template (the first template of the current block) is selected, it may determine whether a pixel at the position of the template is available and includes reconstructed luma information, according to availability of a pixel at an adjacent area of the current block. FIG. 6 is a schematic diagram of template types. As shown in FIG. 6, templates may be classified into template types such as an upper template, a left template, an upper right template, a lower left template, an upper left template, etc. according to a respective relative position relationship between the templates and the current block. Different types of templates for different CBs may have fixed, identical sizes or have different sizes.

For example, the same template size is selected for any current coding block (the current block). A condition of setting the template size is explained in following formulas, in which nTbW and nTbH are width and height of the current luma coding block (the current block) respectively, and iTempW and iTempH are width and height of the used template respectively.

$$\text{The upper template:} \begin{cases} iTempW = nTbW \\ iTempH = 1 \end{cases} \quad (2)$$

$$\text{The left template:} \begin{cases} iTempW = 1 \\ iTempH = nTbH \end{cases} (3)$$

For example, different template sizes may be selected according to different sizes of the current CB. A condition of setting the template sizes is explained in following formulas, in which nTbW and nTbH are width and height of the current luma CB respectively, and iTempW and iTempH are width and height of the used template respectively.

$$\text{The upper template:} \begin{cases} \begin{cases} iTempW = nTbW \\ iTempH = 2 \end{cases}, \ min(nTbW, nTbH) \le 4 \\ \begin{cases} iTempW = nTbW \\ iTempH = 4 \end{cases}, \ min(nTbW, nTbH) > 4 \end{cases} \quad (4)$$

$$\text{The left template:} \begin{cases} \begin{cases} iTempW = 2 \\ iTempH = nTbH \end{cases}, \ min(nTbW, nTbH) \le 4 \\ \begin{cases} iTempW = 4 \\ iTempH = nTbH \end{cases}, \ min(nTbW, nTbH) > 4 \end{cases} \quad (5)$$

$$Min(x, y) = \begin{cases} x, & x \le y \\ y, & x > y \end{cases}$$

For example, different template sizes may also be selected according to a number of pixels in the current luma CB. A condition of setting the template sizes is explained in following formulas, in which nTbW and nTbH are width and height of the current luma CB respectively, nTbW×nTbH are the number of pixels in the current luma CB, and iTempW and iTempH are width and height of the used template respectively.

$$\text{The upper template:} \begin{cases} \begin{cases} iTempW = nTbW \\ iTempH = 2 \end{cases}, \ nTbW \times nTbH \le 16 \\ \begin{cases} iTempW = nTbW \\ iTempH = 4 \end{cases}, \ nTbW \times nTbH > 16 \end{cases} \quad (6)$$

$$\text{The left template:} \begin{cases} \begin{cases} iTempW = 2 \\ iTempH = nTbH \end{cases}, \ nTbW \times nTbH \le 16 \\ \begin{cases} iTempW = 4 \\ iTempH = nTbH \end{cases}, \ nTbW \times nTbH > 16 \end{cases} \quad (7)$$

It should be noted that in the embodiment of the disclosure, when the first matching template is determined according to the candidate BVD, a BVP of the current block may be determined first, and then a candidate BV of the current block may be determined according to the BVP and the candidate BVD. Here the candidate BV is used to indicate a position of the first matching template. Next, the first matching template may be determined according to the candidate BV.

Exemplarily, in the embodiment of the disclosure, it is assumed that the BVP includes a third component currBvpX and a fourth component currBvpY, then when the candidate BV of the current block is determined according to the BVP and the candidate BVD, a two-dimensional (2D) vector of the candidate BV may be set as (currBvpX+candBvdX, currBvpY+candBvdY). That is, the 2D vector of the BV is determined according to the first component candBvdX and the second component candBvdY of the candidate BVD, and the third component currBvpX and the fourth component currBvpY of the BVP.

Furthermore, in the embodiment of the disclosure, when the first matching template is determined according to the candidate BV, the first matching template may be determined according to a position of the current point and the 2D vector of the candidate BV.

Exemplarily, in the embodiment of the disclosure, by selecting the position of the current point as a starting point, an area indicated by the 2D vector of the candidate BV, having the same shape and containing the same number of sample values as the first template, may be determined as the first matching template.

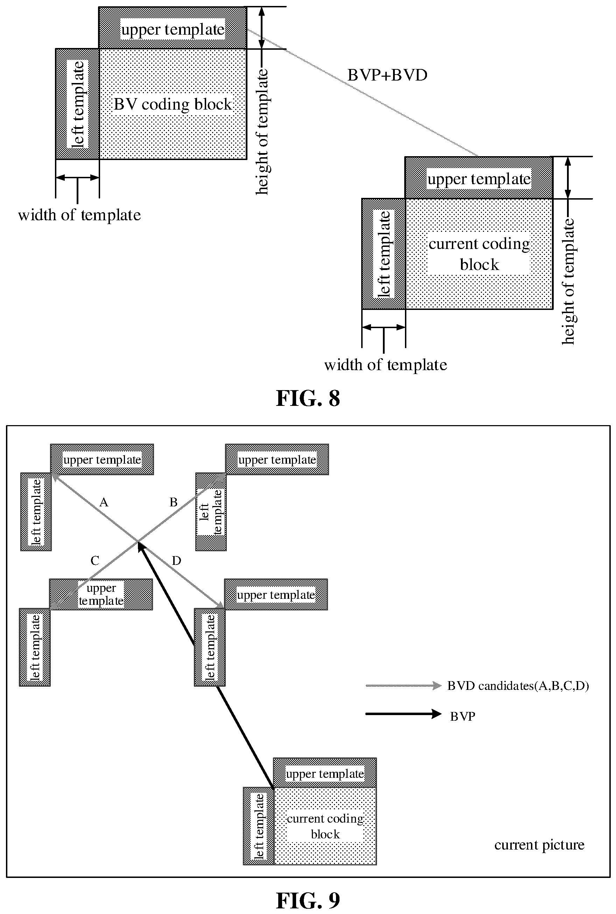

When the BV of the current block is predicted, a new BV may be generated by using the BVD combination list and BVP of the current block. FIG. 7 is a schematic diagram of BVD and BVP of a current CB, and FIG. 8 is a schematic diagram of motion compensation of templates. As shown in FIG. 7 and FIG. 8, whether the BV is available is determined by using the current block (an available condition is that a reference block pointed to by the BV has been reconstructed and does not go beyond a condition set by the IBC such as a search range, a picture boundary, etc.). If the current BV is available, motion compensation may be performed by using the new BV and the template of the current block, to obtain the template at the corresponding BV. FIG. 9 is a schematic diagram of a BVD combination. As shown in FIG. 9, horizontal and vertical components of the BVD generate a total of four combined BVDs, to perform motion compensation at the template respectively. Situations where the template is used when the cost is calculated, include the following several situations.

First situation: both upper and left templates of the current block are present and both upper and left templates at the corresponding BV are present, at this time, both upper and left templates are available.

Second situation: both upper and left templates of the current block are present, and only the upper template at the corresponding BV is present, at this time, there are two methods. First method: the left template at the corresponding BV is not present and is not used directly. That is, only the upper template is used for calculation. Second method: the left template at the corresponding BV is not present, and a leftmost column with a template width in the reference block is used instead of the left template. That is, the upper template and the left template are used for calculation.

Third situation: both upper and left templates of the current block are present, and only the left template at the corresponding BV is present, at this time, there are two methods. First method: the upper template at the corresponding BV is not present and is not used directly. That is, only the left template is used for calculation. Second method: the upper template at the corresponding BV is not present, and an uppermost row with a template height in the reference block is used instead of the upper template. That is, the upper template and the left template are used for calculation.

Fourth situation: only the upper template of the current block is present, at this time, there are three methods. First method: the upper template at the corresponding BV is not present and is not used directly. Second method: the upper template at the corresponding BV is not present, and an uppermost row with a template height in the reference block is used instead of the upper template. Third method: the upper template at the corresponding BV is present and is used directly.

Fifth situation: only the left template of the current block is present, at this time, there are three methods. First method: the left template at the corresponding BV is not present and is not used directly. Second method: the left template at the corresponding BV is not present, and a leftmost column with a template width in the reference block is used instead of the left template. Third method: the left template at the corresponding BV is present and is used directly.

Sixth situation: both upper and left templates of the current block are not present, and the BVD combination in this situation is ignored.

In any of the above six situations, when the reference block pointed to by the BV is not available, the BVD combination in this situation is ignored. When the BVD combination in a certain situation is ignored, cost in this situation is set as a maximum value of a cost evaluation criterion.

Furthermore, in the embodiment of the disclosure, if both of the above two templates may be obtained, at this time, the templates are processed, which includes but is not limited to the following method: weighted fusion is performed on the two templates, which is calculated by the following formula:

$$cost = w_0 \times above + w_1 \times \text{left}$$

A standard of weighted fusion may select a fixed weighting coefficient, or allocate a weighting coefficient according to a sum of absolute values of differences between pixel values of reconstructed luma and pixel values of predicted luma of respective templates, etc. A formula for calculating the weighting coefficient in the latter situation is as follows, $SAD_A$ is an average absolute difference of the upper template, and $SAD_L$ is an average absolute difference of the left template:

$$\begin{cases} w_0 = \frac{SAD_L}{SAD_A + SAD_L} \\ w_1 = \frac{SAD_A}{SAD_A + SAD_L} \end{cases} (8)$$

It may be seen that in the embodiment of the disclosure, template prediction may be performed according to the BVD combination list (the candidate BVDs) and BVP of the current block, the cost (the first cost value) of each BVD combination (the candidate BVD) in the BVD combination list may be calculated. That is, the cost of the template area may be calculated. Costs of various combinations in the BVD combination list may be calculated by using templates respectively. Specifically, the cost is calculated by using a reconstructed luma pixel at the position of the template of the current block and a reconstructed luma pixel at a position which is obtained by performing template prediction using the BV obtained by combination of the BVD and BVP of the current block.

It should be noted that in the embodiment of the disclosure, when the cost (the first cost value) is calculated, not only luma may be used, but also chroma, that is, Cb and Cr components, may be used. The disclosure does not make any specific limitation thereto.

Furthermore, in the embodiment of the disclosure, after the first cost value of each candidate BVD is calculated, the one or more candidate BVDs may be sorted by using the one or more first cost values, to obtain the sorting result. The sorting result may be a sorted candidate BVD list of the current block, or a candidate BVD set of candidate BVDs with a minimum first cost value determined through sorting. The disclosure does not make any specific limitation thereto.

It should be noted that in the embodiment of the disclosure, if the sorting result is a candidate BVD list of the current block, correspondingly, a process for performing sorting may be sorting, according to the one or more first cost values, the one or more candidate BVDs, to determine the candidate BVD list of the current block. Here the candidate BVD list includes at least one candidate BVD.

Furthermore, in the embodiment of the disclosure, when the one or more candidate BVDs are sorted according to the one or more first cost values, to determine the candidate BVD list of the current block, the one or more candidate BVDs may be sorted in an ascending order of one or more matching errors indicated by the one or more first cost values according to the preset error criterion, to determine the candidate BVD list.

It may be understood that in the embodiment of the disclosure, the sorting result may be a new list OrderedList (the candidate BVD list of the current block) arranged in an ascending (descending) order. For example, a sorting method such as bubble sort, selection sort, insertion sort, Shell's sort, merge sort, quick sort, radix sort, heap sort, counting sort, bucket sort or the like may be used.

Furthermore, in the embodiment of the disclosure, the sorting result may also be a new list OrderedList (the candidate BVD list of the current block) in a specific order.

Exemplarily, in the embodiment of the disclosure, when the one or more candidate BVDs are sorted according to the one or more first cost values, to determine the candidate BVD list of the current block, if both the absBvdX and the absBvdY are not equal to 0, the one or more candidate BVDs are stored into a first array and a second array respectively; then, based on the one or more first cost values, a first candidate BVD and a second candidate BVD from the first array, and a third candidate BVD and a fourth candidate BVD from the second array are determined; finally, the first candidate BVD, the second candidate BVD, the third candidate BVD and the fourth candidate BVD may be sorted based on the one or more first cost values, to determine the candidate BVD list.

If both horizontal and vertical components of the BVD are present, that is, if both the absBvdX and the absBvdY are not equal to 0, it is assumed that the combination list (the candidate BVDs) is $\{(+BVD_{HOR}, +BVD_{VER}), (+BVD_{HOR}, -BVD_{VER}), (-BVD_{HOR}, -BVD_{VER}), (-BVD_{HOR}, +BVD_{VER})\}$, and a corresponding cost list thereof is $\{Cost(+BVD_{HOR}, +BVD_{VER}), Cost(+BVD_{HOR}, -BVD_{VER}), Cost(-BVD_{HOR}, -BVD_{VER}), Cost(-BVD_{HOR}, +BVD_{VER})\}$. Orders of members in the above two lists may be arranged arbitrarily.

Two arrays posiGrp and negaGrp are defined, the posiGrp stores two BVD combinations with a positive sign on the same component (horizontal), and the negaGrp stores two BVD combinations with a negative sign on the same component (horizontal).

It is assumed that posiGrp = $\{(+BVD_{HOR}, +BVD_{VER}), (+BVD_{HOR}, -BVD_{VER})\}$, negaGrp = $\{(-BVD_{HOR}, +BVD_{VER}), (-BVD_{HOR}, -BVD_{VER})\}$. Orders of members in the two lists posiGrp and negaGrp may be arranged arbitrarily.

First comparison: size of $Cost(+BVD_{HOR}, +BVD_{VER})$ is compared to that of $Cost(+BVD_{HOR}, -BVD_{VER})$, posiGrp [0] is set as a BVD combination with a smaller one of the two Cost, and posiGrp[1] is set as a BVD combination with a larger one of the two Cost.

Second comparison: size of $Cost(-BVD_{HOR}, +BVD_{VER})$ is compared to that of $Cost(-BVD_{HOR}, -BVD_{VER})$, negaGrp[0] is set as a BVD combination with a smaller one of the two Cost, and negaGrp[1] is set as a BVD combination with a larger one of the two Cost.

Third comparison: size of the Cost corresponding to the posiGrp[0] is compared to that of the Cost corresponding to the negaGrp[0].

It should be noted that in the embodiment of the disclosure, when the first candidate BVD, the second candidate BVD, the third candidate BVD and the fourth candidate BVD are sorted based on the one or more first cost values, to determine the candidate BVD list, an available method is as follows. When a first cost value of the first candidate BVD is less than or equal to a first cost value of the third candidate BVD, the first candidate BVD is set as a first candidate BVD in the candidate BVD list, the third candidate BVD is set as a second candidate BVD in the candidate BVD list, the second candidate BVD is set as a third candidate BVD in the candidate BVD list, and the fourth candidate BVD is set as a fourth candidate BVD in the candidate BVD list. When the first cost value of the first candidate BVD is greater than the first cost value of the third candidate BVD, the third candidate BVD is set as a first candidate BVD in the candidate BVD list, the first candidate BVD is set as a second candidate BVD in the candidate BVD list, the fourth candidate BVD is set as a third candidate BVD in the candidate BVD list, and the second candidate BVD is set as a fourth candidate BVD in the candidate BVD list.

Correspondingly, the final sorting process may be as follows. If in the third comparison, the Cost corresponding to the posiGrp[0] is less than or equal to the Cost corresponding to the negaGrp[0], the posiGrp[0] is sorted at a $0^{th}$ position in the candidate BVD list OrderedList, the negaGrp[0] is sorted at a $1^{st}$ position in the candidate BVD list OrderedList, the posiGrp[1] is sorted at a $2^{nd}$ position in the candidate BVD list OrderedList, and the negaGrp[1] is sorted at a $3^{rd}$ position in the candidate BVD list OrderedList.

If in the third comparison, the Cost corresponding to the posiGrp[0] is greater than the Cost corresponding to the negaGrp[0], the negaGrp[0] is sorted at the $0^{th}$ position in the candidate BVD list OrderedList, the posiGrp[0] is sorted at the $1^{st}$ position in the candidate BVD list OrderedList, the negaGrp[1] is sorted at the $2^{nd}$ position in the candidate BVD list OrderedList, and the posiGrp[1] is sorted at the $3^{rd}$ position in the candidate BVD list OrderedList.

The candidate BVD at the $0^{th}$ position in the candidate BVD list of the current block is the first candidate BVD in the candidate BVD list, the candidate BVD at the $1^{st}$ position in the candidate BVD list of the current block is the second candidate BVD in the candidate BVD list, the candidate BVD at the $2^{nd}$ position in the candidate BVD list of the current block is the third candidate BVD in the candidate BVD list, and the candidate BVD at the $3^{rd}$ position in the candidate BVD list of the current block is the fourth candidate BVD in the candidate BVD list.

It should be noted that in the embodiment of the disclosure, when the first candidate BVD, the second candidate BVD, the third candidate BVD and the fourth candidate BVD are sorted based on the one or more first cost values, to determine the candidate BVD list, another available method is as follows. When a first cost value of the first candidate BVD is less than or equal to a first cost value of the third candidate BVD, the first candidate BVD is set as a first candidate BVD in the candidate BVD list, the second candidate BVD is set as a second candidate BVD in the candidate BVD list, the third candidate BVD is set as a third candidate BVD in the candidate BVD list, and the fourth candidate BVD is set as a fourth candidate BVD in the candidate BVD list. When the first cost value of the first candidate BVD is greater than the first cost value of the third candidate BVD, the third candidate BVD is set as a first candidate BVD in the candidate BVD list, the fourth candidate BVD is set as a second candidate BVD in the candidate BVD list, the first candidate BVD is set as a third candidate BVD in the candidate BVD list, and the second candidate BVD is set as a fourth candidate BVD in the candidate BVD list.

Correspondingly, the final sorting process may be as follows. If in the third comparison, the Cost corresponding to the posiGrp[0] is less than or equal to the Cost corresponding to the negaGrp[0], the posiGrp[0] is sorted at a $0^{th}$ position in the candidate BVD list OrderedList, the negaGrp[0] is sorted at a $2^{nd}$ position in the candidate BVD list OrderedList, the posiGrp[1] is sorted at a $1^{st}$ position in the candidate BVD list OrderedList, and the negaGrp[1] is sorted at a $3^{rd}$ position in the candidate BVD list OrderedList.

If in the third comparison, the Cost corresponding to the posiGrp[0] is greater than the Cost corresponding to the negaGrp[0], the negaGrp[0] is sorted at the $0^{th}$ position in the candidate BVD list OrderedList, the posiGrp[0] is sorted at the $2^{nd}$ position in the candidate BVD list OrderedList, the negaGrp[1] is sorted at the $1^{st}$ position in the candidate BVD list OrderedList, and the posiGrp[1] is sorted at the $3^{rd}$ position in the candidate BVD list OrderedList.

Exemplarily, in the embodiment of the disclosure, when the one or more candidate BVDs are sorted according to the one or more first cost values, to determine the candidate BVD list of the current block, if the absBvdX is equal to 0 or the absBvdY is equal to 0, a candidate BVD with a minimum first cost value in the one or more candidate BVDs is set as a first candidate BVD in the candidate BVD list, and another candidate BVD in the one or more candidate BVDs is set as a second candidate BVD in the candidate BVD list.

If only the horizontal component or the vertical component of the BVD is present, that is, if the absBvdX or the absBvdY is equal to 0, two candidate BVDs may be directly sorted according to first cost values thereof, to generate the candidate BVD list.

In a situation where only the vertical component of the BVD is present, it is assumed that the combination list is {(0, +BVD$_{VER}$), (0, -BVD$_{VER}$)}, and a corresponding cost list thereof is {Cost(0, +BVD$_{VER}$), Cost(0, - BVD$_{VER}$)}. Orders of members in the above two lists may be arranged arbitrarily.

The sorting process is as follows. Size of Cost(0, +BVD$_{VER}$) is compared to that of Cost(0, -BVD$_{VER}$).

If Cost(0, +BVD$_{VER}$) is less than or equal to Cost(0, -BVD$_{VER}$), (0, +BVD$_{VER}$) is sorted at a $0^{th}$ position in the candidate BVD list OrderedList, and (0, -BVD$_{VER}$) is sorted at a $1^{st}$ position in the candidate BVD list OrderedList.

If Cost(0, +BVD$_{VER}$) is greater than Cost(0, -BVD$_{VER}$), (0, -BVD$_{VER}$) is sorted at the $0^{th}$ position in the candidate BVD list OrderedList, and (0, +BVD$_{VER}$) is sorted at the $1^{st}$ position in the candidate BVD list OrderedList.

In a situation where only the horizontal component of the BVD is present, it is assumed that the combination list is {(+BVD$_{HOR}$, 0), (-BVD$_{HOR}$, 0)}, and a corresponding cost list thereof is {Cost(+BVD$_{HOR}$, 0), Cost(-BVD$_{HOR}$, 0)}. Orders of members in the above two lists may be arranged arbitrarily.

The sorting process is as follows. Size of $Cost(+BVD_{HOR}, 0)$ is compared to that of $Cost(-BVD_{HOR}, 0)$.

If $Cost(+BVD_{HOR}, 0)$ is less than or equal to $Cost(-BVD_{HOR}, 0)$, $(+BVD_{HOR}, 0)$ is sorted at a $0^{th}$ position in the candidate BVD list OrderedList, and $(-BVD_{HOR}, 0)$ is sorted at a $1^{st}$ position in the candidate BVD list OrderedList.

If $Cost(+BVD_{HOR}, 0)$ is greater than $Cost(-BVD_{HOR}, 0)$, $(-BVD_{HOR}, 0)$ is sorted at the $0^{th}$ position in the candidate BVD list OrderedList, and $(+BVD_{HOR}, 0)$ is sorted at the $1^{st}$ position in the candidate BVD list OrderedList.

It should be noted that in the embodiment of the disclosure, if the sorting result is a candidate BVD set of the current block, correspondingly, a process for performing sorting may be sorting, according to the one or more first cost values, the one or more candidate BVDs, to determine the candidate BVD set of the current block. Here the candidate BVD set includes at least one candidate BVD.

Furthermore, when the one or more candidate BVDs are sorted according to the one or more first cost values, to determine the candidate BVD set of the current block, if both the absBvdX and the absBvdY are not equal to 0, the one or more candidate BVDs are stored into a first array and a second array respectively. Then, a fifth candidate BVD with a minimum first cost value from the first array, and a sixth candidate BVD with a minimum first cost value from the second array are determined. Finally, a candidate BVD with a minimum first cost value from the fifth candidate BVD and the sixth candidate BVD may be determined as a BVD with a minimum cost in the candidate BVD set.

If both horizontal and vertical components of the BVD are present, that is, if both the absBvdX and the absBvdY are not equal to 0, it is assumed that the combination list is $\{(+, +), (+, -), (-, -), (-, +)\}$, and a corresponding cost list thereof is $\{Cost(+, +), Cost(+, -), Cost(-, -), Cost(-, +)\}$. Orders of members in theabove two lists may be arranged arbitrarily.

Two arrays posiGrp and negaGrp are defined, the posiGrp stores sign combinations of two BVDs with a positive sign on the same component (horizontal), and the negaGrp stores sign combinations of two BVDs with a negative sign on the same component (horizontal).

It is assumed that posiGrp = $\{(+, +), (+, -)\}$, negaGrp = $\{(-, +), (-, -)\}$. Orders of members in the two lists posiGrp and negaGrp may be arranged arbitrarily.

First comparison: size of $Cost(+, +)$ is compared to that of $Cost(+, -)$, posiGrp[0] is set as a sign combination of a BVD with a smaller one of the two Cost, and posiGrp[1] is set as a sign combination of a BVD with a larger one of the two Cost.

Second comparison: size of $Cost(-, +)$ is compared to that of $Cost(-, -)$, negaGrp[0] is set as a sign combination of a BVD with a smaller one of the two Cost, and negaGrp[1] is set as a sign combination of a BVD with a larger one of the two Cost.

Third comparison: size of the Cost corresponding to the posiGrp[0] is compared to that of the Cost corresponding to the negaGrp[0].

Then, a sign combination of a BVD with a minimum Cost may be determined. That is, the BVD with the minimum cost in the candidate BVD set may be determined.

If only the horizontal component or the vertical component of the BVD is present, that is, if the absBvdX or the absBvdY is equal to 0, two candidate BVDs may be directly sorted according to first cost values thereof, to determine the BVD with the minimum cost in the candidate BVD set.

Exemplarily, in the embodiment of the disclosure, when the one or more candidate BVDs are sorted according to the one or more first cost values, to determine the candidate BVD set of the current block, if the absBvdX is equal to 0 or the absBvdY is equal to 0, a candidate BVD with a minimum first cost value from the one or more candidate BVDs may be determined as a BVD with a minimum cost in the candidate BVD set.

In a situation where only the vertical component of the BVD is present, it is assumed that the combination list is $\{(+, +), (+, -)\}$, and a corresponding cost list thereof is $\{Cost(+, +), Cost(+, -)\}$. Orders of members in the above two lists may be arranged arbitrarily. The comparison process is as follows. Size of $Cost(+, +)$ is compared to that of $Cost(+, -)$, and then a sign combination of a BVD with a minimum Cost may be determined, that is, the BVD with the minimum cost in the candidate BVD set may be determined.

In a situation where only the horizontal component of the BVD is present, it is assumed that the combination list is $\{(+, +), (-, +)\}$, and a corresponding cost list thereof is $\{Cost(+, +), Cost(-, +)\}$. Orders of members in the above two lists may be arranged arbitrarily. The comparison process is as follows. Size of $Cost(+, +)$ is compared to that of $Cost(-, +)$, and then a sign combination of a BVD with a minimum Cost may be determined, that is, the BVD with the minimum cost in the candidate BVD set may be determined.

In operation 103, a BVD of the current block is determined according to the BVD sign index information and the sorting result.

In the embodiment of the disclosure, after the candidate BVDs of the current block are sorted according to the absolute value of the BVD of the current block, to determine the sorting result, the BVD of the current block may be determined according to the BVD sign index information and the sorting result.

It should be noted that in the embodiment of the disclosure, if the candidate BVD list of the current block obtained by the sorting process is a list in an ascending (descending) order, a transform list may be used to indirectly obtain a real BVD sign, or logical reasoning may be used directly, to obtain the real BVD sign.

When the real BVD sign is indirectly obtained by using the transform list, the BVD combination list OrderedList may be transformed into an index transform list TransformedList first according to a transform rule.

Exemplarily, in the embodiment of the disclosure, the candidate BVD list may be transformed, to determine an index transform list (TransformedList).

Furthermore, in the embodiment of the disclosure, when the BVD of the current block is determined according to the BVD sign index information and the sorting result, in case that both the absBvdX and the absBvdY are not 0, if a value of a first bit of the BVD sign index information is 0, it is determined that candBvdX of the BVD of the current block is the same as candBvdX of a first candidate BVD or a third candidate BVD in the index transform list; then, candBvdY of the BVD of the current block may be determined according to the first candidate BVD or the third candidate BVD.

Furthermore, in the embodiment of the disclosure, when the candBvdY of the BVD of the current block is determined according to the first candidate BVD or the third candidate BVD, if a value of a second bit of the BVD sign index information is 0, it is determined that the candBvdY of the BVD of the current block is the same as candBvdY of the first candidate BVD; and if a value of the second bit is 1, it is determined that the candBvdY of the BVD of the current block is the same as candBvdY of the third candidate BVD.

Furthermore, in the embodiment of the disclosure, when the BVD of the current block is determined according to the BVD sign index information and the sorting result, in case that both the absBvdX and the absBvdY are not 0, if a value of a first bit of the BVD sign index information is 1, it is determined that a sign of the first component is the same as a sign of a first component of a second candidate BVD or a fourth candidate BVD in the index transform list; then, candBvdY of the BVD of the current block may be determined according to the second candidate BVD or the fourth candidate BVD.

Furthermore, in the embodiment of the disclosure, when the candBvdY of the BVD of the current block is determined according to the second candidate BVD or the fourth candidate BVD, if a value of a second bit of the BVD sign index information is 0, it is determined that the candBvdY of the BVD of the current block is the same as candBvdY of the second candidate BVD; and if a value of the second bit is 1, it is determined that the candBvdY of the BVD of the current block is the same as candBvdY of the fourth candidate BVD.

That is, in the embodiment of the disclosure, in a situation where both horizontal and vertical components of the BVD are present, a sign prediction index of the BVD has two bits.

It is assumed that the sorted BVD combination list OrderedList is:

Table 4 Sorted BVD combination list OrderedList in case that both horizontal and vertical BVDs are present

| index | horizontal component | vertical component |
|---|---|---|
| 0 | a1 | a2 |
| 1 | b1 | b2 |
| 2 | c1 | c2 |
| 3 | d1 | d2 |

The sorted BVD combination list OrderedList is transformed into the TransformedList (the index transform list) by using the following transform rule.

A BVD combination with a minimum cost after sorting is arranged at a $0^{th}$ position of the list TransformedList. That is, (a1, a2) is arranged at the $0^{th}$ position of the list TransformedList. A BVD combination with the same sign as a1 is arranged at a $2^{nd}$ position of the list TransformedList. That is, it is assumed that b1 has the same sign as a1, (b1, b2) is arranged at the $2^{nd}$ position of the list TransformedList. A BVD combination with a smaller cost and with a sign opposite to that of a1 is arranged at a $1^{st}$ position of the list TransformedList. That is, (c1, c2) is arranged at the $1^{st}$ position of the list TransformedList. A BVD combination with a larger cost and with a sign opposite to that of a1 is arranged at a $3^{rd}$ position of the list TransformedList. That is, (d1, d2) is arranged at the $3^{rd}$ position of the list TransformedList.

Then, the index transform list TransformedList is:

Table 5 Index transform list TransformedList in case that both horizontal and vertical BVDs are present

| index | horizontal component | vertical component |
|---|---|---|
| 0 | a1 | a2 |
| 1 | c1(-a1) | b2 |
| 2 | b1(a1) | c2 |
| 3 | d1(-a1) | d2 |

For the index transform list, the real BVD sign is obtained according to the following rule, the sign prediction index parsed at this time is equal to an index of the leftmost column in the table.

A 0th bit of the sign prediction index is parsed.

When the 0th bit is 0, a horizontal component of the real BVD is equal to a1 and a vertical component thereof is checked. If a 1st bit is 0, a vertical component of the real BVD is equal to a2; if the 1st bit is 1, the vertical component of the real BVD is equal to -a2.

When the 0th bit is 1, the horizontal component of the real BVD is equal to -a1 and a vertical component of a candidate BVD with an index of 1 is checked. If a 1st bit is 0, a vertical component of the real BVD is equal to c2; if the 1st bit is 1, the vertical component of the real BVD is equal to -c2.

For example, it is assumed that the sorted BVD combination list OrderedList is:

Table 6 Example of the sorted BVD combination list OrderedList in case that both horizontal and vertical BVDs are present

| index | horizontal component | vertical component |
|---|---|---|
| 0 | $-BVD_{HOR}$ | $+BVD_{VER}$ |
| 1 | $-BVD_{HOR}$ | $-BVD_{VER}$ |
| 2 | $+BVD_{HOR}$ | $+BVD_{VER}$ |
| 3 | $+BVD_{HOR}$ | $-BVD_{VER}$ |

Then, the sorted BVD combination list OrderedList is transformed into the TransformedList according to the transform rule.

Table 34 Example of the index transform list TransformedList in case that both horizontal and vertical BVDs are present

| index | horizontal component | vertical component |
|---|---|---|
| 0 | $-BVD_{HOR}$ | $+BVD_{VER}$ |
| 1 | $+BVD_{HOR}$ | $+BVD_{VER}$ |
| 2 | $-BVD_{HOR}$ | $-BVD_{VER}$ |
| 3 | $+BVD_{HOR}$ | $-BVD_{VER}$ |

(1) It is assumed that the parsed *busdIdx* = 0,
Then, the real BVD combination includes a horizontal component of $-BVD_{HOR}$ and a vertical component of $+BVD_{VER}$.
(2) It is assumed that the parsed *busdIdx* = 2,
Then, the real BVD combination includes a horizontal component of $-BVD_{HOR}$ and a vertical component of $-BVD_{VER}$.
(3) It is assumed that the parsed *busdIdx* = 1,
Then, the real BVD combination includes a horizontal component of $+BVD_{HOR}$ and a vertical component of $+BVD_{VER}$.
(4) It is assumed that the parsed *busdIdx* = 3,
Then, the real BVD combination includes a horizontal component of $+BVD_{HOR}$ and a vertical component of $-BVD_{VER}$.

Furthermore, in the embodiment of the disclosure, when the BVD of the current block is determined according to the BVD sign index information and the sorting result, in case that the absBvdX is 0, if a value of the BVD sign index information is 0, it is determined that candBvdY of the BVD of the current block is the same as candBvdY of a first candidate BVD in the index transform list; and if a value of the BVD sign index information is 1, it is determined that the candBvdY of the BVD of the current block is the same as candBvdY of a second candidate BVD in the index transform list.

That is, in the embodiment of the disclosure, in a situation where the vertical component of the BVD is present, the sign prediction index of the BVD has 1 bit.

It is assumed that the sorted BVD combination list OrderedList is:

Table 7 Sorted BVD combination list OrderedList in case that only the vertical BVD is present

| index | horizontal component | vertical component |
|---|---|---|
| 0 | 0 | a2 |

(continued)

| index | horizontal component | vertical component |
|---|---|---|
| 1 | 0 | b2(-a2) |

Then, the index transform list TransformedList is the same as the sorted BVD combination list OrderedList.
The index transform list TransformedList is:

Table 8 Index transform list TransformedList in case that only the vertical BVD is present

| index | horizontal component | vertical component |
|---|---|---|
| 0 | 0 | a2 |
| 1 | 0 | b2(-a2) |

For the index transform list, the real BVD sign is obtained according to the following rule, the sign prediction index parsed at this time is equal to an index of the leftmost column in the table.
If a $0^{th}$ bit is 0, a vertical component of the real BVD is a2; otherwise, the vertical component of the real BVD is -a2.
For example, it is assumed that the sorted BVD combination list OrderedList is:

Table 9 Example of the sorted BVD combination list OrderedList in case that only the vertical BVD is present

| index | horizontal component | vertical component |
|---|---|---|
| 0 | 0 | $+BVD_{VER}$ |
| 1 | 0 | $-BVD_{VER}$ |

The index transform list TransformedList is:

Table 10 Example of the index transform list TransformedList in case that only the vertical BVD is present

| index | horizontal component | vertical component |
|---|---|---|
| 0 | 0 | $+BVD_{VER}$ |
| 1 | 0 | $-BVD_{VER}$ |

(1) It is assumed that the sign prediction index is:

$$bvsdIdx = 0$$

Then, the horizontal component of the real BVD is 0, and the vertical component of of the real BVD is $+BVD_{VER}$.
(2) It is assumed that the sign prediction index is:

$$bvsdIdx = 1$$

Then, the horizontal component of the real BVD is 0, and the vertical component of the real BVD is $-BVD_{VER}$.
Furthermore, in the embodiment of the disclosure, when the BVD of the current block is determined according to the BVD sign index information and the sorting result, in case that the absBvdY is 0, if a value of the BVD sign index information is 0, it is determined that candBvdX of the BVD of the current block is the same as candBvdX of a first candidate BVD in the index transform list; and if a value of the BVD sign index information is 1, it is determined that the candBvdX of the BVD of the current block is the same as candBvdX of a second candidate BVD in the index transform list.
That is, in the embodiment of the disclosure, in a situation where the horizontal component of the BVD is present, the sign prediction index of the BVD has 1 bit.
It is assumed that the sorted BVD combination list OrderedList is:

Table 11 Sorted BVD combination list OrderedList in case that only the horizontal BVD is present

| index | horizontal component | vertical component |
|-------|----------------------|--------------------|
| 0     | a1                   | 0                  |
| 1     | b1(-a1)              | 0                  |

Then, the index transform list TransformedList is the same as the sorted BVD combination list OrderedList.
The index transform list TransformedList is:

Table 12 Index transform list TransformedList in case that only the horizontal BVD is present

| index | horizontal component | vertical component |
|-------|----------------------|--------------------|
| 0     | a1                   | 0                  |
| 1     | b1(-a1)              | 0                  |

For the index transform list, the real BVD sign is obtained according to the following rule, the sign prediction index parsed at this time is equal to an index of the leftmost column in the table.
If a $0^{th}$ bit is 0, a horizontal component of the real BVD is a1; otherwise, the horizontal component of the real BVD is -a1.
For example, it is assumed that the sorted BVD combination list OrderedList is:

Table 13 Example of the sorted BVD combination list OrderedList in case that only the horizontal BVD is present

| index | horizontal component | vertical component |
|-------|----------------------|--------------------|
| 0     | $+BVD_{HOR}$         | 0                  |
| 1     | $-BVD_{HOR}$         | 0                  |

The index transform list TransformedList is:

Table 14 Example of the index transform list TransformedList in case that only the horizontal BVD is present

| index | horizontal component | vertical component |
|-------|----------------------|--------------------|
| 0     | $+BVD_{HOR}$         | 0                  |
| 1     | $-BVD_{HOR}$         | 0                  |

(1) It is assumed that the sign prediction index is:
*busdIdx* = 0
Then, the horizontal component of the real BVD is $+BVD_{HOR}$, and the vertical component of of the real BVD is 0.
(2) It is assumed that the sign prediction index is:
*busdIdx* = 1

Then, the horizontal component of the real BVD is $-BVD_{HOR}$, and the vertical component of the real BVD is 0.
Furthermore, in the embodiment of the disclosure, if the real BVD sign is obtained by using logical reasoning, then when the BVD of the current block is determined according to the BVD sign index information and the candidate BVD list, in case that both the absBvdX and the absBvdY are not 0, if a value of a first bit of the BVD sign index information is 0, it is determined that candBvdX of the BVD of the current block is the same as candBvdX of a first candidate BVD in the candidate BVD list, and if the value of the first bit of the BVD sign index information is 1, it is determined that the candBvdX of the BVD of the current block is different from the candBvdX of the first candidate BVD in the candidate BVD list. Then, the candidate BVD list is traversed, to determine a first one candidate BVD having the same candBvdX as the BVD of the current block. Then, if a value of a second bit of the BVD sign index information is 0, it is determined that candBvdY of the BVD of the current block is the same as candBvdY of the first one candidate BVD, otherwise, it is determined that the candBvdY of the BVD of the current block is different from the candBvdY of the first one candidate BVD.
In a first situation, both horizontal and vertical components of the BVD are present. At this time, the sign prediction index of the BVD has two bits.

It is assumed that the sorted BVD combination list OrderedList is:

Table 15 Sorted BVD combination list OrderedList in case that both horizontal and vertical BVDs are present

| index | horizontal component | vertical component |
| --- | --- | --- |
| 0 | a1 | a2 |
| 1 | b1 | b2 |
| 2 | c1 | c2 |
| 3 | d1 | d2 |

If a $0^{th}$ bit of the parsed sign prediction index of the BVD is 0, the horizontal component of the real BVD is equal to a1. If the $0^{th}$ bit is 1, the horizontal component of the real BVD is equal to -a1, that is, an opposite number of a1. At this time, it is determined that the horizontal component of the real BVD is e1. Then, the sorted list (the candidate BVD list of the current block) is traversed from index 0. When a BVD with the same horizontal component as the above determined horizontal component of the real BVD appears in the list for the first time, a vertical component of the BVD is checked. It is assumed that the vertical component of the BVD is f2, if a $1^{st}$ bit is 0, the vertical component of the real BVD is equal to f2; if the $1^{st}$ bit is 1, the vertical component of the real BVD is equal to -f2, that is, an opposite number of f2. At this time, it is determined that the vertical component of the real BVD is e2. In this way, the real BVD, that is, a BVD with a horizontal component of e1 and a vertical component of e2, is obtained.

For example, it is assumed that the sorted BVD combination list OrderedList is:

Table 16 Example of the sorted BVD combination list OrderedList in case that both horizontal and vertical BVDs are present

| index | horizontal component | vertical component |
| --- | --- | --- |
| 0 | $-BVD_{HOR}$ | $+BVD_{VER}$ |
| 1 | $-BVD_{HOR}$ | $-BVD_{VER}$ |
| 2 | $+BVD_{HOR}$ | $+BVD_{VER}$ |
| 3 | $+BVD_{HOR}$ | $-BVD_{VER}$ |

(1) It is assumed that the $0^{th}$ bit of the parsed sign prediction index of the BVD is 0 and the $1^{st}$ bit of the parsed sign prediction index of the BVD is 0, the horizontal component of the real BVD is $-BVD_{HOR}$, and the vertical component of the real BVD is $+BVD_{VER}$.

(2) It is assumed that the $0^{th}$ bit of the parsed sign prediction index of the BVD is 1 and the $1^{st}$ bit of the parsed sign prediction index of the BVD is 0, the horizontal component of the real BVD is $+BVD_{HOR}$, and the vertical component of the real BVD is $+BVD_{VER}$.

(3) It is assumed that the $0^{th}$ bit of the parsed sign prediction index of the BVD is 0 and the $1^{st}$ bit of the parsed sign prediction index of the BVD is 1, the horizontal component of the real BVD is $-BVD_{HOR}$, and the vertical component of the real BVD is $-BVD_{VER}$.

(4) It is assumed that the $0^{th}$ bit of the parsed sign prediction index of the BVD is 1 and the $1^{st}$ bit of the parsed sign prediction index of the BVD is 1, the horizontal component of the real BVD is $+BVD_{HOR}$, and the vertical component of the real BVD is $-BVD_{VER}$.

Furthermore, in the embodiment of the disclosure, if the real BVD sign is obtained by using logical reasoning, then when the BVD of the current block is determined according to the BVD sign index information and the candidate BVD list, in case that the absBvdX is 0, if a value of the BVD sign index information is 0, it is determined that candBvdY of the BVD of the current block is the same as candBvdY of a first candidate BVD in the candidate BVD list; and if a value of the BVD sign index information is 1, it is determined that the candBvdY of the BVD of the current block is the same as candBvdY of a second candidate BVD in the candidate BVD list.

In a second situation, only the vertical component of the BVD is present. At this time, the sign prediction index of the BVD has 1 bit.

It is assumed that the sorted BVD combination list OrderedList is:

Table 17 Sorted BVD combination list OrderedList in case that only the vertical BVD is present

| index | horizontal component | vertical component |
|---|---|---|
| 0 | 0 | a2 |
| 1 | 0 | b2(-a2) |

If a 0th bit of the parsed sign prediction index of the BVD is 0, the vertical component of the real BVD is equal to a2. If the 0th bit is 1, the vertical component of the real BVD is equal to -a2, that is, an opposite number of a2. At this time, it is determined that the vertical component of the real BVD is e2 and the horizontal component of the real BVD is 0. In this way, the real BVD, that is, a BVD with a horizontal component of 0 and a vertical component of e2, is obtained.

For example, it is assumed that the sorted BVD combination list OrderedList is:

Table 18 Example of the sorted BVD combination list OrderedList in case that only the vertical BVD is present

| index | horizontal component | vertical component |
|---|---|---|
| 0 | 0 | $+BVD_{VER}$ |
| 1 | 0 | $-BVD_{VER}$ |

(1) It is assumed that the 0th bit of the parsed sign prediction index of the BVD is 0, the horizontal component of the real BVD is 0, and the vertical component of the real BVD is $+BVD_{VER}$.

(2) It is assumed that the 0th bit of the parsed sign prediction index of the BVD is 1, the horizontal component of the real BVD is 0, and the vertical component of the real BVD is $-BVD_{VER}$.

Furthermore, in the embodiment of the disclosure, if the real BVD sign is obtained by using logical reasoning, then when the BVD of the current block is determined according to the BVD sign index information and the candidate BVD list, in case that the absBvdY is 0, if a value of the BVD sign index information is 0, it is determined that candBvdX of the BVD of the current block is the same as candBvdX of a first candidate BVD in the candidate BVD list; and if a value of the BVD sign index information is 1, it is determined that the candBvdX of the BVD of the current block is the same as candBvdX of a second candidate BVD in the candidate BVD list.

In a third situation, only the horizontal component of the BVD is present. At this time, the sign prediction index of the BVD has 1 bit.

It is assumed that the sorted BVD combination list OrderedList is:

Table 19 Sorted BVD combination list OrderedList in case that only the horizontal BVD is present

| index | horizontal component | vertical component |
|---|---|---|
| 0 | a1 | 0 |
| 1 | b1(-a1) | 0 |

If a 0th bit of the parsed sign prediction index of the BVD is 0, the horizontal component of the real BVD is equal to a1. If the 0th bit is 1, the horizontal component of the real BVD is equal to -a1, that is, an opposite number of a1. At this time, it is determined that the horizontal component of the real BVD is e1 and the vertical component of the real BVD is 0. In this way, the real BVD, that is, a BVD with a horizontal component of e1 and a vertical component of 0, is obtained.

For example, it is assumed that the sorted BVD combination list OrderedList is:

Table 20 Example of the sorted BVD combination list OrderedList in case that only the horizontal BVD is present

| index | horizontal component | vertical component |
|---|---|---|
| 0 | $+BVD_{HOR}$ | 0 |
| 1 | $-BVD_{HOR}$ | 0 |

(1) It is assumed that the 0th bit of the parsed sign prediction index of the BVD is 0, the horizontal component of the real BVD is $+BVD_{HOR}$, and the vertical component of the real BVD is 0.

(2) It is assumed that the 0th bit of the parsed sign prediction index of the BVD is 1, the horizontal component of the real BVD is -BVD$_{HOR}$, and the vertical component of the real BVD is 0.

It should be noted that in the embodiment of the disclosure, if the candidate BVD list of the current block obtained by the sorting process is a list in a specific order, then when the BVD of the current block is determined, a candidate BVD indicated by the BVD sign index information from the candidate BVD list may be directly determined as the BVD of the current block. The sorted BVD combination list OrderedList may be directly assigned to the TransformedList. That is, the candidate BVD list OrderedList is the same as the index transform list TransformedList. Therefore, in the TransformedList (or the OrderedList), a BVD combination corresponding to the sign prediction index of the BVD is the real BVD.

It may be understood that in the embodiment of the disclosure, if the candidate BVD list of the current block obtained by the sorting process is a list in a specific order, both two components corresponding to the BVD may be directly coded at the encoding side. Correspondingly, the two components corresponding to the BVD may be directly determined together through the BVD sign index information at the decoding side.

That is, in the embodiment of the disclosure, the candidate BVD indicated by the BVD sign index information may be directly determined from the candidate BVD list through the BVD sign index information obtained by decoding.

Correspondingly, in the embodiment of the disclosure, with respect to a solution in which horizontal and vertical components are simultaneously obtained after a combination index (the BVD sign index information) is parsed at the decoding side, at the encoding side, the encoder may determine a transmitted index (the BVD sign index information) by using a traversal method.

It may be understood that in the embodiment of the disclosure, with respect to the candidate BVD list determined by sorting in an ascending order of one or more matching errors indicated by the one or more first cost values, that is, in case that the candidate BVD list of the current block is a list in an ascending (descending) order, a candidate BVD indicated by the BVD sign index information from the candidate BVD list may also be directly determined as the BVD of the current block.

In a first situation, both horizontal and vertical components of the BVD are present. At this time, the sign prediction index of the BVD has two bits.

It is assumed that the sorted BVD combination list OrderedList is:

Table 21 Sorted BVD combination list OrderedList in case that both horizontal and vertical BVDs are present

| index | horizontal component | vertical component |
| --- | --- | --- |
| 0 | a1 | a2 |
| 1 | b1(-a1) | b2 |
| 2 | c1(a1) | c2 |
| 3 | d1(-a1) | d2 |

Then, the index transform list TransformedList is:

Table 22 Index transform list TransformedList in case that both horizontal and vertical BVDs are present

| index | horizontal component | vertical component |
| --- | --- | --- |
| 0 | a1 | a2 |
| 1 | b1(-a1) | b2 |
| 2 | c1(a1) | c2 |
| 3 | d1(-a1) | d2 |

For the index transform list, the real BVD sign is obtained according to the following rule, the sign prediction index parsed at this time is equal to an index of the leftmost column in the table.

A 0th bit of the sign prediction index is parsed.

When the 0th bit is 0, a horizontal component of the real BVD is equal to a1. A vertical component thereof is checked. If a 1st bit is 0, a vertical component of the real BVD is equal to a2. If the 1st bit is 1, the vertical component of the real BVD is equal to -a2.

When the 0th bit is 1, the horizontal component of the real BVD is equal to -a1. A vertical component of a candidate BVD with an index of 1 is checked. If a 1st bit is 0, a vertical component of the real BVD is equal to c2. If the 1st bit is 1, the vertical component of the real BVD is equal to -c2.

For example, it is assumed that the sorted BVD combination list OrderedList is:

Table 23 Example of the sorted BVD combination list OrderedList in case that both horizontal and vertical BVDs are present

| index | horizontal component | vertical component |
|---|---|---|
| 0 | $-BVD_{HOR}$ | $+BVD_{VER}$ |
| 1 | $+BVD_{HOR}$ | $+BVD_{VER}$ |
| 2 | $-BVD_{HOR}$ | $-BVD_{HOR}$ |
| 3 | $+BVD_{HOR}$ | $-BVD_{VER}$ |

Then, the TransformedList is:

Table 24 Example of the index transform list TransformedList in case that both horizontal and vertical BVDs are present

| index | horizontal component | vertical component |
|---|---|---|
| 0 | $-BVD_{HOR}$ | $+BVD_{VER}$ |
| 1 | $+BVD_{HOR}$ | $+BVD_{VER}$ |
| 2 | $-BVD_{HOR}$ | $-BVD_{HOR}$ |
| 3 | $+BVD_{HOR}$ | $-BVD_{VER}$ |

(1) It is assumed that the parsed *bvsdIdx* = 0,
Then, the real BVD combination includes a horizontal component of $-BVD_{HOR}$ and a vertical component of $+BVD_{VER}$.
(2) It is assumed that the parsed *bvsdIdx* = 2,
Then, the real BVD combination includes a horizontal component of $-BVD_{HOR}$ and a vertical component of $-BVD_{VER}$.
(3) It is assumed that the parsed *bvsdIdx* = 1,
Then, the real BVD combination includes a horizontal component of $+BVD_{HOR}$ and a vertical component of $+BVD_{VER}$.
(4) It is assumed that the parsed *bvsdIdx* = 3,

Then, the real BVD combination includes a horizontal component of $+BVD_{HOR}$ and a vertical component of $-BVD_{VER}$.
In a second situation, only the vertical component of the BVD is present. At this time, the sign prediction index of the BVD has 1 bit.
It is assumed that the sorted BVD combination list OrderedList is:

Table 25 Sorted BVD combination list OrderedList in case that only the vertical BVD is present

| index | horizontal component | vertical component |
|---|---|---|
| 0 | 0 | a2 |
| 1 | 0 | b2(-a2) |

Then, the index transform list TransformedList is:

Table 54 Index transform list TransformedList in case that only the vertical BVD is present

| index | horizontal component | vertical component |
|---|---|---|
| 0 | 0 | a2 |
| 1 | 0 | b2(-a2) |

For the index transform list, the real BVD sign is obtained according to the following rule, the sign prediction index parsed at this time is equal to an index of the leftmost column in the table.
If a $0^{th}$ bit is 0, a vertical component of the real BVD is a2; otherwise, the vertical component of the real BVD is -a2.
For example, it is assumed that the sorted BVD combination list OrderedList is:

Table 26 Example of the sorted BVD combination list OrderedList in case that only the vertical BVD is present

| Index | horizontal component | vertical component |
|---|---|---|
| 0 | 0 | $+BVD_{VER}$ |
| 1 | 0 | $-BVD_{VER}$ |

The TransformedList is:

Table 56 Example of the index transform list TransformedList in case that only the vertical BVD is present

| index | horizontal component | vertical component |
|---|---|---|
| 0 | 0 | $+BVD_{VER}$ |
| 1 | 0 | $-BVD_{VER}$ |

(1) It is assumed that the parsed sign prediction index is:

$$bvsdIdx = 0.$$

Then, the horizontal component of the real BVD is 0, and the vertical component of of the real BVD is $+BVD_{VER}$.
(2) It is assumed that the parsed sign prediction index is:

$$bvsdIdx = 1.$$

Then, the horizontal component of the real BVD is 0, and the vertical component of of the real BVD is $-BVD_{VER}$.
In a third situation, only the horizontal component of the BVD is present. At this time, the sign prediction index of the BVD has 1 bit.
It is assumed that the sorted BVD combination list OrderedList is:

Table 27 Sorted BVD combination list OrderedList in case that only the horizontal BVD is present

| index | horizontal component | vertical component |
|---|---|---|
| 0 | a1 | 0 |
| 1 | b1(-a1) | 0 |

Then, the index transform list TransformedList is:

Table 28 Index transform list TransformedList in case that only the horizontal BVD is present

| index | horizontal component | vertical component |
|---|---|---|
| 0 | a1 | 0 |
| 1 | b1(-a1) | 0 |

For the index transform list, the real BVD sign is obtained according to the following rule, the sign prediction index parsed at this time is equal to an index of the leftmost column in the table.
If a $0^{th}$ bit is 0, a horizontal component of the real BVD is a1; otherwise, the horizontal component of the real BVD is -a1.
For example, it is assumed that the sorted BVD combination list OrderedList is:

Table 29 Example of the sorted BVD combination list OrderedList in case that only the horizontal BVD is present

| index | horizontal component | vertical component |
|---|---|---|
| 0 | $+BVD_{HOR}$ | 0 |
| 1 | $-BVD_{HOR}$ | 0 |

The TransformedList is:

Table 60 Example of the index transform list TransformedList in case that only the horizontal BVD is present

| index | horizontal component | vertical component |
|---|---|---|
| 0 | $+BVD_{HOR}$ | 0 |
| 1 | $-BVD_{HOR}$ | 0 |

(1) It is assumed that the parsed sign prediction index is:

$$bvsdIdx = 0$$

Then, the horizontal component of the real BVD is $+BVD_{HOR}$, and the vertical component of of the real BVD is 0.

(2) It is assumed that the parsed sign prediction index is:

$$bvsdIdx = 1$$

Then, the horizontal component of the real BVD is $-BVD_{HOR}$, and the vertical component of of the real BVD is 0.

Furthermore, in the embodiment of the disclosure, if the sorting result after the sorting process is the candidate BVD set of the current block, a candidate BVD with a minimum template matching cost is determined after sorting, that is, the BVD with the minimum cost in the candidate BVD set is determined. At this time, if value of *busdIdx* is *bit*0 + *bit*1 « 1, that is, *bit*0 represents a sign of the horizontal component, and *bit*1 represents a sign of the vertical component, then a minimum BVD sign combination (the BVD with the minimum cost) determines signs of *bit0* and *bit*1 when their values are equal to 0, and signs of *bit*0 and *bit*1 when their values are equal to 1 are opposite to the signs of *bit*0 and *bit*1 when their values are equal to 0.

It should be noted that in the embodiment of the disclosure, when the BVD of the current block is determined according to the BVD sign index information and the sorting result, in case that both the absBvdX and the absBvdY are not 0, if a value of a first bit of the BVD sign index information is 0, it is determined that candBvdX of the BVD of the current block is the same as candBvdX of a BVD with a minimum cost in the candidate BVD set; then, candBvdY of the BVD of the current block may continue to be determined according to the BVD with the minimum cost in the candidate BVD set.

It should be noted that in the embodiment of the disclosure, when the BVD of the current block is determined according to the BVD sign index information and the sorting result, in case that both the absBvdX and the absBvdY are not 0, if a value of a first bit of the BVD sign index information is 1, it is determined that candBvdX of the BVD of the current block has an opposite sign to candBvdX of a BVD with a minimum cost in the candidate BVD set. Then, candBvdY of the BVD of the current block may continue to be determined according to a BVD with a minimum cost in another array other than an array, where the BVD with the minimum cost is located, in the candidate BVD set.

Furthermore, in the embodiment of the disclosure, when the candBvdY of the BVD of the current block is determined according to the BVD with the minimum cost in the candidate BVD set, if a value of a second bit of the BVD sign index information is 0, it is determined that the candBvdY of the BVD of the current block is the same as candBvdY of the BVD with the minimum cost in the candidate BVD set; and if a value of the second bit is 1, it is determined that the candBvdY of the BVD of the current block has an opposite sign to the candBvdY of the BVD with the minimum cost in the candidate BVD set.

Furthermore, in the embodiment of the disclosure, when the candBvdY of the BVD of the current block is determined according to the BVD with the minimum cost in another array other than the array, where the BVD with the minimum cost is located, in the candidate BVD set, if a value of a second bit of the BVD sign index information is 0, it is determined that the candBvdY of the BVD of the current block is the same as candBvdY of the BVD with the minimum cost in the another array; and if a value of the second bit is 1, it is determined that the candBvdY of the BVD of the current block has an opposite sign to the candBvdY of the BVD with the minimum cost in the another array.

It should be noted that in the embodiment of the disclosure, it is assumed that signs of horizontal and vertical components of the real BVD are bvdSign[0] and bvdSign[1] respectively. Here a value of 0 indicates positive; and a value of 1 indicates negative.

Exemplarily, in the embodiment of the disclosure, if both horizontal and vertical components of the BVD are present, two possible situations for the BVD with the minimum cost in the candidate BVD set determined after sorting are as follows.

(1) If in the third comparison, the Cost corresponding to the posiGrp[0] is less than or equal to the Cost corresponding to the negaGrp[0]:

If the 0th bit is 0, bvd_sign[0] = 0. If the 1st bit is 0, bvd_sign[1] = posiGrp[0][1]; if the 1st bit is 1, bvd_sign[1] = posiGrp[1][1].
If the 0th bit is 1, bvd_sign[0] = 1. If the 1st bit is 0, bvd_sign[1] = negaGrp[0][1]; if the 1st bit is 1, bvd_sign[1] = negaGrp[1][1].

(2) If in the third comparison, the Cost corresponding to the posiGrp[0] is greater than the Cost corresponding to the negaGrp[0]:

If the 0th bit is 1, bvd_sign[0] = 0. If the 1st bit is 0, bvd_sign[1] = posiGrp[0][1]; if the 1st bit is 1, bvd_sign[1] = posiGrp[1][1].
If the 0th bit is 0, bvd_sign[0] = 1. If the 1st bit is 0, bvd_sign[1] = negaGrp[0][1]; if the 1st bit is 1, bvd_sign[1] = negaGrp[1][1].

It should be noted that in the embodiment of the disclosure, when the BVD of the current block is determined according to the BVD sign index information and the sorting result, in case that the absBvdX is 0, if a value of the BVD sign index information is 0, it is determined that candBvdY of the BVD of the current block is the same as candBvdY of a BVD with a minimum cost in the candidate BVD set; and if a value of the BVD sign index information is 1, it is determined that the candBvdY of the BVD of the current block has an opposite sign to the candBvdY of the BVD with the minimum cost in the candidate BVD set.

Exemplarily, in the embodiment of the disclosure, if only the vertical component of the BVD is present, two possible situations for the BVD with the minimum cost in the candidate BVD set determined after sorting are as follows.

(1) If Cost(+, +) is less than or equal to Cost(+, -):

If the 0th bit is 0, bvd_sign[1]=0.
If the 0th bit is 1, bvd_sign[1]=1.

(2) If Cost(+,+) is greater than Cost(+,-):

If the 0th bit is 0, bvd_sign[1]=1.
If the 0th bit is 1, bvd_sign[1]=0.

It should be noted that in the embodiment of the disclosure, when the BVD of the current block is determined according to the BVD sign index information and the sorting result, in case that the absBvdY is 0, if a value of the BVD sign index information is 0, it is determined that absBvdX of the BVD of the current block is the same as absBvdX of a BVD with a minimum cost in the candidate BVD set; and if a value of the BVD sign index information is 1, it is determined that the absBvdX of the BVD of the current block has an opposite sign to the absBvdX of the BVD with the minimum cost in the candidate BVD set.

Exemplarily, in the embodiment of the disclosure, if only the horizontal component of the BVD is present, two possible situations for the BVD with the minimum cost in the candidate BVD set determined after sorting are as follows.

(1) If Cost(+, +) is less than or equal to Cost(-, +):

If the 0th bit is 0, bvd_sign[0]=0.
If the 0th bit is 1, bvd_sign[0]=1.

(2) If Cost(+,+) is greater than Cost(-,+):

If the 0th bit is 0, bvd_sign[0]=1.
If the 0th bit is 1, bvd_sign[0]=0.

It may be seen that in the above method for determining the BVD of the current block based on the candidate BVD set, operations of establishing a list and obtaining the sign prediction index may be ommited. In a situation where both horizontal and vertical components of the BVD are present, the real BVD sign may be directly obtained through three comparisons at the decoding side, which is less complex.

In operation 104, a reconstruction value of the current block is determined according to the BVD of the current block.

In the embodiment of the disclosure, after the BVD of the current block is determined according to the BVD sign index information and the sorting result, the decoder may determine the reconstruction value of the current block by using the BVD of the current block to perform motion compensation.

Exemplarily, in the embodiment of the disclosure, an overall process at the decoding side is as follows.

There are several manners as follows.

(1) The sign of the BVD is parsed after the process of parsing the absolute value of the BVD:

| | |
|---|---|
| if( general_merge_flag[ x0 ][ y0 ] ) | |
| ... | |
| else if( CuPredMode[ chType ][ x0 ][ y0 ] = = MODE_IBC ) { | |
| bvd_coding( x0, y0, 0, 0 ) | |
| bvsd_data( x0, y0 ) | |
| ... | |
| } | |

| bvd_coding( x0, y0, refList, cpIdx ) { | Descriptor |
|---|---|
| abs_bvd_greater0_flag[ 0 ] | ae(v) |
| abs_bvd_greater0_flag[ 1 ] | ae(v) |
| if( abs_bvd_greater0_flag[ 0 ] ){ | |
| abs_bvd_minus1[ 0 ] | ae(v) |
| } | |
| if( abs_bvd_greater0_flag[ 1 ] ){ | |
| abs_bvd_minus 1 [ 1 ] | ae(v) |
| } | |
| } | |
| bvsd_data( x0, y0 ) { | Descriptor |
| if(abs_bvd_greater0_flag[ 0 ] && abs_bvd_greater0_flag[ 1 ]) | |
| bvsd_idx | ae(v) |
| else if(abs_bvd_greater0_flag[ 0 ] ‖ abs_bvd_greater0_flag[ 1 ]) | |
| bvsd_idx_single | ae(v) |
| } | |

The sign prediction index (i.e., the sign index information of the BVD) bvdIdx is derived as follows.

If both abs_bvd_greater0_flag[0] and abs_bvd_greater0_flag[1] are TRUE, bvsdIdx=bvsd_idx; Otherwise, if either abs_bvd_greater0_flag[0] or abs_bvd_greater0_flag[1] is TRUE, bvsdIdx=bvsd_idx_single.

An absolute value abs_bvd[compIdx] of the MVD for compIdx=0..1 is derived as follows.

abs_bvd[compIdx]=abs_bvd_greater0_flag[compIdx]*(abs_bvd_minus1[compIdx]+1)

Two different probability models may be used for the bvsd_idx:

Table 30

| Syntax element | binIdx | | | | | |
|---|---|---|---|---|---|---|
| | 0 | 1 | 2 | 3 | 4 | >=5 |
| bvsd_idx | abs_bvd[0]<=Thres?0:1 | abs_bvd[1]<=Thres?0:1 | na | na | na | na |

Or, four different probability models may be used for the bvsd_idx:

Table 31

| Syntax element | binIdx | | | | | |
|---|---|---|---|---|---|---|
| | 0 | 1 | 2 | 3 | 4 | >=5 |
| bvsd_idx | abs_bvd[0]<=Thres?0:1 | abs_bvd[1]<=Thres:3 | na | na | na | na |

Or, one binIdx may use a probability model for the bvsd_idx, and one binIdx may use bypass coding for the bvsd_idx:

Table 32

| Syntax element | binIdx | | | | | |
|---|---|---|---|---|---|---|
| | 0 | 1 | 2 | 3 | 4 | >=5 |
| bvsd_idx | abs_bvd[0]<=Thres?0:1 | bypass | na | na | na | na |

Or,

Table 33

| Syntax element | binIdx | | | | | |
|---|---|---|---|---|---|---|
| | 0 | 1 | 2 | 3 | 4 | >=5 |
| bvsd_idx | bypass | abs_bvd[1]<=Thres?0:1 | na | na | na | na |

Different probability models may be used for the bvsd_idx_single according to the size of the absolute value:

Table 34

| Syntax element | binIdx | | | | | |
|---|---|---|---|---|---|---|
| | 0 | 1 | 2 | 3 | 4 | >=5 |
| bvsd_idx_single | abs_bvd[compIdx]<=Thres?0:1 | na | na | na | na | na |
| [compIdx=0...1, indicates the horizontal component or the vertical component. | | | | | | |

Or, a single probability model may be used for the bvsd_idx_single:

Table 35

| Syntax element | binIdx | | | | | |
|---|---|---|---|---|---|---|
| | 0 | 1 | 2 | 3 | 4 | >=5 |
| bvsd_idx_single | 0 | na | na | na | na | na |

Or, the bypass coding may be used for the bvsd_idx_single:

Table 36

| Syntax element | binIdx | | | | | |
|---|---|---|---|---|---|---|
| | 0 | 1 | 2 | 3 | 4 | >=5 |
| bvsd_idx_single | bypass | na | na | na | na | na |

(2) The process of parsing the sign of the BVD is performed in the middle of a function bvd_coding() parsing the absolute value of the BVD, that is, the process of parsing the sign of the BVD is performed after flags abs_bvd_greater0_flag[0] and abs_bvd_greater0_flag[1] indicating whether horizontal and vertical components of the BVD are zero are parsed:

| | |
|---|---|
| if( general_merge_flag[ x0 ][ y0 ] ) | |
| ... | |
| else if( CuPredMode[ chType ][ x0 ][ y0 ] = = MODE_IBC ) { | |
| bvd_coding( x0, y0, 0, 0 ) | |
| ... | |
| } | |

| bvd_coding( x0, y0, refList, cpIdx ) { | Descriptor |
|---|---|
| abs_bvd_greater0_flag[ 0 ] | ae(v) |
| abs_bvd_greater0_flag[ 1 ] | ae(v) |
| if(abs_bvd_greater0_flag[ 0 ] && abs_bvd_greater0_flag[ 1 ]) | |
| bvsd_idx | ae(v) |
| else if(abs_bvd_greater0_flag[ 0 ] ‖ abs_bvd_greater0_flag[ 1 ]) | |
| bvsd_idx_single | ae(v) |
| if( abs_bvd_greater0_flag[ 0 ] ){ | |
| abs_bvd_minus1[ 0 ] | ae(v) |
| } | |
| if( abs_bvd_greater0_flag[ 1 ] ){ | |
| abs_bvd_minus 1 [ 1 ] | ae(v) |
| } | |
| } | |

The sign prediction index bvdIdx is derived as follows:

If both abs_bvd_greater0_flag[0] and abs_bvd_greater0_flag[1] are TRUE, bvsdIdx=bvsd_idx;

Otherwise, if either abs_bvd_greater0_flag[0] or abs_bvd_greater0_flag[1] is TRUE, bvsdIdx=bvsd_idx_single. Two different probability models may be used for the bvsd_idx:

Table 37

| Syntax element | binIdx | | | | | |
|---|---|---|---|---|---|---|
| | 0 | 1 | 2 | 3 | 4 | >=5 |
| bvsd_idx | 0 | 1 | na | na | na | na |

Or, one binIdx may use a probability model for the bvsd_idx, and one binIdx may use the bypass coding for the bvsd_idx:

Table 38

| Syntax element | binIdx | | | | | |
|---|---|---|---|---|---|---|
| | 0 | 1 | 2 | 3 | 4 | >=5 |
| bvsd_idx | 0 | bypass | na | na | na | na |

Or,

Table 39

| Syntax element | binIdx | | | | | |
|---|---|---|---|---|---|---|
| | 0 | 1 | 2 | 3 | 4 | >=5 |
| bvsd_idx | bypass | 0 | na | na | na | na |

A single probability model may be used for the bvsd_idx_single:

Table 40

| Syntax element | binIdx | | | | | |
|---|---|---|---|---|---|---|
| | 0 | 1 | 2 | 3 | 4 | >=5 |
| bvsd_idx_single | 0 | na | na | na | na | na |

Or, the bypass coding may be used for the bvsd_idx_single:

Table 41

| Syntax element | binIdx | | | | | |
|---|---|---|---|---|---|---|
| | 0 | 1 | 2 | 3 | 4 | >=5 |
| bvsd_idx_single | bypass | na | na | na | na | na |

(3) The process of parsing the sign of the BVD is performed in the middle of a function bvd_coding() parsing the absolute value of the BVD, that is, the process of parsing the sign of the BVD is performed after flags abs_bvd_greater0_flag[0] and abs_bvd_greater0_flag[1] indicating whether horizontal and vertical components of the BVD are zero are parsed. However, (3) differs from (2) in that only one variable bvsd_idx is introduced. and binarization of the variable is processed in the CABAC (the binarization and CABAC processing flow involved in this process may also be implemented in (1), that is, the process of parsing the sign of the BVD is performed after the function bvd_coding() of the absolute value of the BVD is parsed, which may also use a binarization process similar to the following descriptions):

| | |
|---|---|
| if( general_merge_flag[ x0 ][ y0 ] ) | |
| ... | |
| else if( CuPredMode[ chType ][ x0 ][ y0 ] = = MODE_IBC ) { | |
| bvd_coding( x0, y0, 0, 0 ) | |
| ... | |
| } | |

| bvd_coding( x0, y0, refList, cpIdx ) { | Descriptor |
|---|---|
| abs_bvd_greater0_flag[ 0 ] | ae(v) |
| abs_bvd_greater0_flag[ 1 ] | ae(v) |
| if(abs_bvd_greater0_flag[ 0 ] ‖ abs_bvd_greater0_flag[ 1 ]) | |
| bvsd_idx | ae(v) |
| if( abs_bvd_greater0_flag[ 0 ] ){ | |
| abs_bvd_minus1[ 0 ] | ae(v) |
| } | |
| if( abs_bvd_greater0_flag[ 1 ] ){ | |
| abs_bvd_minus 1 [1 ] | ae(v) |
| } | |

(continued)

| | |
|---|---|
| } | |

The sign prediction index bvdIdx is derived as follows:

$$bvsdIdx = bvsd\_idx$$

The following descriptions describe a binarization process of bvsd_idx and corresponding specific forms thereof, which include but are not limited to the following several forms:
1) bvsd_idx is binarized by using fixed-length binarization:
At this time, there are two forms:
First form:
If both abs_bvd_greater0_flag[0] and abs_bvd_greater0_flag[1] are TRUE:

Table 42

| Syntax element | Binarization | |
|---|---|---|
| | Process | Input parameters |
| bvsd_idx | FL | cMax = 3 |

Otherwise, if either abs_bvd_greater0_flag[0] or abs_bvd_greater0_flag[1] is TRUE:

Table 43

| Syntax element | Binarization | |
|---|---|---|
| | Process | Input parameters |
| bvsd_idx | FL | cMax = 1 |

The above process is briefly described as follows.
In case that both abs_bvd_greater0_flag[0] and abs_bvd_greater0_flag[1] are TRUE, when a binarized binary string of the parsed bvsd_idx is 00B, bvsd_idx is 0; when the binarized binary string of the parsed bvsd_idx is 01B, bvsd_idx is 1; when the binarized binary string of the parsed bvsd_idx is 10B, bvsd_idx is 2; when the binarized binary string of the parsed bvsd_idx is 11B, bvsd_idx is 3.
Otherwise, in case that either abs_bvd_greater0_flag[0] or abs_bvd_greater0_flag[1] is TRUE, when the binarized binary string of the parsed bvsd_idx is 0B, bvsd_idx is 0; when the binarized binary string of the parsed bvsd_idx is 1B, bvsd_idx is 1.
At this time, a relationship between a context probability model of the syntax element bvsd_idx and the binIdx is as follows.
If both abs_bvd_greater0_flag[0] and abs_bvd_greater0_flag[1] are TRUE:
There may be two different probability models:

Table 44

| Syntax element | binIdx | | | | | |
|---|---|---|---|---|---|---|
| | 0 | 1 | 2 | 3 | 4 | >=5 |
| bvsd_idx | 0 | 1 | na | na | na | na |

Or, one may use a probability model, and one may use the bypass coding:

Table 45

| Syntax element | binIdx | | | | | |
|---|---|---|---|---|---|---|
| | 0 | 1 | 2 | 3 | 4 | >=5 |
| bvsd_idx | 0 | bypass | na | na | na | na |

Or,

Table 46

| Syntax element | binIdx | | | | | |
|---|---|---|---|---|---|---|
| | 0 | 1 | 2 | 3 | 4 | >=5 |
| bvsd_idx | bypass | 0 | na | na | na | na |

Otherwise, if either abs_bvd_greater0_flag[0] or abs_bvd_greater0_flag[1] is TRUE:
An independent probability model may be used:

Table 47

| Syntax element | binIdx | | | | | |
|---|---|---|---|---|---|---|
| | 0 | 1 | 2 | 3 | 4 | >=5 |
| bvsd_idx | 0 | na | na | na | na | na |

Or, the bypass coding may be used:

Table 48

| Syntax element | binIdx | | | | | |
|---|---|---|---|---|---|---|
| | 0 | 1 | 2 | 3 | 4 | >=5 |
| bvsd_idx | bypass | na | na | na | na | na |

Second form:

If both abs_bvd_greater0_flag[0] and abs_bvd_greater0_flag[1] are TRUE:

Table 49

| Syntax element | Binarization | |
|---|---|---|
| | Process | Input parameters |
| bvsd_idx | FL | cMax = 3 |

That is, in case that both abs_bvd_greater0_flag[0] and abs_bvd_greater0_flag[1] are TRUE, when a binarized binary string of the parsed bvsd_idx is 00B, bvsd_idx is 0; when the binarized binary string of the parsed bvsd_idx is 01B, bvsd_idx is 1; when the binarized binary string of the parsed bvsd_idx is 10B, bvsd_idx is 2; when the binarized binary string of the parsed bvsd_idx is 11B, bvsd_idx is 3.

Otherwise, if either abs_bvd_greater0_flag[0] or abs_bvd_greater0_flag[1] is TRUE:

Table 50

| Syntax element | Binarization | |
|---|---|---|
| | Process | Input parameters |
| bvsd_idx | FL | cMax = 3 |

That is, when the binarized binary string of the parsed bvsd_idx is 00B, bvsd_idx is 0; when the binarized binary string of the parsed bvsd_idx is 01B, bvsd_idx is 1.

At this time, a relationship between a context probability model of the syntax element bvsd_idx and the binIdx is as follows.

If both abs_bvd_greater0_flag[0] and abs_bvd_greater0_flag[1] are TRUE, the relationship is the same as that in the first form.

Otherwise, if either abs_bvd_greater0_flag[0] or abs_bvd_greater0_flag[1] is TRUE:
One or two probability models may be used:

Table 51

| Syntax element | binIdx | | | | | |
|---|---|---|---|---|---|---|
| | 0 | 1 | 2 | 3 | 4 | >=5 |
| bvsd_idx | 0 | 0 | na | na | na | na |

Or,

| Syntax element | binIdx | | | | | |
|---|---|---|---|---|---|---|
| | 0 | 1 | 2 | 3 | 4 | >=5 |
| bvsd_idx | 0 | 1 | na | na | na | na |

Or, an independent probability model and bypass coding may be used together:

Table 52

| Syntax element | binIdx | | | | | |
|---|---|---|---|---|---|---|
| | 0 | 1 | 2 | 3 | 4 | >=5 |
| bvsd_idx | bypass | 0 | na | na | na | na |

Each may use the bypass coding respectively:

Table 53

| Syntax element | binIdx | | | | | |
|---|---|---|---|---|---|---|
| | 0 | 1 | 2 | 3 | 4 | >=5 |
| bvsd_idx | bypass | bypass | na | na | na | na |

2) bvsd_idx is binarized by using truncated binarization:

Table 54

| Syntax element | Binarization | |
|---|---|---|
| | Process | Input parameters |
| bvsd_idx | TB | cMax = 5 |

When a binarized binary string of the parsed bvsd_idx is 00B, bvsd_idx is 0; when the binarized binary string of the parsed bvsd_idx is 01B, bvsd_idx is 1; when the binarized binary string of the parsed bvsd_idx is 100B, bvsd_idx is 2; when the binarized binary string of the parsed bvsd_idx is 101B, bvsd_idx is 3.

At this time, a relationship between a context probability model of the syntax element bvsd_idx and the binIdx is as follows.

Three probability models, or two probability models, or one probability model may be used:

Table 55

| Syntax element | binIdx | | | | | |
|---|---|---|---|---|---|---|
| | 0 | 1 | 2 | 3 | 4 | >=5 |
| bvsd_idx | 0 | 1 | 2 | na | na | na |

Or,

Table 56

| Syntax element | binIdx | | | | | |
|---|---|---|---|---|---|---|
| | 0 | 1 | 2 | 3 | 4 | >=5 |
| bvsd_idx | 0 | 1 | 1 | na | na | na |

Or,

Table 57

| Syntax element | binIdx | | | | | |
|---|---|---|---|---|---|---|
| | 0 | 1 | 2 | 3 | 4 | >=5 |
| bvsd_idx | 0 | 0 | 0 | na | na | na |

Or, the bypass coding may be used for any of the above binIdx, that is, coding may be combined arbitrarily, only one example thereof is given here:

Table 58

| Syntax element | binIdx | | | | | |
|---|---|---|---|---|---|---|
| | 0 | 1 | 2 | 3 | 4 | >=5 |
| bvsd_idx | 0 | 1 | bypass | na | na | na |

3) bvsd_idx is binarized by using Exp-Golomb binarization:

Table 59

| Syntax element | Binarization | |
|---|---|---|
| | Process | Input parameters |
| bvsd_idx | EG0 | |

When a binarized binary string of the parsed bvsd_idx is 1B, bvsd_idx is 0; when the binarized binary string of the parsed bvsd_idx is 010B, bvsd_idx is 1; when the binarized binary string of the parsed bvsd_idx is 011B, bvsd_idx is 2; when the binarized binary string of the parsed bvsd_idx is 00100B, bvsd_idx is 3.

At this time, a relationship between a context probability model of the syntax element bvsd_idx and the binIdx is as follows.

Any combination of the probability model and the bypass coding may be used, only two examples thereof are given below:

Table 60

| Syntax element | binIdx | | | | | |
|---|---|---|---|---|---|---|
| | 0 | 1 | 2 | 3 | 4 | >=5 |
| bvsd_idx | 0 | 1 | 2 | 3 | 4 | na |

Or,

Table 61

| Syntax element | binIdx | | | | | |
|---|---|---|---|---|---|---|
| | 0 | 1 | 2 | 3 | 4 | >=5 |
| bvsd_idx | 0 | 0 | bypass | 1 | 1 | na |

In summary, according to the decoding method proposed in the above operations 101 to 104, a BVD combination list is created for possible signs of the BVD and the absolute value of the BVD, the combination list is sorted by using a template, and the sign prediction index is obtained by using the real BVD sign and the sorted list, to perform CABAC coding, which has a higher coding efficiency than the bypass coding, thereby saving the bitrate required for transmission of the BVD in the IBC.

It should be noted that according to the decoding method proposed in the embodiment of the disclosure, on one hand, similarity between the template and the current CB may be fully used, to effectively sort the BVD sign combination list; on the other hand, the CABAC may be used for coding, which has a higher coding efficiency than the bypass coding.

An embodiment of the disclosure provides an encoding method and a decoding method. At the decoding side, a bitstream is decoded, to determine an absolute value of a BVD of a current block and BVD sign index information of the current block; one or more candidate BVDs of the current block is sorted according to the absolute value of the BVD of the current block, to determine a sorting result; the BVD of the current block is determined according to the BVD sign index information and the sorting result; and a reconstruction value of the current block is determined according to the BVD of the current block. At the encoding side, one or more candidate BVDs of a current block is sorted according to an absolute value of a BVD of the current block, to determine a sorting result; BVD sign index information of the current block is determined according to BVD sign information of the current block and the sorting result; and the absolute value of the BVD and the BVD sign index information are written into a bitstream. It may be seen that in the embodiment of the disclosure, the one or more candidate BVDs of the current block may be effectively sorted according to the absolute value of the BVD of the current block, so that the BVD sign index information may be determined and transmitted by using the sorting result during coding, and the BVD sign information of the current block may be parsed by using the sorting result during decoding. Furthermore, the BVD sign information may be coded and decoded by using CABAC coding and decoding technologies, which may effectively reduce the bitrate required for transmission of signs of the BVD in the IBC mode, and thus may improve coding efficiency.

Based on the above embodiments, another embodiment of the disclosure proposes a decoding method. With respect to a decoder, when decoding is performed, input of decoding a BVD may be bitstream information of the absolute value of the BVD and the sign (the BVD sign index information), and output of decoding the BVD may be the absolute value of the BVD and real information of the sign.

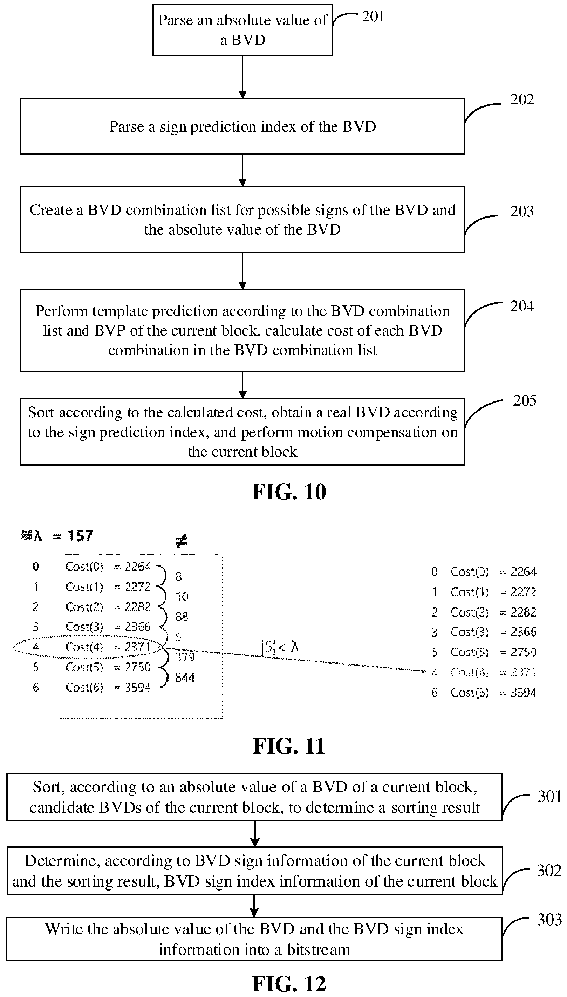

FIG. 10 is a second schematic diagram of a decoding method in an embodiment of the disclosure. As shown in FIG. 10, processes of decoding the BVD include parsing an absolute value of a BVD (operation 201), parsing a sign prediction index of the BVD, that is, parsing BVD sign index information (operation 202), determining candidate BVDs of the current block by creating a BVD combination list for possible signs of the BVD and the absolute value of the BVD (operation 203), performing template prediction according to the BVD combination list and BVP of the current block, calculating cost of each BVD combination in the BVD combination list, that is, calculating cost of a template area for the combination list (calculating a first cost value) (operation 204), sorting the list, deriving a real BVD according to the sign prediction index and the sorted list, and performing motion compensation (operation 205).

With respect to parsing the absolute value of the BVD proposed in operation 201, the decoder may directly parse an absolute value of a real BVD from the bitstream. That is, the decoder may determine the absolute value of the BVD of the current block by decoding the bitstream.

With respect to determining the sign prediction index (the BVD sign index information) proposed in operation 202, the number of bits of a binary number of the sign prediction index may be determined first according to the absolute value of the BVD parsed in operation 201 during decoding. If absolute values of both horizontal and vertical components of the BVD are not 0, the number of bits of the binary number of the sign prediction index is 2. If the horizontal component of the BVD is 0 and the absolute value of the vertical component of the BVD is not 0, the number of bits of the binary number of the sign prediction index is 1; if the horizontal component of the BVD is not 0 and the absolute value of the vertical component of the BVD is 0, the number of bits of the binary number of the sign prediction index is 1.

Then, the decoder may use the CABAC or a decoding process corresponding to a bypass mode, to parse the binary number corresponding to the sign prediction index from the bitstream.

With respect to a context model of the CABAC used for the sign prediction index, a single probability model or multiple probability models may be used, which may include but may not be limited to different probability models which are distinguished according to the size of the absolute value of the horizontal component or the vertical component of the BVD, a sum of the horizontal component and the vertical component of the BVD, or a difference between the horizontal component and the vertical component of the BVD, etc.

With respect to a process of determining the candidate BVDs of the current block proposed in operation 203, that is, creating the BVD combination list (a candidate BVD set or an initial set) for possible signs of the BVD and the absolute value of the BVD, the BVD combination list may be created according to different situations, such as a situation where only the horizontal BVD is present, a situation where only the vertical BVD is present, a situation where both horizontal and vertical BVDs are present, etc.

Determination of the BVD combination list includes arranging and combining possible signs of the BVD, and multiplying possible horizontal and vertical signs by absolute values of the horizontal component and the vertical component of the BVD respectively.

In order to explain how to create the BVD combination list (the candidate BVD set or the initial set) better, three simple classifications are exemplified.

First classification example: the BVD is divided into a horizontal component and a vertical component. When the horizontal component is zero, only the vertical component is coded. Therefore a combination list is created only for signs of the vertical component, which specifically includes the following two situations.

First situation: the horizontal component is always positive and is just a placeholder and the vertical component is positive first, and then is negative, to creat a sign list. Then, the created sign list is multiplied by absolute values of horizontal and vertical components of the BVD, to obtain the BVD combination list.

Second situation: the horizontal component is always positive and is just a placeholder and the vertical component is negative first, and then is positive, to creat a sign list. Then, the created sign list is multiplied by absolute values of horizontal and vertical components of the BVD, to obtain the BVD combination list.

Second classification example: the BVD is divided into a horizontal component and a vertical component. When the vertical component is zero, only the horizontal component is coded. Therefore a combination list is created only for signs of the horizontal component, which specifically includes the following two situations.

First situation: the vertical component is always positive and is just a placeholder and the horizontal component is positive first, and then is negative, to creat a sign list. Then the created sign list is multiplied by absolute values of horizontal and vertical components of the BVD, to obtain the BVD combination list.

Second situation: the vertical component is always positive and is just a placeholder and the horizontal component is negative first, and then is positive, to creat a sign list. Then, the created sign list is multiplied by absolute values of horizontal and vertical components of the BVD, to obtain the BVD combination list.

Third classification example: the BVD is divided into a horizontal component and a vertical component. When the two components are not zero, the two components need to be coded. Therefore, a BVD list is created for the horizontal component and the vertical component together, which is specifically divided into 24 situations, that is, any arrangement of four combinations of {+1, +1}, {+1, -1}, {-1, +1} and {-1, -1}, which are exemplified below.

A $0^{th}$ position in the list indicates that both horizontal and vertical components are positive, a $1^{st}$ position in the list indicates that the horizontal component is positive and the vertical component is negative, a $2^{nd}$ position in the list indicates that the horizontal component is negative and the vertical component is positive, and a $3^{rd}$ position in the list indicates that both horizontal and vertical components are negative, to creat a sign list. Then the created sign list is multiplied by absolute values of vertical and horizontal components of the BVD, to obtain the BVD combination list.

With respect to performing template prediction according to the BVD combination list (the candidate BVDs) and BVP of the current block to calculate the cost (the first cost value) of each BVD combination (the candidate BVD) in the BVD combination list proposed in operation 204, that is, calculating the cost of the template area, costs of various combinations in the BVD combination list may be calculated by using templates respectively. Specifically, the cost is calculated by using a reconstructed luma pixel at the position of the template of the current block and a reconstructed luma pixel at a position obtained by performing template prediction using the BV obtained by combination of the BVD and BVP of the current block.

It should be noted that in the embodiment of the disclosure, when the cost (the first cost value) is calculated, not only luma may be used, but also chroma, that is, Cb and Cr components, may be used. The disclosure does not make any specific limitation thereto.

When a template (the first template of the current block) is selected, it may determine whether a pixel at the position of the template is available and includes reconstructed luma information, according to availability of a pixel at an adjacent area of the current block. As shown in FIG. 6, templates may be classified into template types such as an upper template, a left template, an upper right template, a lower left template, an upper left template, or the like according to a respective relative position relationship between the templates and the current block. Sizes of different types of templates for different coding blocks may be fixed to be the same or may be different.

For example, the same template size is selected for template sizes of any current coding block (the current block), or different template sizes may be selected according to different sizes of the current coding block, or different template sizes may be selected according to the number of pixels in the current luma coding block.

When the BV of the current block is predicted, a new BV may be generated by using the BVD combination list and BVP of the current block. As shown in FIG. 8, whether the BV is available is determined by using the current block (an available condition is that a reference block pointed to by the BV has been reconstructed and does not go beyond a condition set by the IBC such as a search range, a picture boundary, etc.). If the current BV is available, motion compensation may be performed by using the new BV and the template of the current block, to obtain the template at the corresponding BV. As shown in FIG. 9, horizontal and vertical components of the BVD generate a total of four combined BVDs, and motion compensation at the template is performed respectively. Situations where the template is used when the cost is calculated, include the following several situations.

First situation: both upper and left templates of the current block are present, and both upper and left templates at the corresponding BV are present, at this time both upper and left templates are available.

Second situation: both upper and left templates of the current block are present, and only the upper template at the corresponding BV is present, at this time, there are two methods. First method: the left template at the corresponding BV is not present and is not used directly. That is, only the upper template is used for calculation. Second method: the left template at the corresponding BV is not present, and a leftmost column with a template width in the reference block is used instead of the left template. That is, the upper template and the left template are used for calculation.

Third situation: both upper and left templates of the current block are present, and only the left template at the corresponding BV is present, at this time, there are two methods. First method: the upper template at the corresponding BV is not present and is not used directly. That is, only the left template is used for calculation. Second method: the upper template at the corresponding BV is not present, and an uppermost row with a template height in the reference block is used instead of the upper template. That is, the upper template and the left template are used for calculation.

Fourth situation: only the upper template of the current block is present, at this time, there are three methods. First method: the upper template at the corresponding BV is not present and is not used directly. Second method: the upper template at the corresponding BV is not present, and an uppermost row with a template height in the reference block is used instead of the upper template. Third method: the upper template at the corresponding BV is present and is used directly.

Fifth situation: only the left template of the current block is present, at this time, there are three methods. First method: the left template at the corresponding BV is not present and is not used directly. Second method: the left template at the corresponding BV is not present, and a leftmost column with a template width in the reference block is used instead of the left template. Third method: the left template at the corresponding BV is present and is used directly.

Sixth situation: both upper and left templates of the current block are not present, and the BVD combination in this situation is ignored.

In any of the above six situations, when the reference block pointed to by the BV is not available, the BVD combination in this situation is ignored. When the BVD combination in a certain situation is ignored, cost in this situation is set as a maximum value of a cost evaluation criterion.

When the cost is calculated, that is, when the one or more first cost values are determined, there are multiple cost functions for calculating cost of the template area to be selected,. That is, there may be multiple preset error criteria to be selected. For example, evaluation criteria such as SAD, SATD, SSE, MAD, MAE, MSE, RDO or the like may be selected.

After the cost (the first cost value) of the template area is calculated in operation 204 through the above steps, operation 205 may be performed. The combination list is sorted according to the obtained cost of the template area, that is, the one or more candidate BVDs may be sorted by using the one or more first cost values. Then, the real BVD may be obtained by using the sign prediction index of the BVD and the sorted list (the candidate BVD list of the current block), and motion compensation is performed.

When the combination list is sorted according to the obtained cost of the template area, that is, when the one or more candidate BVDs may be sorted according to the one or more first cost values, a new list OrderedList (the candidate BVD list of the current block) arranged in an ascending (descending) order may be used, or a new list OrderedList arranged in a specific order may be used.

(1) New list OrderedList arranged in an ascending (descending) order.
For example, it may use a sorting method such as bubble sort, selection sort, insertion sort, Shell's sort, merge sort, quick sort, radix sort, heap sort, counting sort, bucket sort, etc.
(2) New list OrderedList arranged in a specific order.

It includes, but is not limited to the following forms. Here, a specific order of arrangement method is described.

First situation: it is assumed that the combination list (the candidate BVDs) is $\{(+BVD_{HOR}, +BVD_{VER}), (+BVD_{HOR}, -BVD_{VER}), (-BVD_{HOR}, -BVD_{VER}), (-BVD_{HOR}, +BVD_{VER})\}$, and a corresponding cost list thereof is $\{Cost(+BVD_{HOR}, +BVD_{VER}), Cost(+BVD_{HOR}, -BVD_{VER}), Cost(-BVD_{HOR}, -BVD_{VER}), Cost(-BVD_{HOR}, +BVD_{VER})\}$. Orders of members in the above two lists may be arranged arbitrarily.

Two arrays posiGrp and negaGrp are defined, the posiGrp stores two BVD combinations with a positive sign on the same component (horizontal), and the negaGrp stores two BVD combinations with a negative sign on the same component (horizontal).

It is assumed that posiGrp = {(+$BVD_{HOR}$, +$BVD_{VER}$), (+$BVD_{HOR}$, -$BVD_{VER}$)}, negaGrp = {(-$BVD_{HOR}$, +$BVD_{VER}$), (-$BVD_{HOR}$, -$BVD_{VER}$)}. Orders of members in the two lists posiGrp and negaGrp may be arranged arbitrarily.

First comparison: size of Cost(+$BVD_{HOR}$, +$BVD_{VER}$) is compared to that of Cost(+$BVD_{HOR}$, -$BVD_{VER}$), posiGrp[0] is set as a BVD combination with a smaller one of the two Cost, and posiGrp[1] is set as a BVD combination with a larger one of the two Cost.

Second comparison: size of Cost(-$BVD_{HOR}$, +$BVD_{VER}$) is compared to that of Cost(-$BVD_{HOR}$, -$BVD_{VER}$), negaGrp[0] is set as a BVD combination with a smaller one of the two Cost, and negaGrp[1] is set as a BVD combination with a larger one of the two Cost.

Third comparison: size of the Cost corresponding to the posiGrp[0] is compared to that of the Cost corresponding to the negaGrp[0].

The final sorting process may be as follows.

If in the third comparison, the Cost corresponding to the posiGrp[0] is less than or equal to the Cost corresponding to the negaGrp[0], the posiGrp[0] is sorted at a $0^{th}$ position in the candidate BVD list OrderedList, the negaGrp[0] is sorted at a $1^{st}$ position in the candidate BVD list OrderedList, the posiGrp[1] is sorted at a $2^{nd}$ position in the candidate BVD list OrderedList, and the negaGrp[1] is sorted at a $3^{rd}$ position in the candidate BVD list OrderedList.

If in the third comparison, the Cost corresponding to the posiGrp[0] is greater than the Cost corresponding to the negaGrp[0], the negaGrp[0] is sorted at the $0^{th}$ position in the candidate BVD list OrderedList, the posiGrp[0] is sorted at the $1^{st}$ position in the candidate BVD list OrderedList, the negaGrp[1] is sorted at the $2^{nd}$ position in the candidate BVD list OrderedList, and the posiGrp[1] is sorted at the $3^{rd}$ position in the candidate BVD list OrderedList.

The candidate BVD at the $0^{th}$ position in the candidate BVD list of the current block is a first candidate BVD in the candidate BVD list, the candidate BVD at the $1^{st}$ position in the candidate BVD list of the current block is a second candidate BVD in the candidate BVD list, the candidate BVD at the $2^{nd}$ position in the candidate BVD list of the current block is a third candidate BVD in the candidate BVD list, and the candidate BVD at the $3^{rd}$ position in the candidate BVD list of the current block is a fourth candidate BVD in the candidate BVD list.

Another implementation of sorting is as follows.

If in the third comparison, the Cost corresponding to the posiGrp[0] is less than or equal to the Cost corresponding to the negaGrp[0], the posiGrp[0] is sorted at a $0^{th}$ position in the candidate BVD list OrderedList, the negaGrp[0] is sorted at a $2^{nd}$ position in the candidate BVD list OrderedList, the posiGrp[1] is sorted at a $1^{st}$ position in the candidate BVD list OrderedList, and the negaGrp[1] is sorted at a $3^{rd}$ position in the candidate BVD list OrderedList.

If in the third comparison, the Cost corresponding to the posiGrp[0] is greater than the Cost corresponding to the negaGrp[0], the negaGrp[0] is sorted at the $0^{th}$ position in the candidate BVD list OrderedList, theposiGrp[0] is sorted at the $2^{nd}$ position in the candidate BVD list OrderedList, the negaGrp[1] is sorted at the $1^{st}$ position in the candidate BVD list OrderedList, and the posiGrp[1] is sorted at the $3^{rd}$ position in the candidate BVD list OrderedList.

Second situation: it is assumed that the combination list is {(0, +$BVD_{VER}$), (0, -$BVD_{VER}$)}, and a corresponding cost list thereof is {Cost(0, +$BVD_{VER}$), Cost(0, -$BVD_{VER}$)}. Orders of members in the above two lists may be arranged arbitrarily.

The sorting process is as follows. Size of Cost(0, +$BVD_{VER}$) is compared to that of Cost(0, -$BVD_{VER}$).

If Cost(0, +$BVD_{VER}$) is less than or equal to Cost(0, -$BVD_{VER}$), (0, +$BVD_{VER}$) is sorted at a $0^{th}$ position in the candidate BVD list OrderedList, and (0, -$BVD_{VER}$) is sorted at a $1^{st}$ position in the candidate BVD list OrderedList.

If Cost(0, +$BVD_{VER}$) is greater than Cost(0, -$BVD_{VER}$), (0, -$BVD_{VER}$) is sorted at the $0^{th}$ position in the candidate BVD list OrderedList, and (0, +$BVD_{VER}$) is sorted at the $1^{st}$ position in the candidate BVD list OrderedList.

Third situation: it is assumed that the combination list is {(+$BVD_{HOR}$, 0), (-$BVD_{HOR}$, 0)}, and a corresponding cost list thereof is {Cost(+$BVD_{HOR}$, 0), Cost(-$BVD_{HOR}$, 0)}. Orders of members in the above two lists may be arranged arbitrarily.

The sorting process is as follows. Size of Cost(+$BVD_{HOR}$, 0) is compared to that of Cost(-$BVD_{HOR}$, 0).

If Cost(+$BVD_{HOR}$, 0) is less than or equal to Cost(-$BVD_{HOR}$, 0), (+$BVD_{HOR}$, 0) is sorted at a $0^{th}$ position in the candidate BVD list OrderedList, and (-$BVD_{HOR}$, 0) is sorted at a $1^{st}$ position in the candidate BVD list OrderedList.

If Cost(+$BVD_{HOR}$, 0) is greater than Cost(-$BVD_{HOR}$, 0), (-$BVD_{HOR}$, 0) is sorted at the $0^{th}$ position in the candidate BVD list OrderedList, and (+$BVD_{HOR}$, 0) is sorted at the $1^{st}$ position in the candidate BVD list OrderedList.

After the combination list is sorted according to the obtained cost of the template area, that is, after the one or more candidate BVDs are sorted according to the one or more first cost values, the obtained sorting result may also be the candidate BVD set of the current block. The one or more candidate BVDs may be sorted according to the one or more first cost values, to determine the candidate BVD set of the current block. Here the candidate BVD set includes at least one candidate BVD.

If both horizontal and vertical components of the BVD are present, that is, if both the absBvdX and the absBvdY are not equal to 0, it is assumed that the combination list is {(+, +), (+, -), (-, -), (-, +)}, and a corresponding cost list thereof is {Cost(+, +), Cost(+, -), Cost(-, -), Cost(-, +)}. Orders of members in the above two lists may be arranged arbitrarily.

Two arrays posiGrp and negaGrp are defined, the posiGrp stores sign combinations of two BVDs with a positive sign on the same component (horizontal), and the negaGrp stores sign combinations of two BVDs with a negative sign on the same component (horizontal).

It is assumed that posiGrp = {(+, +), (+, -)}, negaGrp = {(-, +), (-, -)}. Orders of members in the two lists posiGrp and negaGrp may be arranged arbitrarily.

First comparison: size of Cost(+, +) is compared to that of Cost(+, -), posiGrp[0] is set as a sign combination of a BVD with a smaller one of the two Cost, and posiGrp[1] is set as a sign combination of a BVD with a larger one of the two Cost.

Second comparison: size of Cost(-, +) is compared to that of Cost(-, -), negaGrp[0] is set as a sign combination of a BVD with a smaller one of the two Cost, and negaGrp[1] is set as a sign combination of a BVD with a larger one of the two Cost.

Third comparison: size of the Cost corresponding to the posiGrp[0] is compared to that of the Cost corresponding to the negaGrp[0].

Then, a sign combination of a BVD with a minimum Cost may be determined. That is, the BVD with the minimum cost in the candidate BVD set may be determined.

In a situation where only the vertical component of the BVD is present, it is assumed that the combination list is {(+, +), (+, -)}, and a corresponding cost list thereof is {Cost(+, +), Cost(+, -)}. Orders of members in the above two lists may be arranged arbitrarily. The comparison process is as follows. Size of Cost(+, +) is compared to that of Cost(+, -), and then a sign combination of a BVD with a minimum Cost may be determined. That is, the BVD with the minimum cost in the candidate BVD set may be determined.

In a situation where only the horizontal component of the BVD is present, it is assumed that the combination list is {(+, +), (-, +)}, and a corresponding cost list thereof is {Cost(+, +), Cost(-, +)}. Orders of members in the above two lists may be arranged arbitrarily. The comparison process is as follows. Size of Cost(+, +) is compared to that of Cost(-, +), and then a sign combination of a BVD with a minimum Cost may be determined. That is, the BVD with the minimum cost in the candidate BVD set may be determined.

When the real BVD is determined by using the sign prediction index of the BVD (the BVD sign index information) and the sorted list (the candidate BVD list of the current block), it is divided into three situations to be introduced here, since the sorted list (the candidate BVD list of the current block) is divided into three situations, that is, a situation where only the horizontal component of the BVD is present, a situation where only the vertical component of the BVD is present, and a situation where both horizontal and vertical components of the BVD are present.

There may be two solutions for the new list OrderedList arranged in an ascending (descending) order, one solution is to indirectly obtain a real BVD sign by using a transform list, and another solution is to directly obtain the real BVD sign by using logical reasoning.

When the real BVD sign is indirectly obtained by using the transform list, the decoder needs to transform the BVD combination list OrderedList into an index transform list TransformedList first according to a transform rule.

In a first situation, both horizontal and vertical components of the BVD are present. At this time, the sign prediction index of the BVD has two bits.

It is assumed that the sorted BVD combination list OrderedList is:

Table 62 Sorted BVD combination list OrderedList in case that both horizontal and vertical BVDs are present

| index | horizontal component | vertical component |
|---|---|---|
| 0 | a1 | a2 |
| 1 | b1 | b2 |
| 2 | c1 | c2 |
| 3 | d1 | d2 |

The sorted BVD combination list OrderedList is transformed into the TransformedList (the index transform list) by using the following transform rule.

A BVD combination with a minimum cost after sorting is arranged at a $0^{th}$ position of the list TransformedList. That is, (a1, a2) is arranged at the $0^{th}$ position of the list TransformedList. A BVD combination with the same sign as a1 is arranged at a $2^{nd}$ position of the list TransformedList. That is, it is assumed that b1 has the same sign as a1, (b1, b2) is arranged at the $2^{nd}$ position of the list TransformedList. A BVD combination with a smaller cost and with a sign opposite to that of a1 is arranged at a $1^{st}$ position of the list TransformedList. That is, (c1, c2) is arranged at the $1^{st}$ position of the list TransformedList. A BVD combination with a larger cost and with a sign opposite to that of a1 is arranged at a $3^{rd}$ position of the list TransformedList. That is, (d1, d2) is arranged at the $3^{rd}$ position of the list TransformedList.

Then, the index transform list TransformedList is:

Table 63 Index transform list TransformedList in case that both horizontal and vertical BVDs are present

| index | horizontal component | vertical component |
|---|---|---|
| 0 | a1 | a2 |
| 1 | c1(-a1) | c2 |
| 2 | b1(a1) | b2 |
| 3 | d1(-a1) | d2 |

With respect to the index transform list, the real BVD sign is obtained according to the following rule, the sign prediction index parsed at this time is equal to an index of the leftmost column in the table.

A $0^{th}$ bit of the sign prediction index is parsed.

When the $0^{th}$ bit is 0, a horizontal component of the real BVD is equal to a1. A vertical component thereof is checked. If a $1^{st}$ bit is 0, a vertical component of the real BVD is equal to a2. If the $1^{st}$ bit is 1, the vertical component of the real BVD is equal to -a2.

When the $0^{th}$ bit is 1, the horizontal component of the real BVD is equal to -a1. A vertical component of a candidate BVD with an index of 1 is checked. If a $1^{st}$ bit is 0, a vertical component of the real BVD is equal to c2; if the $1^{st}$ bit is 1, the vertical component of the real BVD is equal to -c2.

In a second situation, only the vertical component of the BVD is present. At this time, the sign prediction index of the BVD has 1 bit.

It is assumed that the sorted BVD combination list OrderedList is:

Table 64 Sorted BVD combination list OrderedList in case that only the vertical BVD is present

| index | horizontal component | vertical component |
|---|---|---|
| 0 | 0 | a2 |
| 1 | 0 | b2(-a2) |

Then, the index transform list TransformedList is the same as the sorted BVD combination list OrderedList.

The index transform list TransformedList is:

Table 65 Index transform list TransformedList in case that only the vertical BVD is present

| index | horizontal component | vertical component |
|---|---|---|
| 0 | 0 | a2 |
| 1 | 0 | b2(-a2) |

With respect to the index transform list, the real BVD sign is obtained according to the following rule, the sign prediction index parsed at this time is equal to an index of the leftmost column in the table.

If a $0^{th}$ bit is 0, a vertical component of the real BVD is a2; otherwise, the vertical component of the real BVD is -a2.

In a third situation, only the horizontal component of the BVD is present. At this time, the sign prediction index of the BVD has 1 bit.

It is assumed that the sorted BVD combination list OrderedList is:

Table 66 Sorted BVD combination list OrderedList in case that only the horizontal BVD is present

| index | horizontal component | vertical component |
|---|---|---|
| 0 | a1 | 0 |
| 1 | b1(-a1) | 0 |

Then, the index transform list TransformedList is the same as the sorted BVD combination list OrderedList.

The index transform list TransformedList is:

Table 67 Index transform list TransformedList in case that only the horizontal BVD is present

| index | horizontal component | vertical component |
|---|---|---|
| 0 | a1 | 0 |
| 1 | b1(-a1) | 0 |

With respect to the index transform list, the real BVD sign is obtained according to the following rule, the sign prediction index parsed at this time is equal to an index of the leftmost column in the table.

If a $0^{th}$ bit is 0, a horizontal component of the real BVD is a1; otherwise, the horizontal component of the real BVD is -a1.

When the real BVD sign is directly obtained by using logical reasoning, in a first situation, both horizontal and vertical components of the BVD are present. At this time, the sign prediction index of the BVD has two bits.

It is assumed that the sorted BVD combination list OrderedList is:

Table 68 Sorted BVD combination list OrderedList in case that both horizontal and vertical BVDs are present

| index | horizontal component | vertical component |
|---|---|---|
| 0 | a1 | a2 |
| 1 | b1 | b2 |
| 2 | c1 | c2 |
| 3 | d1 | d2 |

If a $0^{th}$ bit of the parsed sign prediction index of the BVD is 0, the horizontal component of the real BVD is equal to a1. If the $0^{th}$ bit is 1, the horizontal component of the real BVD is equal to -a1. That is, an opposite number of a1. At this time, it is determined that the horizontal component of the real BVD is e1. Then, the sorted list (the candidate BVD list of the current block) is traversed from index 0. When a BVD with the same horizontal component as the above determined horizontal component of the real BVD appears in the list for the first time, a vertical component of the BVD is checked. It is assumed that the vertical component of the BVD is f2. If a $1^{st}$ bit is 0, the vertical component of the real BVD is equal to f2. If the $1^{st}$ bit is 1, the vertical component of the real BVD is equal to -f2, that is, an opposite number of f2. At this time, it is determined that the vertical component of the real BVD is e2. In this way, the real BVD, that is, a BVD with a horizontal component of e1 and a vertical component of e2, is obtained.

In a second situation, only the vertical component of the BVD is present. At this time, the sign prediction index of the BVD has 1 bit.

It is assumed that the sorted BVD combination list OrderedList is:

Table 69 Sorted BVD combination list OrderedList in case that only the vertical BVD is present

| index | horizontal component | vertical component |
|---|---|---|
| 0 | 0 | a2 |
| 1 | 0 | b2(-a2) |

If a $0^{th}$ bit of the parsed sign prediction index of the BVD is 0, the vertical component of the real BVD is equal to a2. If the $0^{th}$ bit is 1, the vertical component of the real BVD is equal to -a2, that is, an opposite number of a2. At this time, it is determined that the vertical component of the real BVD is e2 and the horizontal component of the real BVD is 0. In this way, the real BVD, that is, a BVD with a horizontal component of 0 and a vertical component of e2, is obtained.

In a third situation, only the horizontal component of the BVD is present. At this time, the sign prediction index of the BVD has 1 bit.

It is assumed that the sorted BVD combination list OrderedList is:

Table 70 Sorted BVD combination list OrderedList in case that only the horizontal BVD is present

| index | horizontal component | vertical component |
|---|---|---|
| 0 | a1 | 0 |
| 1 | b1(-a1) | 0 |

If a 0th bit of the parsed sign prediction index of the BVD is 0, the horizontal component of the real BVD is equal to a1. If the 0th bit is 1, the horizontal component of the real BVD is equal to -a1, that is, an opposite number of a1. At this time, it is determined that the horizontal component of the real BVD is e1 and the vertical component of the real BVD is 0. In this way, the real BVD, that is, a BVD with a horizontal component of e1 and a vertical component of 0, is obtained.

Furthermore, with respect to the new list OrderedList arranged in a specific order, the sorted BVD combination list OrderedList may be directly assigned to the TransformedList.

In the TransformedList, a BVD combination corresponding to the sign prediction index of the BVD is the real BVD.

In a first situation, both horizontal and vertical components of the BVD are present. At this time, the sign prediction index of the BVD has two bits.

It is assumed that the sorted BVD combination list OrderedList is:

Table 71 Sorted BVD combination list OrderedList in case that both horizontal and vertical BVDs are present

| index | horizontal component | vertical component |
|---|---|---|
| 0 | a1 | a2 |
| 1 | b1(-a1) | b2 |
| 2 | c1(a1) | c2 |
| 3 | d1(-a1) | d2 |

Then, the index transform list TransformedList is:

Table 72 Index transform list TransformedList in case that both horizontal and vertical BVDs are present

| index | horizontal component | vertical component |
|---|---|---|
| 0 | a1 | a2 |
| 1 | b1(-a1) | b2 |
| 2 | c1(a1) | c2 |
| 3 | d1(-a1) | d2 |

With respect to the index transform list, the real BVD sign is obtained according to the following rule, the sign prediction index parsed at this time is equal to an index of the leftmost column in the table.

A 0th bit of the sign prediction index is parsed.

When the 0th bit is 0, a horizontal component of the real BVD is equal to a1. A vertical component thereof is checked. If a 1st bit is 0, a vertical component of the real BVD is equal to a2. If the 1st bit is 1, the vertical component of the real BVD is equal to -a2.

When the 0th bit is 1, the horizontal component of the real BVD is equal to -a1. A vertical component of a candidate BVD with an index of 1 is checked. If a 1st bit is 0, a vertical component of the real BVD is equal to c2. If the 1st bit is 1, the vertical component of the real BVD is equal to -c2.

In a second situation, only the vertical component of the BVD is present. At this time, the sign prediction index of the BVD has 1 bit.

It is assumed that the sorted BVD combination list OrderedList is:

Table 73 Sorted BVD combination list OrderedList in case that only the vertical BVD is present

| index | horizontal component | vertical component |
|---|---|---|
| 0 | 0 | a2 |
| 1 | 0 | b2(-a2) |

Then, the index transform list TransformedList is:

Table 74 Index transform list TransformedList in case that only the vertical BVD is present

| index | horizontal component | vertical component |
|---|---|---|
| 0 | 0 | a2 |

(continued)

| index | horizontal component | vertical component |
|---|---|---|
| 1 | 0 | b2(-a2) |

With respect to the index transform list, the real BVD sign is obtained according to the following rule, the sign prediction index parsed at this time is equal to an index of the leftmost column in the table.

If a 0th bit is 0, a vertical component of the real BVD is equal to a2; otherwise, the vertical component of the real BVD is equal to -a2.

In a third situation, only the horizontal component of the BVD is present. At this time, the sign prediction index of the BVD has 1 bit.

It is assumed that the sorted BVD combination list OrderedList is:

Table 75 Sorted BVD combination list OrderedList in case that only the horizontal BVD is present

| index | horizontal component | vertical component |
|---|---|---|
| 0 | a1 | 0 |
| 1 | b1(-a1) | 0 |

Then, the index transform list TransformedList is:

Table 76 Index transform list TransformedList in case that only the horizontal BVD is present

| index | horizontal component | vertical component |
|---|---|---|
| 0 | a1 | 0 |
| 1 | b1(-a1) | 0 |

With respect to the index transform list, the real BVD sign is obtained according to the following rule, the sign prediction index parsed at this time is equal to an index of the leftmost column in the table.

If a 0th bit is 0, a horizontal component of the real BVD is a 1; otherwise, the horizontal component of the real BVD is -a1.

Furthermore, in the embodiment of the disclosure, if the sorting result after the sorting process is the candidate BVD set of the current block, a candidate BVD with a minimum template matching cost is determined after sorting, that is, the BVD with the minimum cost in the candidate BVD set is determined. At this time, if value of *bvsdIdx* is *bit*0 + *bit*1 << 1, where *bit0* represents a sign of the horizontal component, and *bit1* represents a sign of the vertical component, then a minimum BVD sign combination (the BVD with the minimum cost) determines signs of *bit0* and *bit1* when their values are equal to 0, and signs of *bit0* and *bit1* when their values are equal to 1 are opposite to the signs of *bit0* and *bit1* when their values are equal to 0.

It should be noted that in the embodiment of the disclosure, it is assumed that signs of horizontal and vertical components of the real BVD are bvdSign[0] and bvdSign[1] respectively. Here a value of 0 indicates positive, and a value of 1 indicates negative.

First situation: both horizontal and vertical components of the BVD are present.

(1) If in the third comparison, the Cost corresponding to the posiGrp[0] is less than or equal to the Cost corresponding to the negaGrp[0]:

If the 0th bit is 0, bvd_sign[0] = 0. If the 1st bit is 0, bvd_sign[1] = posiGrp[0][1]; if the 1st bit is 1, bvd_sign[1] = posiGrp[1][1].
If the 0th bit is 1, bvd_sign[0] = 1. If the 1st bit is 0, bvd_sign[1] = negaGrp[0][1]; if the 1st bit is 1, bvd_sign[1] = negaGrp[1][1].

(2) If in the third comparison, the Cost corresponding to the posiGrp[0] is greater than the Cost corresponding to the negaGrp[0]:

If the 0th bit is 1, bvd_sign[0] = 0. If the 1st bit is 0, bvd_sign[1] = posiGrp[0][1]; if the 1st bit is 1, bvd_sign[1] = posiGrp[1][1].

If the 0th bit is 0, bvd_sign[0] = 1. If the 1st bit is 0, bvd_sign[1] = negaGrp[0][1]; if the 1st bit is 1, bvd_sign[1] = negaGrp[1][1].

Second situation: only the vertical component of the BVD is present.

(1) If Cost(+, +) is less than or equal to Cost(+, -):

If the 0th bit is 0, bvd_sign[1]=0.
If the 0th bit is 1, bvd_sign[1]=1.

(2) If Cost(+,+) is greater than Cost(+,-):

If the 0th bit is 0, bvd_sign[1]=1.
If the 0th bit is 1, bvd_sign[1]=0.

Third situation: only the horizontal component of the BVD is present.

(1) If Cost(+, +) is less than or equal to Cost(-, +):

If the 0th bit is 0, bvd_sign[0]=0.
If the 0th bit is 1, bvd_sign[0]=1.

(2) If Cost(+,+) is greater than Cost(-,+):

If the 0th bit is 0, bvd_sign[0]=1.
If the 0th bit is 1, bvd_sign[0]=0.

It may be seen that in the above method for determining the BVD of the current block based on the candidate BVD set operations of establishing a list and obtaining the sign prediction index may be ommited, and the real BVD sign may be directly obtained through three comparisons at the decoding side.
Exemplarily, in the embodiment of the disclosure, taking a situation where there are two probability models in the CABAC model as an example, the parsing position is after bvd_coding() as described in (1) of the overall process at the decoding side of the main technical solution, and the overall process at the decoding side is as follows.

| | |
|---|---|
| if( general_merge_flag[ x0 ][y0] ) | |
| ... | |
| else if( CuPredMode[ chType ][ x0 ][ y0 ] = = MODE_IBC ) { | |
| bvd_coding( x0, y0, 0, 0 ) | |
| bvsd_data( x0, y0, 0 ) | |
| bvsd_data( x0, y0, 1 ) | |
| ... | |
| } | |
| bvd_coding( x0, y0, refList, cpIdx ) { | Descriptor |
| abs_bvd_greater0_flag[ 0 ] | ae(v) |
| abs_bvd_greater0_flag[ 1 ] | ae(v) |
| if( abs_bvd_greater0_flag[ 0 ] ){ | |
| abs_bvd_minus1[ 0 ] | ae(v) |
| } | |
| if( abs_bvd_greater0_flag[ 1 ] ){ | |
| abs_mvd_minus1[ 1 ] | ae(v) |
| } | |

(continued)

| | |
|---|---|
| } | |
| bvsd_data( x0, y0, compIdx) { | Descriptor |
| if( abs_bvd_greater0_flag[compIdx]) | |
| bvd_sign_bin[compIdx] | ae(v) |
| } | |

If both abs_bvd_greater0_flag[0] and abs_bvd_greater0_flag[1] are TRUE, bvd_sign_bin[0] is the above-described 0th bit, and bvd_sign_bin[1] is the above-described 1st bit.

If only abs_bvd_greater0_flag[0] is TRUE, bvd_sign_bin[0] is the above-described 0th bit.

If only abs_bvd_greater0_flag[1] is TRUE, bvd_sign_bin[1] is the above-described 0th bit.

An absolute value abs_bvd[compIdx] of the MVD for compIdx=0..1 is derived as follows.

abs_bvd[compIdx]=abs_bvd-greater0-flag[compIdx]*(abs_bvd_minus1[compIdx]+1)

Table 77

| Syntax element | binIdx | | | | | |
|---|---|---|---|---|---|---|
| | 0 | 1 | 2 | 3 | 4 | >=5 |
| bvd_sign_bin[compIdx] | abs_bvd[compIdx]<=Thres?0:1 | na | na | na | na | na |
| compIdx=0...1, indicates the horizontal component or the vertical component. | | | | | | |

The real BVD is derived as follows.

bvd[compIdx]=abs_bvd_greater0_flag[compIdx]*(abs_bvd_minus1[compIdx]+1)*(1-2*bvd_sign[compIdx])

Furthermore, in the embodiment of the disclosure, with respect to the solution of using two arrays to store the candidate BVDs respectively proposed in the above embodiment when the candidate BVD list OrderedList in a specific order is used and the candidate BVD set is determined, in case that both horizontal and vertical components of the BVD are present, orders of the horizontal component and the vertical component may be interchanged.

Exemplarily, in the embodiment of the disclosure, if both horizontal and vertical components of the BVD are present, it is assumed that the combination list is {(+, +), (+, -), (-, -), (-, +)}, and a corresponding cost list thereof is {Cost(+, +), Cost(+, -), Cost(-, -), Cost(-, +)}. Orders of members in the above two lists may be arranged arbitrarily.

Two arrays posiGrp and negaGrp are defined, the posiGrp stores sign combinations of two BVDs with a positive sign on the same component (vertical), and the negaGrp stores sign combinations of two BVDs with a negative sign on the same component (vertical).

It is assumed that posiGrp = {(+, +), (-, +)}, negaGrp = {(+, -), (-, -)}. Orders of members in the two lists posiGrp and negaGrp may be arranged arbitrarily.

First comparison: size of Cost(+, +) is compared to that of Cost(-, +), posiGrp[0] is set as a BVD combination with a smaller one of the two Cost, and posiGrp[1] is set as a BVD combination with a larger one of the two Cost.

Second comparison: size of Cost(+, -) is compared to that of Cost(-, -), negaGrp[0] is set as a a BVD combination with a smaller one of the two Cost, and negaGrp[1] is set as a BVD combination with a larger one of the two Cost.

Third comparison: size of the Cost corresponding to the posiGrp[0] is compared to that of the Cost corresponding to the negaGrp[0].

(1) If in the third comparison, the Cost corresponding to the posiGrp[0] is less than or equal to the Cost corresponding to the negaGrp[0]:

If the 0th bit is 0, bvd_sign[1] = 0. If the 1st bit is 0, bvd_sign[0] = posiGrp[0][0]; if the 1st bit is 1, bvd_sign[0] = posiGrp[1][0].
If the 0th bit is 1, bvd_sign[1] = 1. If the 1st bit is 0, bvd_sign[0] = negaGrp[0][0]; if the 1st bit is 1, bvd_sign[0] = negaGrp[1][0].

(2) If in the third comparison, the Cost corresponding to the posiGrp[0] is greater than the Cost corresponding to the negaGrp[0]:

If the 0th bit is 1, bvd_sign[1] = 0. If the 1st bit is 0, bvd_sign[0] = posiGrp[0][0]; if the 1st bit is 1, bvd_sign[0] = posiGrp[1][0].

If the $0^{th}$ bit is 0, bvd_sign[1] = 1. If the $1^{st}$ bit is 0, bvd_sign[0] = negaGrp[0][0]; if the $1^{st}$ bit is 1, bvd_sign[0] = negaGrp[1][0].

Furthermore, in the embodiment of the disclosure, in case that both horizontal and vertical components of the BVD are present, with respect to an operation process where orders of the horizontal component and the vertical component may be interchanged, orders of the horizontal component and the vertical component may be determined according to a certain criterion, which includes but is not limited to the following method: orders of the horizontal component and the vertical component are determined according to sizes of absolute values of the horizontal component and the vertical component of the BVD or other criteria.

Furthermore, in the embodiment of the disclosure, with respect to the sorted BVD combination list (the candidate BVD list), respective costs thereof may be stored, and then reordering may be performed based on these stored costs. A specific process is as follows. If a cost difference between a candidate and a previous candidate in the list is less than a value $\lambda$, for example |D1-D2|<$\lambda$, it is considered that the candidate is redundant. Here D1 and D2 are costs obtained after first sorting, and $\lambda$ is a Lagrangian parameter used in a Rate Distortion (RD) criterion at a coder side.

Exemplarily, FIG. 11 is a schematic diagram of calculating cost. As shown in FIG. 11, an algorithm for calculating the cost is defined as follows.

(1) A minimum cost difference between a candidate and its previous candidate in all candidates in the list is determined.

If the minimum cost difference is equal to or greater than $\lambda$, it is considered that the list is diverse enough, and re-sorting stops.

If the minimum cost difference is less than $\lambda$, it is considered that the candidate is redundant, and is moved to another position which is a position where the candidate is diverse enough compared to its previous candidate.

(2) The algorithm stops after a finite number of iterations.

It may be seen that the encoding and decoding methods proposed in the embodiment of the disclosure may effectively reduce the bitrate required for transmission of signs of the BVD in the IBC mode. Specifically, a BVD combination list may be created for possible signs of the BVD and the absolute value of the BVD, the combination list is sorted by using a template, and the sign prediction index obtained by using the real sign of the BVD and the sorted list is used to perform CABAC coding. The proposed solution has a higher coding efficiency than the bypass coding, thereby saving the bitrate required for transmission of the BVD in the IBC.

That is, the embodiment of the disclosure proposes a new method for transmitting signs of the BVD in the IBC, similarity between the template and the current CB may be fully used, to effectively sort the BVD sign combination list; furthermore, the CABAC may be used for coding, which has a higher coding efficiency than the bypass coding.

An embodiment of the disclosure provides an encoding method and a decoding method. At the decoding side, a bitstream is decoded, to determine an absolute value of a BVD of a current block and BVD sign index information of the current block; one or more candidate BVDs of the current block is sorted according to the absolute value of the BVD of the current block, to determine a sorting result; the BVD of the current block is determined according to the BVD sign index information and the sorting result; and a reconstruction value of the current block is determined according to the BVD of the current block. At the encoding side, one or more candidate BVDs of a current block is sorted according to an absolute value of a BVD of the current block, to determine a sorting result; BVD sign index information of the current block is determined according to BVD sign information of the current block and the sorting result; and the absolute value of the BVD and the BVD sign index information are written into a bitstream. It may be seen that in the embodiment of the disclosure, the one or more candidate BVDs of the current block may be effectively sorted according to the absolute value of the BVD of the current block, so that the BVD sign index information may be determined and transmitted by using the sorting result during coding, and the BVD sign information of the current block may be parsed by using the sorting result during decoding. Furthermore, the BVD sign information may be coded and decoded by using CABAC coding and decoding technologies, which may effectively reduce the bitrate required for transmission of signs of the BVD in the IBC mode, and thus may improve coding efficiency.

An embodiment of the disclosure proposes an encoding method. The encoding method may be applied to an encoder. FIG. 12 is a first schematic diagram of an encoding method in an embodiment of the disclosure. As shown in FIG. 12, the method for performing decoding processes by the decoder may include the following operations 301 to 303.

In operation 301, one or more candidate BVDs of a current block is sorted according to an absolute value of a BVD of the current block, to determine a sorting result.

In the embodiment of the disclosure, the coder may determine the absolute value of the BVD of the current block first, and then sort, according to the absolute value of the BVD of the current block, the candidate BVDs of the current block, so that the sorting result may be determined.

It may be understood that in the embodiment of the disclosure, the absolute value of the BVD includes an absolute value of a first component absBvdX and an absolute value of a second component absBvdY. That is, the absolute value of the BVD includes an absolute value of a horizontal component and an absolute value of a vertical component. Correspondingly, the BVD of the current block may include a first component candBvdX and a second component candBvdY. Also, a candidate BVD of the current block includes the first component candBvdX and the second component candBvdY, that is, the BVD may include a horizontal component and a vertical component.

Furthermore, in the embodiment of the disclosure, when both the absBvdX and the absBvdY are not 0, it may be determined that a number of bits of the BVD sign index information is 2. When the absBvdX or the absBvdY is 0, it may be determined that the number of bits of the BVD sign index information is 1.

It should be noted that in the embodiment of the disclosure, besides for example the above fixed-length coding method, the BVD sign index information may also be coded by using a variable-length coding method. For example, the BVD sign index information may be coded by using a truncated unary code. That is, binarization process may be achieved by using a truncated binarization. At this time, the number of bits of the BVD sign index information may not necessarily be 2.

That is, in the embodiment of the disclosure, if the BVD sign index information is coded by using a truncated unary code (here, the BVD sign index information may be an index value in a candidate BVD list), a number of bits of the sign index information corresponding to different candidate BVDs is not exactly the same, which is variable-length coding.

Furthermore, in the embodiment of the disclosure, after the absolute value of the BVD of the current block is determined, a BVD combination list may be determined by using the absolute value of the BVD. The BVD combination list includes any number of candidate BVDs of the current block. That is, candidate BVDs of the current block may be determined by using the absolute value of the BVD, which may also be understood as determining an initial set of candidate BVDs of the current block by using the absolute value of the BVD.

It should be noted that in the embodiment of the disclosure, the BVD combination list (the candidate BVDs) may be created for possible signs of the BVD and the absolute value of the BVD, which may include a situation where only the horizontal BVD is present, a situation where only the vertical BVD is present, and a situation where both horizontal and vertical BVDs are present.

Furthermore, in the embodiment of the disclosure, when the BVD combination list (the candidate BVDs) is created, it mainly includes arranging and combining possible signs of the BVD, and multiplying possible horizontal and vertical signs by a horizontal absolute value component and a vertical absolute value component of the BVD respectively.

Exemplarily, in the embodiment of the disclosure, if only the vertical BVD is present, that is, if the absBvdX is equal to 0, the candidate BVDs may be determined according to the absBvdY.

For example, the BVD is divided into a horizontal component and a vertical component. When the horizontal component is zero, only the vertical component is coded. Therefore a combination list is created for signs of the vertical component only, which is specifically divided into the following two situations.

First situation: the horizontal component is always positive and is just a placeholder and the vertical component is positive first and then is negative, to creat a sign list. Then the created sign list is multiplied by absolute values of horizontal and vertical components of the BVD, to obtain the BVD combination list.

$$
\begin{aligned}
&\{ \\
&\quad \{+1, +1\ \}, \\
&\quad \{+1, -1\ \}, \\
&\}; \\
&\{ \\
&\quad \{\ 0, +BVD_{VER}\ \}, \\
&\quad \{\ 0, -BVD_{VER}\ \}, \\
&\}.
\end{aligned}
$$

Second situation: the horizontal component is always positive and is just a placeholder, and the vertical component is negative first, and then is positive, to create a sign list. Then the created sign list is multiplied by absolute values of horizontal and vertical components of the BVD, to obtain the BVD combination list.

$$
\{
$$
$$
\{+1, -1 \},
$$
$$
\{+1, +1 \},
$$
$$
\};
$$
$$
\{
$$
$$
\{ 0, -BVD_{VER} \},
$$
$$
\{ 0, +BVD_{VER} \},
$$
$$
\}.
$$

Exemplarily, in the embodiment of the disclosure, if only the horizontal BVD is present, that is, if the absBvdY is equal to 0, the candidate BVDs may be determined according to the absBvdX.

For example, the BVD is divided into a horizontal component and a vertical component. When the vertical component is zero, only the horizontal component is coded. Therefore a combination list is created for signs of the horizontal component only, which is specifically divided into the following two situations.

First situation: the vertical component is always positive and is just a placeholder, and the horizontal component is positive first, and then is negative, to create a sign list. Then the created sign list is multiplied by absolute values of vertical and horizontal components of the BVD, to obtain the BVD combination list.

$$
\{
$$
$$
\{+1, +1 \},
$$
$$
\{-1, +1 \},
$$
$$
\};
$$
$$
\{
$$
$$
\{ +BVD_{HOR}, 0 \},
$$
$$
\{ -BVD_{HOR}, 0 \},
$$
$$
\}.
$$

Second situation: the vertical component is always positive and is just a placeholder, and the horizontal component is negative first, and then is positive, to create a sign list. Then the created sign list is multiplied by absolute values of vertical and horizontal components of the BVD, to obtain the BVD combination list.

$$
\{
$$
$$
\{-1, +1 \},
$$
$$
\{+1, +1 \},
$$
$$
\};
$$
$$
\{
$$
$$
\{ -BVD_{HOR}, 0 \},
$$
$$
\{ +BVD_{HOR}, 0 \},
$$
$$
\}.
$$

Exemplarily, in the embodiment of the disclosure, if both horizontal and vertical BVDs are present, that is, if both the absBvdX and the absBvdY are not equal to 0, the candidate BVDs may be determined according to the absBvdX and the absBvdY.

For example, the BVD is divided into a horizontal component and a vertical component. When the two components are not zero, the two components need to be coded. Therefore, a BVD list is created for the horizontal component and the vertical component together, which is specifically divided into 24 situations. That is, any arrangement of four combinations of {+1, +1}, {+1, -1}, {-1, +1} and {-1, -1}, which are exemplified below.

A 0th position in the list indicates that both horizontal and vertical components are positive, a 1st position in the list indicates that the horizontal component is positive and the vertical component is negative, a 2nd position in the list indicates that the horizontal component is negative and the vertical component is positive, and a 3rd position in the list indicates that both horizontal and vertical components are negative, to create a sign list, Then the created sign list is multiplied by absolute values of vertical and horizontal components of the BVD, to obtain the BVD combination list.

$$
\{
$$

$$
\{+1, +1 \},
$$

$$
\{+1, -1 \},
$$

$$
\{-1, +1 \},
$$

$$
\{-1, -1 \},
$$

$$
\};
$$

$$
\{
$$

$$
\{ +BVD_{HOR}, +BVD_{VER} \},
$$

$$
\{ +BVD_{HOR}, -BVD_{VER} \},
$$

$$
\{ -BVD_{HOR}, +BVD_{VER} \},
$$

$$
\{ -BVD_{HOR}, -BVD_{VER} \},
$$

$$
\}.
$$

Furthermore, in the embodiment of the disclosure, after the absolute value of the BVD of the current block is determined, the candidate BVDs of the current block may be further sorted according to the absolute value of the BVD, to determine the sorting result.

Furthermore, in the embodiment of the disclosure, when the candidate BVDs of the current block are sorted according to the absolute value of the BVD, to determine the sorting result, one or more first cost values corresponding to one or more candidate BVDs of the current block may be determined first according to the absolute value of the BVD, and then the one or more candidate BVDs may be sorted according to the one or more first cost values, to determine the sorting result.

It may be understood that in the embodiment of the disclosure, the one or more candidate BVDs may include one or more BVDs for which the candBvdX is set to be equal to -absBvdX or absBvdX respectively, and the candBvdY is set to be equal to -absBvdY or absBvdY respectively.

It should be noted that in the embodiment of the disclosure, when the one or more first cost values corresponding to one or more candidate BVDs of the current block are determined according to the absolute value of the BVD of the current block, a first matching template may be determined first according to a candidate BVD, and then a matching error between a first template of the current block and the first matching template may be calculated according to a preset error criterion, to determine a first cost value corresponding to the candidate BVD.

Exemplarily, in the embodiment of the disclosure, when the cost is calculated, that is, when the one or more first cost values are determined, there are multiple cost functions for calculating cost of the template area. That is, there may be multiple preset error criteria to be selected. For example, evaluation criteria such as SAD, SATD, SSE, MAD, MAE, MSE, RDO or the like may be selected. A certain evaluation criterion mentioned in the following contents may be selected from one of the above criteria. Taking an evaluation criterion of the SAD as an example, a calculation formula is as follows:

$$
SAD = \sum_{i=0}^{predTempSizeW-1} \sum_{j=0}^{predTempSizeH-1} |predTemp[i][j] - recTempC[i][j]| \ (1)
$$

*predTempSizeW* is width of a template, *predTempSizeH* is height of the template, *predTemp[i][j]* is a pixel point of the template at the BV, and *recTempC[i][j]* is a pixel point of a template of the current block.

That is, in the embodiment of the disclosure, the preset error criterion may include any one of SAD, SATD, SSE, MAD, MAE, MSE, or RDO.

It may be understood that in the embodiment of the disclosure, the first template includes one or more sample values in an adjacent decoded area of the current block.

Exemplarily, in the embodiment of the disclosure, when a template (the first template of the current block) is selected, it may determine whether a pixel at the position of the template is available and includes reconstructed luma information, according to availability of a pixel at an adjacent area of the current block. As shown in FIG. 6, templates may be classified into template types such as an upper template, a left template, an upper right template, a lower left template, an upper left template, etc. according to a respective relative position relationship between the templates and the current block. Sizes of different types of templates for different CBs may be fixed to be the same or may be different.

For example, the same template size is selected for any current coding block (the current block), or different template sizes may be selected according to different sizes of the current coding block, or different template sizes may be selected according to a number of pixels in the current luma coding block.

It should be noted that in the embodiment of the disclosure, when the first matching template is determined according to the candidate BVD, a BVP of the current block may be determined first and then a candidate BV of the current block may be determined according to the BVP and the candidate BVD. Here the candidate BV is used to indicate a position of the first matching template. Next, the first matching template may be determined according to the candidate BV.

Exemplarily, in the embodiment of the disclosure, it is assumed that the BVP includes a third component currBvpX and a fourth component currBvpY, then when the candidate BV of the current block is determined according to the BVP and the candidate BVD, a 2D vector of the candidate BV may be set as (currBvpX+candBvdX, currBvpY+candBvdY). That is, the 2D vector of the BV is determined according to the first component candBvdX and the second component candBvdY of the candidate BVD, and the third component currBvpX and the fourth component currBvpY of the BVP.

Furthermore, in the embodiment of the disclosure, when the first matching template is determined according to the candidate BV, the first matching template may be determined according to a position of the current point and the 2D vector of the candidate BV.

Exemplarily, in the embodiment of the disclosure, by selecting the position of the current point as a starting point, an area indicated by the 2D vector of the candidate BV, having the same shape and containing the same number of sample values as the first template, may be determined as the first matching template.

When the BV of the current block is predicted, a new BV may be generated by using the BVD combination list and BVP of the current block. As shown in FIG. 8, whether the BV is available is determined by using the current block (an available condition is that a reference block pointed to by the BV has been reconstructed and does not go beyond a condition set by the IBC such as a search range, an picture boundary, etc.). If the current BV is available, motion compensation may be performed by using the new BV and the template of the current block, to obtain the template at the corresponding BV. As shown in FIG. 9, horizontal and vertical components of the BVD generate a total of four combined BVDs, to perform motion compensation at the template respectively. Situations where the template is used when the cost is calculated, include the following several situations.

First situation: both upper and left templates of the current block are present, and both upper and left templates at the corresponding BV are present, at this time, both upper and left templates are available.

Second situation: both upper and left templates of the current block are present, and only the upper template at the corresponding BV is present, at this time, there are two methods. First method: the left template at the corresponding BV is not present and is not used directly. That is, only the upper template is used for calculation. Second method: the left template at the corresponding BV is not present, and a leftmost column with a template width in the reference block is used instead of the left template. That is, the upper template and the left template are used for calculation.

Third situation: both upper and left templates of the current block are present, and only the left template at the corresponding BV is present, at this time, there are two methods. First method: the upper template at the corresponding BV is not present and is not used directly. That is, only the left template is used for calculation. Second method: the upper template at the corresponding BV is not present, and an uppermost row with a template height in the reference block is used instead of the upper template. That is, the upper template and the left template are used for calculation.

Fourth situation: only the upper template of the current block is present, at this time there are three methods. First method: the upper template at the corresponding BV is not present and is not used directly. Second method: the upper template at the corresponding BV is not present, and an uppermost row with a template height in the reference block is used instead of the upper template. Third method: the upper template at the corresponding BV is present and is used directly.

Fifth situation: only the left template of the current block is present, at this time, there are three methods. First method: the left template at the corresponding BV is not present and is not used directly. Second method: the left template at the corresponding BV is not present, and a leftmost column with a template width in the reference block is used instead of the left template. Third method: the left template at the corresponding BV is present and is used directly.

Sixth situation: both upper and left templates of the current block are not present, and the BVD combination in this situation is ignored.

In any of the above six situations, when the reference block pointed to by the BV is not available, the BVD combination in this situation is ignored. When the BVD combination in a certain situation is ignored, cost in this situation is set as a maximum value of a cost evaluation criterion.

Furthermore, in the embodiment of the disclosure, if both of the above two templates may be obtained, at this time, the templates are processed, which includes but is not limited to the following method: weighted fusion is performed on the two templates. A standard of weighted fusion may select a fixed weighting coefficient, or allocate a weighting coefficient according to a sum of absolute values of differences between pixel values of reconstructed luma and predicted luma of the respective templates, etc.

It may be seen that in the embodiment of the disclosure, template prediction may be performed according to the BVD combination list (the candidate BVDs) and BVP of the current block, the cost (the first cost value) of each BVD combination (the candidate BVD) in the BVD combination list may be calculated. That is, the cost of the template area may be calculated. Costs of various combinations in the BVD combination list may be calculated by using templates respectively. Specifically, the cost is calculated by using a reconstructed luma pixel at the position of the template of the current block and a reconstructed luma pixel at a position obtained by performing template prediction using the BV obtained by combination of the BVD and BVP of the current block.

It should be noted that in the embodiment of the disclosure, when the cost (the first cost value) is calculated, not only luma may be used, but also chroma, that is, Cb and Cr components, may be used. The disclosure does not make any specific limitation thereto.

Furthermore, in the embodiment of the disclosure, after the first cost value of each candidate BVD is calculated, the one or more candidate BVDs may be sorted by using the one or more first cost values, and thus the sorting result may be obtained. The sorting result may be a sorted candidate BVD list of the current block, or a candidate BVD set of candidate BVDs with a minimum first cost value determined through sorting. The disclosure does not make any specific limitation thereto.

It should be noted that in the embodiment of the disclosure, if the sorting result is a candidate BVD list of the current block, correspondingly, a process for performing sorting may be sorting, according to the one or more first cost values, the one or more candidate BVDs, to determine the candidate BVD list of the current block. Here the candidate BVD list includes at least one candidate BVD.

Furthermore, in the embodiment of the disclosure, when the one or more candidate BVDs are sorted according to the one or more first cost values, to determine the candidate BVD list of the current block, the one or more candidate BVDs may be sorted in an ascending order of one or more matching errors indicated by the one or more first cost values according to the preset error criterion, to determine the candidate BVD list.

It may be understood that in the embodiment of the disclosure, the sorting result may be a new list OrderedList (the candidate BVD list of the current block) arranged in an ascending (descending) order. For example, a sorting method such as bubble sort, selection sort, insertion sort, Shell's sort, merge sort, quick sort, radix sort, heap sort, counting sort, bucket sort or the like may be used.

Furthermore, in the embodiment of the disclosure, the sorting result may also be a new list OrderedList (the candidate BVD list of the current block) in a specific order.

Exemplarily, in the embodiment of the disclosure, when the one or more candidate BVDs are sorted according to the one or more first cost values, to determine the candidate BVD list of the current block, if both the absBvdX and the absBvdY are not equal to 0, the one or more candidate BVDs are stored into a first array and a second array respectively. Then, based on the one or more first cost values, a first candidate BVD and a second candidate BVD from the first array, and a third candidate BVD and a fourth candidate BVD from the second array are determined. Finally, the first candidate BVD, the second candidate BVD, the third candidate BVD and the fourth candidate BVD may be sorted based on the one or more first cost values, to determine the candidate BVD list.

If both horizontal and vertical components of the BVD are present, that is, if both the absBvdX and the absBvdY are not equal to 0, it is assumed that the combination list (the candidate BVDs) is $\{(+BVD_{HOR}, +BVD_{VER}), (+BVD_{HOR}, -BVD_{VER}), (-BVD_{HOR}, -BVD_{VER}), (-BVD_{HOR}, +BVD_{VER})\}$, and a corresponding cost list thereof is $\{Cost(+BVD_{HOR}, +BVD_{VER}), Cost(+BVD_{HOR}, -BVD_{VER}), Cost(-BVD_{HOR}, -BVD_{VER}), Cost(-BVD_{HOR}, +BVD_{VER})\}$. Orders of members in the above two lists may be arranged arbitrarily.

Two arrays posiGrp and negaGrp are defined. The posiGrp stores two BVD combinations with a positive sign on the same component (horizontal), and the negaGrp stores two BVD combinations with a negative sign on the same component (horizontal).

It is assumed that posiGrp = $\{(+BVD_{HOR}, +BVD_{VER}), (+BVD_{HOR}, -BVD_{VER})\}$, negaGrp = $\{(-BVD_{HOR}, +BVD_{VER}), (-BVD_{HOR}, -BVD_{VER})\}$. Orders of members in the two lists posiGrp and negaGrp may be arranged arbitrarily.

First comparison: size of $Cost(+BVD_{HOR}, +BVD_{VER})$ is compared to that of $Cost(+BVD_{HOR}, -BVD_{VER})$, posiGrp[0] is set as a BVD combination with a smaller one of the two Cost, and posiGrp[1] is set as a BVD combination with a larger one of the two Cost.

Second comparison: size of $Cost(-BVD_{HOR}, +BVD_{VER})$ is compared to that of $Cost(-BVD_{HOR}, -BVD_{VER})$, negaGrp[0] is set as a BVD combination with a smaller one of the two Cost, and negaGrp[1] is set as a BVD combination with a larger one of the two Cost.

Third comparison: size of the Cost corresponding to the posiGrp[0] is compared to that of the Cost corresponding to the negaGrp[0].

It should be noted that in the embodiment of the disclosure, when the first candidate BVD, the second candidate BVD, the third candidate BVD and the fourth candidate BVD are sorted based on the one or more first cost values, to determine the candidate BVD list, an available method is as follows. When a first cost value of the first candidate BVD is less than or equal to a first cost value of the third candidate BVD, the first candidate BVD is set as a first candidate BVD in the candidate BVD list, the third candidate BVD is set as a second candidate BVD in the candidate BVD list, the second candidate BVD is set as a third candidate BVD in the candidate BVD list, and the fourth candidate BVD is set as a fourth candidate BVD in the candidate BVD list. When the first cost value of the first candidate BVD is greater than the first cost value of the third candidate BVD, the third candidate BVD is set as a first candidate BVD in the candidate BVD list, the first candidate BVD is set as a second candidate BVD in the candidate BVD list, the fourth candidate BVD is set as a third candidate BVD in the candidate BVD list, and the second candidate BVD is set as a fourth candidate BVD in the candidate BVD list.

Correspondingly, the final sorting process may be as follows. If in the third comparison, the Cost corresponding to the posiGrp[0] is less than or equal to the Cost corresponding to the negaGrp[0], the posiGrp[0] is sorted at a $0^{th}$ position in the candidate BVD list OrderedList, the negaGrp[0] is sorted at a $1^{st}$ position in the candidate BVD list OrderedList, the posiGrp[1] is sorted at a $2^{nd}$ position in the candidate BVD list OrderedList, and the negaGrp[1] is sorted at a $3^{rd}$ position in the candidate BVD list OrderedList.

If in the third comparison, the Cost corresponding to the posiGrp[0] is greater than the Cost corresponding to the negaGrp[0], the negaGrp[0] is sorted at the $0^{th}$ position in the candidate BVD list OrderedList, the posiGrp[0] is sorted at the $1^{st}$ position in the candidate BVD list OrderedList, the negaGrp[1] is sorted at the $2^{nd}$ position in the candidate BVD list OrderedList, and the posiGrp[1] is sorted at the $3^{rd}$ position in the candidate BVD list OrderedList.

The candidate BVD at the $0^{th}$ position in the candidate BVD list of the current block is the first candidate BVD in the candidate BVD list, the candidate BVD at the $1^{st}$ position in the candidate BVD list of the current block is the second candidate BVD in the candidate BVD list, the candidate BVD at the $2^{nd}$ position in the candidate BVD list of the current block is the third candidate BVD in the candidate BVD list, and the candidate BVD at the $3^{rd}$ position in the candidate BVD list of the current block is the fourth candidate BVD in the candidate BVD list.

It should be noted that in the embodiment of the disclosure, when the first candidate BVD, the second candidate BVD, the third candidate BVD and the fourth candidate BVD are sorted based on the one or more first cost values, to determine the candidate BVD list, another available method is as follows. When a first cost value of the first candidate BVD is less than or equal to a first cost value of the third candidate BVD, the first candidate BVD is set as a first candidate BVD in the candidate BVD list, the second candidate BVD is set as a second candidate BVD in the candidate BVD list, the third candidate BVD is set as a third candidate BVD in the candidate BVD list, and the fourth candidate BVD is set as a fourth candidate BVD in the candidate BVD list. When the first cost value of the first candidate BVD is greater than the first cost value of the third candidate BVD, the third candidate BVD is set as a first candidate BVD in the candidate BVD list, the fourth candidate BVD is set as a second candidate BVD in the candidate BVD list, the first candidate BVD is set as a third candidate BVD in the candidate BVD list, and the second candidate BVD is set as a fourth candidate BVD in the candidate BVD list.

Correspondingly, the final sorting process may be as follows. If in the third comparison, the Cost corresponding to the posiGrp[0] is less than or equal to the Cost corresponding to the negaGrp[0], the posiGrp[0] is sorted at a $0^{th}$ position in the candidate BVD list OrderedList, the negaGrp[0] is sorted at a $2^{nd}$ position in the candidate BVD list OrderedList, the posiGrp[1] is sorted at a $1^{st}$ position in the candidate BVD list OrderedList, and the negaGrp[1] is sorted at a $3^{rd}$ position in the candidate BVD list OrderedList.

If in the third comparison, the Cost corresponding to the posiGrp[0] is greater than the Cost corresponding to the negaGrp[0], the negaGrp[0] is sorted at the $0^{th}$ position in the candidate BVD list OrderedList, the posiGrp[0] is sorted at the $2^{nd}$ position in the candidate BVD list OrderedList, the negaGrp[1] is sorted at the $1^{st}$ position in the candidate BVD list OrderedList, and the posiGrp[1] is sorted at the $3^{rd}$ position in the candidate BVD list OrderedList.

Exemplarily, in the embodiment of the disclosure, when the one or more candidate BVDs are sorted according to the one or more first cost values, to determine the candidate BVD list of the current block, if the absBvdX is equal to 0 or the absBvdY is equal to 0, a candidate BVD with a minimum first cost value in the one or more candidate BVDs is set as a first candidate BVD in the candidate BVD list, and another candidate BVD in the one or more candidate BVDs is set as a second candidate BVD in the candidate BVD list.

If only the horizontal component or the vertical component of the BVD is present, that is, if the absBvdX or the absBvdY is equal to 0, two candidate BVDs may be directly sorted according to first cost values thereof, to generate the candidate BVD list.

In a situation where only the vertical component of the BVD is present, it is assumed that the combination list is {(0, $+BVD_{VER}$), (0, $-BVD_{VER}$)}, and a corresponding cost list thereof is {Cost(0, $+BVD_{VER}$), Cost(0, $-BVD_{VER}$)}. Orders of members in the above two lists may be arranged arbitrarily.

The sorting process is as follows. Size of Cost(0, +BVD$_{VER}$) is compared to that of Cost(0, -BVD$_{VER}$).

If Cost(0, +BVD$_{VER}$) is less than or equal to Cost(0, -BVD$_{VER}$), (0, +BVD$_{VER}$) is sorted at a 0$^{th}$ position in the candidate BVD list OrderedList, and (0, -BVD$_{VER}$) is sorted at a 1$^{st}$ position in the candidate BVD list OrderedList.

If Cost(0, +BVD$_{VER}$) is greater than Cost(0, -BVD$_{VER}$), (0, -BVD$_{VER}$) is sorted at the 0$^{th}$ position in the candidate BVD list OrderedList, and (0, +BVD$_{VER}$) is sorted at the 1$^{st}$ position in the candidate BVD list OrderedList.

In a situation where only the horizontal component of the BVD is present, it is assumed that the combination list is {(+BVD$_{HOR}$, 0), (-BVD$_{HOR}$, 0)}, and a corresponding cost list thereof is {Cost(+BVD$_{HOR}$, 0), Cost(-BVD$_{HOR}$, 0)}. Orders of members in the above two lists may be arranged arbitrarily.

The sorting process is as follows. Size of Cost(+BVD$_{HOR}$, 0) is compared to that of Cost(-BVD$_{HOR}$, 0).

If Cost(+BVD$_{HOR}$, 0) is less than or equal to Cost(-BVD$_{HOR}$, 0), (+BVD$_{HOR}$, 0) is sorted at a 0$^{th}$ position in the candidate BVD list OrderedList, and (-BVD$_{HOR}$, 0) is sorted at a 1$^{st}$ position in the candidate BVD list OrderedList.

If Cost(+BVD$_{HOR}$, 0) is greater than Cost(-BVD$_{HOR}$, 0), (-BVD$_{HOR}$, 0) is sorted at the 0$^{th}$ position in the candidate BVD list OrderedList, and (+BVD$_{HOR}$, 0) is sorted at the 1$^{st}$ position in the candidate BVD list OrderedList.

It should be noted that in the embodiment of the disclosure, if the sorting result is a candidate BVD set of the current block, correspondingly, a process for performing sorting may be sorting, according to the one or more first cost values, the one or more candidate BVDs, to determine the candidate BVD set of the current block. Here the candidate BVD set includes at least one candidate BVD.

Furthermore, when the one or more candidate BVDs are sorted according to the one or more first cost values, to determine the candidate BVD set of the current block, if both the absBvdX and the absBvdY are not equal to 0, the one or more candidate BVDs are stored into a first array and a second array respectively. Then, a fifth candidate BVD with a minimum first cost value in the first array, and a sixth candidate BVD with a minimum first cost value in the second array are determined. Finally, a candidate BVD with a minimum first cost value in the fifth candidate BVD and the sixth candidate BVD may be determined as a BVD with a minimum cost in the candidate BVD set.

If both horizontal and vertical components of the BVD are present, that is, if both the absBvdX and the absBvdY are not equal to 0, it is assumed that the combination list is {(+, +), (+, -), (-, -), (-, +)}, and a corresponding cost list thereof is {Cost(+, +), Cost(+, -), Cost(-, -), Cost(-, +)}. Orders of members in the above two lists may be arranged arbitrarily.

Two arrays posiGrp and negaGrp are defined, the posiGrp stores sign combinations of two BVDs with a positive sign on the same component (horizontal), and the negaGrp stores sign combinations of two BVDs with a negative sign on the same component (horizontal).

It is assumed that posiGrp = {(+, +), (+, -)}, negaGrp = {(-, +), (-, -)}. Orders of members in the two lists posiGrp and negaGrp may be arranged arbitrarily.

First comparison: size of Cost(+, +) is compared to that of Cost(+, -), posiGrp[0] is set as a sign combination of a BVD with a smaller one of the two Cost, and posiGrp[1] is set as a sign combination of a BVD with a larger one of the two Cost.

Second comparison: size of Cost(-, +) is compared to that of Cost(-, -), negaGrp[0] is set as a sign combination of a BVD with a smaller one of the two Cost, and negaGrp[1] is set as a sign combination of a BVD with a larger one of the two Cost.

Third comparison: size of the Cost corresponding to the posiGrp[0] is compared to that of the Cost corresponding to the negaGrp[0].

Then, a sign combination of a BVD with a minimum Cost may be determined. That is, the BVD with the minimum cost in the candidate BVD set may be determined.

If only the horizontal component or the vertical component of the BVD is present, that is, if the absBvdX or the absBvdY is equal to 0, two candidate BVDs may be directly sorted according to first cost values thereof, to determine the BVD with the minimum cost in the candidate BVD set.

Exemplarily, in the embodiment of the disclosure, when the one or more candidate BVDs are sorted according to the one or more first cost values, to determine the candidate BVD set of the current block, if the absBvdX is equal to 0 or the absBvdY is equal to 0, a candidate BVD with a minimum first cost value in the one or more candidate BVDs may be determined as a BVD with a minimum cost in the candidate BVD set.

In a situation where only the vertical component of the BVD is present, it is assumed that the combination list is {(+, +), (+, -)}, and a corresponding cost list thereof is {Cost(+, +), Cost(+, -)}. Orders of members in the above two lists may be arranged arbitrarily. The comparison process is as follows. Size of Cost(+, +) is compared to that of Cost(+, -), and then a sign combination of a BVD with a minimum Cost may be determined, that is, the BVD with the minimum cost in the candidate BVD set may be determined.

In a situation where only the horizontal component of the BVD is present, it is assumed that the combination list is {(+, +), (-, +)}, and a corresponding cost list thereof is {Cost(+, +), Cost(-, +)}. Orders of members in the above two lists may be arranged arbitrarily. The comparison process is as follows. Size of Cost(+, +) is compared to that of Cost(-, +), and then a sign combination of a BVD with a minimum Cost may be determined, that is, the BVD with the minimum cost in the candidate BVD set may be determined.

In operation 302, BVD sign index information of the current block is determined according to BVD sign information of the current block and the sorting result.

In the embodiment of the disclosure, after the candidate BVDs of the current block are sorted according to the absolute value of the BVD of the current block, to determine the sorting result, the BVD sign index information of the current block may be further determined according to the BVD sign information of the current block and the sorting result.

It should be noted that in the embodiment of the disclosure, if the candidate BVD list of the current block obtained by the sorting process is a list in an ascending (descending) order, a transform list may be used, to indirectly obtain the BVD sign index information (the sign prediction index), or logical reasoning may be used directly, to obtain the BVD sign index information.

When the BVD sign index information is indirectly obtained by using the transform list, the BVD combination list OrderedList may be transformed into an index transform list TransformedList first according to a transform rule.

Exemplarily, in the embodiment of the disclosure, the candidate BVD list may be transformed, to determine an index transform list (TransformedList).

Furthermore, in the embodiment of the disclosure, when the BVD sign index information of the current block is determined according to the BVD sign information of the current block and the sorting result, in case that both the absBvdX and the absBvdY are not 0, if a sign of a first component in the BVD sign information of the current block is the same as a sign of a first component of a first candidate BVD in the index transform list, it is determined that a value of a first bit of the BVD sign index information is 0; otherwise, it is determined that a value of the first bit is 1.

Furthermore, in the embodiment of the disclosure, in case of determining that a value of the first bit is 0, when a sign of a second component in the BVD sign information of the current block is the same as a sign of a second component of a first candidate BVD in the index transform list, it is determined that a value of a second bit of the BVD sign index information is 0; otherwise, it is determined that a value of the second bit is 1.

Furthermore, in the embodiment of the disclosure, in case of determining that a value of the first bit is 1, when the sign of the second component in the BVD sign information of the current block is the same as a sign of a second component of a candidate BVD with an index of 1 in the index transform list, it is determined that a value of the second bit of the BVD sign index information is 0; otherwise, it is determined that a value of the second bit is 1.

That is, in the embodiment of the disclosure, in a situation where both horizontal and vertical components of the BVD are present, a sign prediction index of the BVD has two bits.

It is assumed that the sorted BVD combination list OrderedList is:

Table 78 Sorted BVD combination list OrderedList in case that both horizontal and vertical BVDs are present

| index | horizontal component | vertical component |
|-------|---------------------|-------------------|
| 0 | a1 | a2 |
| 1 | b1 | b2 |
| 2 | c1 | c2 |
| 3 | d1 | d2 |

The sorted BVD combination list OrderedList is transformed into the TransformedList (the index transform list) by using the following transform rule.

A BVD combination with a minimum cost after sorting is arranged at a $0^{th}$ position of the list TransformedList, that is, (a1, a2) is arranged at the $0^{th}$ position of the list TransformedList. A BVD combination with the same sign as a1 is arranged at a $2^{nd}$ position of the list TransformedList. That is, it is assumed that b1 has the same sign as a1, (b1, b2) is arranged at the $2^{nd}$ position of the list TransformedList. A BVD combination with a smaller cost and with a sign opposite to that of a1 is arranged at a $1^{st}$ position of the list TransformedList. That is, (c1, c2) is arranged at the $1^{st}$ position of the list TransformedList. A BVD combination with a larger cost and with a sign opposite to that of a1 is arranged at a $3^{rd}$ position of the list TransformedList. That is, (d1, d2) is arranged at the $3^{rd}$ position of the list TransformedList.

Then, the index transform list TransformedList is:

Table 79 Index transform list TransformedList in case that both horizontal and vertical BVDs are present

| index | horizontal component | vertical component |
|-------|---------------------|-------------------|
| 0 | a1 | a2 |
| 1 | c1(-a1) | c2 |
| 2 | b1(a1) | b2 |

(continued)

| index | horizontal component | vertical component |
|---|---|---|
| 3 | d1(-a1) | d2 |

With respect to the index transform list, the sign prediction index is obtained according to the following rule, at this time, the sign prediction index is equal to an index of the leftmost column in the table.

It is assumed that the horizontal component of the real BVD is e1 and the vertical component of the real BVD is e2.

For a candidate BVD with an index of 0:

If the horizontal component a1 of the candidate BVD == e1 is met, a 0th bit is 0. Then the vertical component of the candidate BVD is checked. If the vertical component a2 == e2 is met, a 1st bit is 0; otherwise, the 1st bit is 1.

If the horizontal component a1 == e1 is not met, the 0th bit is 1. Then a vertical component of a candidate BVD with an index of 1 is checked. If the vertical component c2 == e2 is met, the 1st bit is 0; otherwise, the 1st bit is 1.

The sign prediction index is represented as follows:

$$bvsdIdx = bit0 + bit1 \ll 1.$$

For example, it is assumed that the sorted BVD combination list OrderedList is:

Table 80 Example of the sorted BVD combination list OrderedList in case that both horizontal and vertical BVDs are present

| index | horizontal component | vertical component |
|---|---|---|
| 0 | $-BVD_{HOR}$ | $+BVD_{VER}$ |
| 1 | $-BVD_{HOR}$ | $-BVD_{VER}$ |
| 2 | $+BVD_{HOR}$ | $+BVD_{VER}$ |
| 3 | $+BVD_{HOR}$ | $-BVD_{VER}$ |

Then, the sorted BVD combination list OrderedList is transformed into the TransformedList according to the above transform rule.

Table 81 Example of the index transform list TransformedList in case that both horizontal and vertical BVDs are present

| index | horizontal component | vertical component |
|---|---|---|
| 0 | $-BVD_{HOR}$ | $+BVD_{VER}$ |
| 1 | $+BVD_{HOR}$ | $+BVD_{VER}$ |
| 2 | $-BVD_{HOR}$ | $-BVD_{VER}$ |
| 3 | $+BVD_{HOR}$ | $-BVD_{VER}$ |

(1) It is assumed that the horizontal component of the real BVD is $-BVD_{HOR}$, and the vertical component of the real BVD is $+BVD_{VER}$, then:
$bvsdIdx = 0$.

(2) It is assumed that the horizontal component of the real BVD is $-BVD_{HOR}$, and the vertical component of the real BVD is $-BVD_{VER}$, then:
$bvsdIdx = 2$.

(3) It is assumed that the horizontal component of the real BVD is $+BVD_{HOR}$, and the vertical component of the real BVD is $+BVD_{VER}$, then:
$bvsdIdx = 1$.

(4) It is assumed that the horizontal component of the real BVD is $+BVD_{HOR}$, and the vertical component of the real BVD is $-BVD_{VER}$, then:

*bvsdIdx* = 3.

Furthermore, in the embodiment of the disclosure, when the BVD sign index information of the current block is determined according to the BVD sign information of the current block and the sorting result, in case that the absBvdX is 0, if a sign of a second component in the BVD sign information of the current block is the same as a sign of a second component of a first candidate BVD in the index transform list, it is determined that the BVD sign index information is 0; otherwise, it is determined that the BVD sign index information is 1.

That is, if only the vertical component of the BVD is present, the sign prediction index of the BVD has 1 bit.

It is assumed that the sorted BVD combination list OrderedList is:

Table 82 Sorted BVD combination list OrderedList in case that only the vertical BVD is present

| index | horizontal component | vertical component |
|-------|---------------------|--------------------|
| 0 | 0 | a2 |
| 1 | 0 | b2(-a2) |

Then, the index transform list TransformedList is the same as the sorted BVD combination list OrderedList.

The index transform list TransformedList is:

Table 6 Index transform list TransformedList in case that only the vertical BVD is present

| index | horizontal component | vertical component |
|-------|---------------------|--------------------|
| 0 | 0 | a2 |
| 1 | 0 | b2(-a2) |

For the index transform list, the sign prediction index is obtained according to the following rule, at this time the sign prediction index is equal to an index of the leftmost column in the table.

It is assumed that the horizontal component of the real BVD is 0 and the vertical component of the real BVD is e2.

If a2 == e2, a 0$^{th}$ bit is 0; otherwise, the 0$^{th}$ bit is 1.

The sign prediction index is represented as follows:

$$bvsdIdx = bit0.$$

For example, it is assumed that the sorted BVD combination list OrderedList is:

Table 83 Example of the sorted BVD combination list OrderedList in case that only the vertical BVD is present

| index | horizontal component | vertical component |
|-------|---------------------|--------------------|
| 0 | 0 | +BVD$_{VER}$ |
| 1 | 0 | -BVD$_{VER}$ |

The index transform list TransformedList is:

Table 8 Example of the index transform list TransformedList in case that only the vertical BVD is present

| index | horizontal component | vertical component |
|-------|---------------------|--------------------|
| 0 | 0 | +BVD$_{VER}$ |
| 1 | 0 | -BVD$_{VER}$ |

(1) It is assumed that the horizontal component of the real BVD is 0, and the vertical component of the real BVD is +BVD$_{VER}$, then:

$$bvsdIdx = 0.$$

(2) It is assumed that the horizontal component of the real BVD is 0, and the vertical component of the real BVD is -$BVD_{VER}$, then:

$$bvsdIdx = 1.$$

Furthermore, in the embodiment of the disclosure, when the BVD sign index information of the current block is determined according to the BVD sign information of the current block and the sorting result, in case that the absBvdY is 0, if a sign of a first component in the BVD sign information of the current block is the same as a sign of a first component of a first candidate BVD in the index transform list, it is determined that a value of the BVD sign index information is 0; otherwise, it is determined that a value of the BVD sign index information is 1.

That is, if only the horizontal component of the BVD is present, the sign prediction index of the BVD has 1 bit.

It is assumed that the sorted BVD combination list OrderedList is:

Table 84 Sorted BVD combination list OrderedList in case that only the horizontal BVD is present

| index | horizontal component | vertical component |
|---|---|---|
| 0 | a1 | 0 |
| 1 | b1(-a1) | 0 |

Then, the index transform list TransformedList is the same as the sorted BVD combination list OrderedList.

The index transform list TransformedList is:

Table 85 Index transform list TransformedList in case that only the horizontal BVD is present

| index | horizontal component | vertical component |
|---|---|---|
| 0 | a1 | 0 |
| 1 | b1(-a1) | 0 |

For the index transform list, the sign prediction index is obtained according to the following transform rule, at this time, the sign prediction index is equal to an index of the leftmost column in the table.

It is assumed that the horizontal component of the real BVD is e1 and the vertical component of the real BVD is 0.

If a1 == e1, a $0^{th}$ bit is 0; otherwise, the $0^{th}$ bit is 1.

The sign prediction index is represented as follows:

$$bvsdIdx = bit0.$$

For example, it is assumed that the sorted BVD combination list OrderedList is:

Table 86 Example of the sorted BVD combination list OrderedList in case that only the horizontal BVD is present

| index | horizontal component | vertical component |
|---|---|---|
| 0 | +$BVD_{HOR}$ | 0 |
| 1 | -$BVD_{HOR}$ | 0 |

The index transform list TransformedList is:

Table 87 Example of the index transform list TransformedList in case that only the horizontal BVD is present

| index | horizontal component | vertical component |
|---|---|---|
| 0 | +$BVD_{HOR}$ | 0 |
| 1 | -$BVD_{HOR}$ | 0 |

(1) It is assumed that the horizontal component of the real BVD is +$BVD_{HOR}$, and the vertical component of the real BVD is 0, then:

$$bvsdIdx = 0.$$

(2) It is assumed that the horizontal component of the real BVD is -BVD$_{HOR}$, and the vertical component of the real BVD is 0, then:

$$bvsdIdx = 1.$$

Furthermore, when the BVD sign index information is directly obtained by using logical reasoning, if both horizontal and vertical components of the BVD are present, then when the BVD sign index information of the current block is determined according to the BVD sign information of the current block and the sorting result, in case that both the absBvdX and the absBvdY are not 0, if a sign of a first component in the BVD signinformation of the current block is the same as a sign of a first component of a first candidate BVD in the candidate BVD list, it is determined that a value of a first bit of the BVD sign index information is 0, otherwise, it is determined that a value of the first bit is 1. Then, the candidate BVD list is traversed, to determine a first one candidate BVD having the same sign of the first component as the BVD sign information of the current block. Then, when a sign of a second component in the BVD sign information of the current block is the same as a sign of a second component of the first one candidate BVD, it is determined that a value of a second bit of the BVD sign index information is 0, otherwise, it is determined that a value of the second bit is 1.

It may be seen that in a first situation, both horizontal and vertical components of the BVD are present. At this time, the sign prediction index of the BVD has two bits.

It is assumed that the sorted BVD combination list OrderedList is:

Table 88 Sorted BVD combination list OrderedList in case that both horizontal and vertical BVDs are present

| index | horizontal component | vertical component |
|-------|---------------------|--------------------|
| 0 | a1 | a2 |
| 1 | b1 | b2 |
| 2 | c1 | c2 |
| 3 | d1 | d2 |

It is assumed that the horizontal component of the real BVD is e1 and the vertical component of the real BVD is e2.

With respect to a candidate BVD with an index of 0: if the horizontal component a1 == e1 is met, a $0^{th}$ bit is 0; otherwise, the $0^{th}$ bit is 1. Then, the sorted list is traversed from index 0. When a BVD with the same horizontal component as the horizontal component of the real BVD appears in the list for the first time, a vertical component of the BVD is checked. It is assumed that the vertical component of the BVD is f2, if f2 == e2 is met, a $1^{st}$ bit is 0; otherwise, the $1^{st}$ bit is 1. The sign prediction index is represented as follows:

$$bvsdIdx = bit0 + bit1 \ll 1.$$

*bit0* is the $0^{th}$ bit, and *bit*1 is the $1^{st}$ bit.

For example, it is assumed that the sorted BVD combination list OrderedList is:

Table 89 Example of the sorted BVD combination list OrderedList in case that both horizontal and vertical BVDs are present

| index | horizontal component | vertical component |
|-------|---------------------|--------------------|
| 0 | -BVD$_{HOR}$ | +BVD$_{VER}$ |
| 1 | -BVD$_{HOR}$ | -BVD$_{VER}$ |
| 2 | +BVD$_{HOR}$ | +BVD$_{VER}$ |
| 3 | +BVD$_{HOR}$ | -BVD$_{VER}$ |

(1) It is assumed that the horizontal component of the real BVD is -BVD$_{HOR}$ and the vertical component of the real BVD is +BVD$_{VER}$.

Then, the $0^{th}$ bit is 0, and the $1^{st}$ bit is 0. The sign prediction index is represented as follows:

$$bvsdIdx = bit0 + bit1 \ll 1 = 0.$$

(2) It is assumed that the horizontal component of the real BVD is -BVD$_{HOR}$ and the vertical component of the real BVD is -BVD$_{VER}$.

Then, the 0$^{th}$ bit is 0, and the 1$^{st}$ bit is 1. The sign prediction index is represented as follows:

$$bvsdIdx = bit0 + bit1 \ll 1 = 2.$$

(3) It is assumed that the horizontal component of the real BVD is +BVD$_{HOR}$ and the vertical component of the real BVD is +BVD$_{VER}$.

Then, the 0$^{th}$ bit is 1, and the 1$^{st}$ bit is 0. The sign prediction index is represented as follows:

$$bvsdIdx = bit0 + bit1 \ll 1 = 1.$$

(4) It is assumed that the horizontal component of the real BVD is +BVD$_{HOR}$ and the vertical component of the real BVD is -BVD$_{VER}$.

Then, the 0$^{th}$ bit is 1, and the 1$^{st}$ bit is 1. The sign prediction index is represented as follows:

$$bvsdIdx = bit0 + bit1 \ll 1 = 3.$$

Furthermore, when the BVD sign index information is directly obtained by using logical reasoning, if only the vertical component of the BVD is present, then when the BVD sign index information of the current block is determined according to the BVD sign information of the current block and the sorting result, in case that the absBvdX is 0, if a sign of a second component in the BVD sign information of the current block is the same as a sign of a second component of a first candidate BVD in the candidate BVD list, it is determined that a value of the BVD sign index information is 0; otherwise, it is determined that a value of the BVD sign index information is 1.

It may be seen that in a second situation, only the vertical component of the BVD is present. At this time, the sign prediction index of the BVD has 1 bit.

It is assumed that the sorted BVD combination list OrderedList is:

Table 90 Sorted BVD combination list OrderedList in case that only the vertical BVD is present

| index | horizontal component | vertical component |
|---|---|---|
| 0 | 0 | a2 |
| 1 | 0 | b2(-a2) |

It is assumed that the horizontal component of the real BVD is 0 and the vertical component of the real BVD is e2.

If a2 == e2, a 0$^{th}$ bit is 0; otherwise, the 0$^{th}$ bit is 1.

The sign prediction index is represented as follows:

$$bvsdIdx = bit0.$$

For example, it is assumed that the sorted BVD combination list OrderedList is:

Table 91 Example of the sorted BVD combination list OrderedList in case that only the vertical BVD is present

| index | horizontal component | vertical component |
|---|---|---|
| 0 | 0 | +BVD$_{VER}$ |
| 1 | 0 | -BVD$_{VER}$ |

(1) It is assumed that the horizontal component of the real BVD is 0 and the vertical component of the real BVD is +BVD$_{VER}$.

The 0$^{th}$ bit is 0. The sign prediction index is represented as follows:

$$bvsdIdx = bit0 = 0.$$

(2) It is assumed that the horizontal component of the real BVD is 0 and the vertical component of the real BVD is -BVD$_{VER}$.

The 0$^{th}$ bit is 1. The sign prediction index is represented as follows:

$$bvsdIdx = bit0 = 1.$$

Furthermore, when the BVD sign index information is directly obtained by using logical reasoning, if only the horizontal component of the BVD is present, then when the BVD sign index information of the current block is determined according to the BVD sign information of the current block and the sorting result, in case that the absBvdY is 0, if a sign of a first component in the BVD sign information of the current block is the same as a sign of a first component of a first candidate BVD in the candidate BVD list, it is determined that a value of the BVD sign index information is 0; otherwise, it is determined that a value of the BVD sign index information is 1.

It may be seen that in a third situation, only the horizontal component of the BVD is present. At this time, the sign prediction index of the BVD has 1 bit.

It is assumed that the sorted BVD combination list OrderedList is:

Table 92 Sorted BVD combination list OrderedList in case that only the horizontal BVD is present

| index | horizontal component | vertical component |
|-------|---------------------|--------------------|
| 0 | a1 | 0 |
| 1 | b1(-a1) | 0 |

It is assumed that the horizontal component of the real BVD is e1 and the vertical component of the real BVD is 0.

If a1 == e1, a 0$^{th}$ bit is 0; otherwise, the 0$^{th}$ bit is 1.

The sign prediction index is represented as follows:

$$bvsdIdx = bit0.$$

For example, it is assumed that the sorted BVD combination list OrderedList is:

Table 93 Example of the sorted BVD combination list OrderedList in case that only the horizontal BVD is present

| index | horizontal component | vertical component |
|-------|---------------------|--------------------|
| 0 | +BVD$_{HOR}$ | 0 |
| 1 | -BVD$_{HOR}$ | 0 |

(1) It is assumed that the horizontal component of the real BVD is +BVD$_{HOR}$ and the vertical component of the real BVD is 0.

The 0$^{th}$ bit is 0. The sign prediction index is represented as follows:

$$bvsdIdx = bit0 = 0.$$

(2) It is assumed that the horizontal component of the real BVD is -BVD$_{HOR}$ and the vertical component of the real BVD is 0.

The 0$^{th}$ bit is 1. The sign prediction index is represented as follows:

$$bvsdIdx = bit0 = 1.$$

It should be noted that in the embodiment of the disclosure, if the candidate BVD list of the current block obtained by the sorting process is a list in a specific order, an index of a list of candidate BVDs with signs respectively identical to signs of horizontal and vertical components of the real BVD may be directly determined as the BVD sign index information (the sign prediction index) of the BVD. The sorted BVD combination list OrderedList may be directly assigned to the TransformedList. That is, the candidate BVD list OrderedList is the same as the index transform list TransformedList.

It may be understood that in the embodiment of the disclosure, if the candidate BVD list of the current block obtained by the sorting process is a list in a specific order, then two components corresponding to the BVD may be directly coded together at the encoding side, and correspondingly, the two components corresponding to the BVD may be directly determined together through the BVD sign index information at the decoding side.

That is, in the embodiment of the disclosure, through the BVD sign index information obtained by decoding, the candidate BVD indicated by the BVD sign index information may be directly determined from the candidat e BVD list.

Correspondingly, in the embodiment of the disclosure, with respect to a solution in which horizontal and vertical components are obtained together after a combination index (the BVD sign index information) is parsed at the decoding side, the encoder may determine a transmitted index (the BVD sign index information) by using a traversal method at the encoding side.

It may be understood that in the embodiment of the disclosure, with respect to the candidate BVD list determined by sorting in an ascending order of one or more matching errors indicated by the one or more first cost values, that is, in case that the candidate BVD list of the current block is a list in an ascending (descending) order, the BVD sign index information may also be directly set according to an index value of a candidate BVD having the same BVD sign information as that of the current block in the list.

Exemplarily, in the embodiment of the disclosure, when the BVD sign index information of the current block is determined according to the BVD sign information of the current block and the sorting result, a candidate BVD having the same BVD sign information as that of the current block may be determined from the candidate BVD list, and then the BVD sign index information is set according to an index value of the candidate BVD.

In a first situation, both horizontal and vertical components of the BVD are present. At this time, the sign prediction index of the BVD has two bits.

It is assumed that the sorted BVD combination list OrderedList is:

Table 94 Sorted BVD combination list OrderedList in case that both horizontal and vertical BVDs are present

| index | horizontal component | vertical component |
|---|---|---|
| 0 | a1 | a2 |
| 1 | b1(-a1) | b2 |
| 2 | c1(a1) | c2 |
| 3 | d1(-a1) | d2 |

Then, the index transform list TransformedList is:

Table 95 Index transform list TransformedList in case that both horizontal and vertical BVDs are present

| Index | horizontal component | vertical component |
|---|---|---|
| 0 | a1 | a2 |
| 1 | b1(-a1) | b2 |
| 2 | c1(a1) | c2 |
| 3 | d1(-a1) | d2 |

With respect to the index transform list, the sign prediction index is obtained according to the following rule, at this time, the sign prediction index is equal to an index of the leftmost column in the table.

It is assumed that the horizontal component of the real BVD is e1 and the vertical component of the real BVD is e2.

With respect to a candidate BVD with an index of 0:

If the horizontal component a1 == e1 is met, a $0^{th}$ bit is 0, and then the vertical component of the candidate BVD is checked. If the vertical component a2 == e2 is met, a $1^{st}$ bit is 0; otherwise, the $1^{st}$ bit is 1.

If the horizontal component a1 == e1 is not met, the $0^{th}$ bit is 1, and then a vertical component of a candidate BVD with an index of 1 is checked. If the vertical component c2 == e2 is met, the $1^{st}$ bit is 0; otherwise, the $1^{st}$ bit is 1.

The sign prediction index is represented as follows:

$$bvsdIdx = bit0 + bit1 \ll 1.$$

For example, it is assumed that the sorted BVD combination list OrderedList is:

Table 96 Example of the sorted BVD combination list OrderedList in case that both horizontal and vertical BVDs are present

| index | horizontal component | vertical component |
|---|---|---|
| 0 | $-BVD_{HOR}$ | $+BVD_{VER}$ |
| 1 | $+BVD_{HOR}$ | $+BVD_{VER}$ |
| 2 | $-BVD_{HOR}$ | $-BVD_{HOR}$ |
| 3 | $+BVD_{HOR}$ | $-BVD_{VER}$ |

Then, the TransformedList is:

Table 97 Example of the index transform list TransformedList in case that both horizontal and vertical BVDs are present

| index | horizontal component | vertical component |
|---|---|---|
| 0 | $-BVD_{HOR}$ | $+BVD_{VER}$ |
| 1 | $+BVD_{HOR}$ | $+BVD_{VER}$ |
| 2 | $-BVD_{HOR}$ | $-BVD_{HOR}$ |
| 3 | $+BVD_{HOR}$ | $-BVD_{VER}$ |

(1) It is assumed that the horizontal component of the real BVD is $-BVD_{HOR}$, and the vertical component of the real BVD is $+BVD_{VER}$, then:

$$bvsdIdx = 0.$$

(2) It is assumed that the horizontal component of the real BVD is $-BVD_{HOR}$, and the vertical component of the real BVD is $-BVD_{VER}$, then:

$$bvsdIdx = 2.$$

(3) It is assumed that the horizontal component of the real BVD is $+BVD_{HOR}$, and the vertical component of the real BVD is $+BVD_{VER}$, then:

$$bvsdIdx = 1.$$

(4) It is assumed that the horizontal component of the real BVD is $+BVD_{HOR}$, and the vertical component of the real BVD is $-BVD_{VER}$, then:

$$bvsdIdx = 3.$$

In a second situation, only the vertical component of the BVD is present. At this time, the sign prediction index of the BVD has 1 bit.

It is assumed that the sorted BVD combination list OrderedList is:

Table 98 Sorted BVD combination list OrderedList in case that only the vertical BVD is present

| index | horizontal component | vertical component |
|---|---|---|
| 0 | 0 | a2 |
| 1 | 0 | b2(-a2) |

Then, the index transform list TransformedList is:

Table 99 Index transform list TransformedList in case that only the vertical BVD is present

| index | horizontal component | vertical component |
|---|---|---|
| 0 | 0 | a2 |
| 1 | 0 | b2(-a2) |

With respect to the index transform list, the sign prediction index is obtained according to the following rule, at this time, the sign prediction index is equal to an index of the leftmost column in the table.

It is assumed that the horizontal component of the real BVD is 0 and the vertical component of the real BVD is e2.

If a2 == e2, a $0^{th}$ bit is 0; otherwise, the $0^{th}$ bit is 1.

The sign prediction index is represented as follows:

$$bvsdIdx = bit0.$$

For example, it is assumed that the sorted BVD combination list OrderedList is:

Table 100 Example of the sorted BVD combination list OrderedList in case that only the vertical BVD is present

| index | horizontal component | vertical component |
|---|---|---|
| 0 | 0 | $+BVD_{VER}$ |
| 1 | 0 | $-BVD_{VER}$ |

The TransformedList is:

Table 101 Example of the index transform list TransformedList in case that only the vertical BVD is present

| index | horizontal component | vertical component |
|---|---|---|
| 0 | 0 | $+BVD_{VER}$ |
| 1 | 0 | $-BVD_{VER}$ |

(1) It is assumed that the horizontal component of the real BVD is 0, and the vertical component of the real BVD is $+BVD_{VER}$, then:

$$bvsdIdx = 0.$$

(2) It is assumed that the horizontal component of the real BVD is 0, and the vertical component of the real BVD is $-BVD_{VER}$, then:

$$bvsdIdx = 1.$$

In a third situation, only the horizontal component of the BVD is present. At this time, the sign prediction index of the BVD has 1 bit.

It is assumed that the sorted BVD combination list OrderedList is:

Table 102 Sorted BVD combination list OrderedList in case that only the horizontal BVD is present

| index | horizontal component | vertical component |
|---|---|---|
| 0 | a1 | 0 |
| 1 | b1(-a1) | 0 |

Then, the index transform list TransformedList is:

Table 103 Index transform list TransformedList in case that only the horizontal BVD is present

| index | horizontal component | vertical component |
| --- | --- | --- |
| 0 | a1 | 0 |
| 1 | b1(-a1) | 0 |

With respect to the index transform list, the sign prediction index is obtained according to the following transform rule, at this time, the sign prediction index is equal to an index of the leftmost column in the table.

It is assumed that the horizontal component of the real BVD is e1 and the vertical component of the real BVD is 0.

If a1 == e1, a $0^{th}$ bit is 0; otherwise, the $0^{th}$ bit is 1.

The sign prediction index is represented as follows:

$$bvsdIdx = bit0.$$

For example, it is assumed that the sorted BVD combination list OrderedList is:

Table 104 Example of the sorted BVD combination list OrderedList in case that only the horizontal BVD is present

| index | horizontal component | vertical component |
| --- | --- | --- |
| 0 | $+BVD_{HOR}$ | 0 |
| 1 | $-BVD_{HOR}$ | 0 |

The TransformedList is:

Table 105 Example of the index transform list TransformedList in case that only the horizontal BVD is present

| index | horizontal component | vertical component |
| --- | --- | --- |
| 0 | $+BVD_{HOR}$ | 0 |
| 1 | $-BVD_{HOR}$ | 0 |

(1) It is assumed that the horizontal component of the real BVD is $+BVD_{HOR}$, and the vertical component of the real BVD is 0, then:

$$bvsdIdx = 0.$$

(2) It is assumed that the horizontal component of the real BVD is $-BVD_{HOR}$, and the vertical component of the real BVD is 0, then:

$$bvsdIdx = 1.$$

It should be noted that in the embodiment of the disclosure, if the sorting result after the sorting process is the candidate BVD set of the current block, a candidate BVD with a minimum template matching cost is determined after sorting, that is, the BVD with the minimum cost in the candidate BVD set is determined. At this time, if value of $bvsdIdx$ is $bit0$ + $bit1$ « 1, that is, $bit0$ represents a sign of the horizontal component, and $bit1$ represents a sign of the vertical component, then a minimum BVD sign combination (the BVD with the minimum cost) determines signs of $bit0$ and $bit1$ when their values are equal to 0, and signs of $bit0$ and $bit1$ when their values are equal to 1 are opposite to the signs of $bit0$ and $bit1$ when their values are equal to 0.

Furthermore, in the embodiment of the disclosure, when the BVD sign index information of the current block is determined according to the BVD sign information of the current block and the sorting result, in case that both the absBvdX and the absBvdY are not 0, if a sign of a first component in the BVD sign information of the current block is the same as a sign of a first component of a BVD with a minimum cost in the candidate BVD set, it is determined that a value of a first bit of the BVD sign index information is 0, and then a second bit of the BVD sign index information of the current block may be determined according to the BVD with the minimum cost in the candidate BVD set.

Furthermore, in the embodiment of the disclosure, when the BVD sign index information of the current block is determined according to the BVD sign information of the current block and the sorting result, in case that both the absBvdX and the absBvdY are not 0, if a sign of a first component in the BVD sign information of the current block is different from a sign of a first component of a BVD with a minimum cost in the candidate BVD set, it is determined that a value of a first bit of the BVD sign index information is 1, and then a second bit of the BVD sign index information of the current block may be determined according to a BVD with a minimum cost in another array other than an array, where the BVD with the minimum cost is located, in the candidate BVD set.

It should be noted that in the embodiment of the disclosure, when the second bit of the BVD sign index information of the current block is determined according to the BVD with the minimum cost in the candidate BVD set, if a sign of a second component in the BVD sign information of the current block is the same as a sign of a second component of the BVD with the minimum cost in the candidate BVD set, it is determined that a value of a second bit of the BVD sign index information is 0; and if the sign of the second component in the BVD sign information of the current block is different from the sign of the second component of the BVD with the minimum cost in the candidate BVD set, it is determined that a value of the second bit of the BVD sign index information is 1.

It should be noted that in the embodiment of the disclosure, when the second bit of the BVD sign index information of the current block is determined according to the BVD with the minimum cost in another array other than the array, where the BVD with the minimum cost is located, in the candidate BVD set, if a sign of a second component in the BVD sign information of the current block is the same as a sign of a second component of the BVD with the minimum cost in another array, it is determined that a value of a second bit of the BVD sign index information is 0; and if the sign of the second component in the BVD sign information of the current block is different from the sign of the second component of the BVD with the minimum cost in another array, it is determined that a value of the second bit of the BVD sign index information is 1.

It should be noted that in the embodiment of the disclosure, it is assumed that signs of horizontal and vertical components of the real BVD are bvdSign[0] and bvdSign[1] respectively. Here a value of 0 indicates positive, and a value of 1 indicates negative.

Exemplarily, in the embodiment of the disclosure, if both horizontal and vertical components of the BVD are present, two possible situations for the BVD with the minimum cost in the candidate BVD set determined after sorting are as follows.

(1) If in the third comparison, the Cost corresponding to the posiGrp[0] is less than or equal to the Cost corresponding to the negaGrp[0]:

If bvd_sign[0] = 0, a $0^{th}$ bit is 0. Then, it is determined whether bvd_sign[1] is equal to posiGrp[0][1]. If bvd_sign[1] is equal to posiGrp[0][1], a $1^{st}$ bit is 0; otherwise, the $1^{st}$ bit is 1.
If bvd_sign[0] = 1, the $0^{th}$ bit is 1. Then, it is determined whether bvd_sign[1] is equal to negaGrp[0][1]. If bvd_sign[1] is equal to negaGrp[0] [1], the $1^{st}$ bit is 0; otherwise, the $1^{st}$ bit is 1.

(2) If in the third comparison, the Cost corresponding to the posiGrp[0] is greater than the Cost corresponding to the negaGrp[0]:

If bvd_sign[0] = 0, the $0^{th}$ bit is 1. Then, it is determined whether bvd_sign[1] is equal to posiGrp[0][1]. If bvd_sign[1] is equal to posiGrp[0][1], the $1^{st}$ bit is 0; otherwise, the $1^{st}$ bit is 1.
If bvd_sign[0] = 1, the $0^{th}$ bit is 0. Then, it is determined whether bvd_sign[1] is equal to negaGrp[0][1]. If bvd_sign[1] is equal to negaGrp[0] [1], the $1^{st}$ bit is 0; otherwise, the $1^{st}$ bit is 1.

Furthermore, in the embodiment of the disclosure, when the BVD sign index information of the current block is determined according to the BVD sign information of the current block and the sorting result, in case that the absBvdX is 0, when a sign of a second component in the BVD sign information of the current block is the same as a sign of a second component of a BVD with a minimum cost in the candidate BVD set, it is determined that a value of the BVD sign index information is 0; otherwise, it is determined that a value of the BVD sign index information is 1.

Exemplarily, in the embodiment of the disclosure, if only the vertical component of the BVD is present, two possible situations for the BVD with the minimum cost in the candidate BVD set determined after sorting are as follows.

(1) If Cost(+, +) is less than or equal to Cost(+, -):

If bvd_sign[1=0, the $0^{th}$ bit is 0.
If bvd_sign[1]=1, the $0^{th}$ bit is 1.

(2) If Cost(+, +) is greater than Cost(+, -):

If bvd_sign[1]=0, the $0^{th}$ bit is 1.

If bvd_sign[1]=1, the $0^{th}$ bit is 0.

Furthermore, in the embodiment of the disclosure, when the BVD sign index information of the current block is determined according to the BVD sign information of the current block and the sorting result, in case that the absBvdY is 0, if a sign of a first component in the BVD sign information of the current block is the same as a sign of a first component of a BVD with a minimum cost in the candidate BVD set, it is determined that a value of the BVD sign index information is 0; otherwise, it is determined that a value of the BVD sign index information is 1.

Exemplarily, in the embodiment of the disclosure, if only the horizontal component of the BVD is present, two possible situations for the BVD with the minimum cost in the candidate BVD set determined after sorting are as follows.

(1) If Cost(+, +) is less than or equal to Cost(-, +):

If bvd_sign[0]=0, the $0^{th}$ bit is 0.
If bvd_sign[0]=1, the $0^{th}$ bit is 1.

(2) If Cost(+, +) is greater than Cost(-, +):

If bvd_sign[0]=0, the $0^{th}$ bit is 1.
If bvd_sign[0]=1, the $0^{th}$ bit is 0.

It may be seen that in the above method for determining the BVD sign index information of the current block based on the candidate BVD set, operations of establishing a list and obtaining the sign prediction index may be ommited. In a situation where both horizontal and vertical components of the BVD are present, *bit0* and *bit*1 to be coded may be directly obtained through three comparisons at the encoding side, which is less complex.

In operation 303, the absolute value of the BVD and the BVD sign index information are written into a bitstream.

In the embodiment of the disclosure, after the BVD sign index information of the current block is determined according to the BVD sign information of the current block and the sorting result, an absolute value of the BVD and the BVD sign index information may be written into the bitstream.

Furthermore, in the embodiment of the disclosure, the absolute value of the BVD and the BVD sign index information may be coded by using CABAC. The absolute value of the BVD and the BVD sign index information may also be coded by using a bypass mode.

It should be noted that in the embodiment of the disclosure, the absolute value of the BVD and the BVD sign index information (the sign prediction index) need to be written into the bitstream. The BVD sign index information (the sign prediction index) may be binarized first.

Exemplarily, in the embodiment of the disclosure, when the sign prediction index has two bits, the sign prediction index is coded as 00B when it is 0; the sign prediction index is coded as 01B when it is 1; the sign prediction index is coded as 10B when it is 2; the sign prediction index is coded as 11B when it is 3. When the sign prediction index has 1 bit, the sign prediction index is coded as 0B when it is 0; the sign prediction index is coded as 1B when it is 1.

Then, each bit of the above transformed binary number may be coded by using CABAC or bypass, that is, the sign prediction index of the BVD is written into the bitstream.

With reference to a context model of the CABAC used for the sign prediction index, a single probability model or multiple probability models may be used, which includes but is not limited to different probability models distinguished according to the absolute value of the horizontal component or the vertical component of the BVD, a sum of the horizontal component and the vertical component of the BVD, or a difference between the horizontal component and the vertical component of the BVD, etc.

For example, different probability models are used for the bits of the sign prediction index of the BVD according to the size of the absolute value of the horizontal component or the vertical component of the BVD.

(1) It is assumed that a threshold for classifying the absolute value of the horizontal component or the vertical component of the BVD is set as THRO, and there are a total of two probability models, then when the sign prediction index has two bits, for a $0^{th}$ bit of the binary number, the two probability models are distinguished according to a size relationship between the absolute value of the horizontal component of the BVD and THRO. That is, when the absolute value of the horizontal component of the BVD is less than or equal to THRO, a first probability model is used, and when the absolute value of the horizontal component of the BVD is greater than THRO, a second probability model is used. Then, for a $1^{st}$ bit of the above binary number, the two probability models are also distinguished according to a size relationship between the absolute value of the vertical component of the BVD and THRO. That is, when the absolute value of the vertical component of the BVD is less than or equal to THRO, the first probability model is used, and when the absolute value of the vertical component of the BVD is greater than THRO, the second

70

probability model is used.

(2) It is assumed that a threshold for classifying the absolute value of the horizontal component of the BVD is set as THRO, a threshold for classifying the absolute value of the vertical component of the BVD is set as THR1, and there are a total of four probability models. When the sign prediction index has two bits, for a $0^{th}$ bit of the binary number, different probability models are distinguished according to a size relationship between the absolute value of the horizontal component of the BVD and THRO. That is, when the absolute value of the horizontal component of the BVD is less than or equal to THRO, a first probability model is used, and when the absolute value of the horizontal component of the BVD is greater than THRO, a second probability model is used. Then, for a $1^{st}$ bit of the above binary number, different probability models are also distinguished according to a size relationship between the absolute value of the vertical component of the BVD and THR1. That is, when the absolute value of the vertical component of the BVD is less than or equal to THR1, a third probability model is used, and when the absolute value of the vertical component of the BVD is greater than THR1, a fourth probability model is used.

In summary, according to the encoding method proposed in the above operations 301 to 303, a BVD combination list is created for possible signs of the BVD and the absolute value of the BVD, the combination list is sorted by using a template, and the sign prediction index is obtained by using the real BVD sign and the sorted list, to perform CABAC coding, which has a higher coding efficiency than the bypass coding, thereby saving the bitrate required for transmission of the BVD in the IBC.

It should be noted that according to the encoding method proposed in the embodiment of the disclosure, on one hand, similarity between the template and the current CB may be fully used, to effectively sort the BVD sign combination list; on the other hand, the CABAC may be used for coding, which has a higher coding efficiency than the bypass coding.

Furthermore, according to the encoding method proposed in the embodiment of the disclosure, with respect to an encoder, input of coding a BVD may be the absolute value of the BVD and real information of the sign during coding, and output of coding the BVD may be bitstream information of the absolute value of the BVD and the sign (the BVD sign index information).

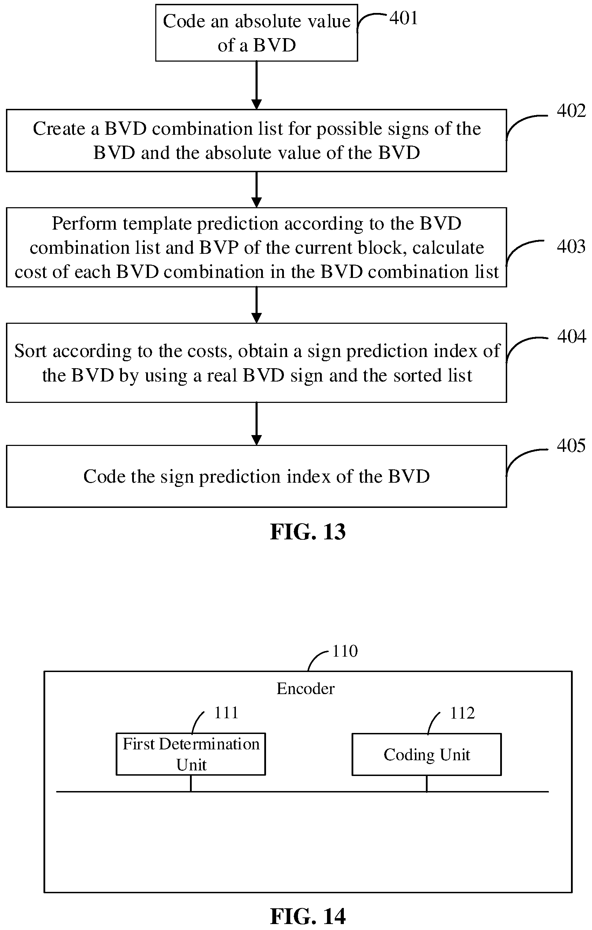

FIG. 13 is a second schematic diagram of an encoding method in an embodiment of the disclosure. As shown in FIG. 13, processes of coding the BVD include coding an absolute value of a BVD (operation 401), determining candidate BVDs of the current block by creating a BVD combination list for possible signs of the BVD and the absolute value of the BVD (operation 402), performing template prediction according to the BVD combination list and BVP of the current block, calculating cost of each BVD combination in the BVD combination list, that is, calculating cost of a template area for the combination list (calculating a first cost value) (operation 403), sorting the list, and obtaining a sign prediction index (BVD sign index information) by using a real BVD sign and the sorted list (operation 404), and finally coding the sign prediction index (BVD sign index information) of the BVD (operation 405).

It should be noted that in the embodiment of the disclosure, when the cost (the first cost value) is calculated, not only luma may be used, but also chroma, that is, Cb and Cr components, may be used. The disclosure does not make any specific limitation thereto.

Furthermore, in the embodiment of the disclosure, when the cost is calculated, if both of two templates may be obtained, at this time, the templates are processed, which includes but is not limited to the following method: weighted fusion is performed on the two templates. A standard of weighted fusion may select a fixed weighting coefficient, or allocate a weighting coefficient according to a sum of absolute values of differences between pixel values of reconstructed luma and predicted luma of the templates, etc.

Furthermore, in the embodiment of the disclosure, with respect to the sorted BVD combination list (the candidate BVD list), respective costs thereof may be stored, and then reordering may be performed based on these stored costs. A specific process is as follows. If a cost difference between a candidate and a previous candidate in the list is less than a value $\lambda$, for example $|D1-D2|<\lambda$, it is considered that the candidate is redundant. Here D1 and D2 are costs obtained after first sorting, and $\lambda$ is a Lagrangian parameter used in a RD criterion at a coder side.

Exemplarily, an algorithm for calculating the cost is defined as follows.

(1) A minimum cost difference between a candidate and its previous candidates in all candidates in the list is determined.

If the minimum cost difference is equal to or greater than $\lambda$, it is considered that the list is diverse enough, and re-sorting stops.

If the minimum cost difference is less than $\lambda$, it is considered that the candidate is redundant, and is moved to another position which is a position where the candidate is diverse enough compared to its previous candidate.

(2) The algorithm stops after a finite number of iterations.

Furthermore, in the embodiment of the disclosure, with respect to the solution of using two arrays to store the candidate BVDs respectively proposed in the above embodiment when the candidate BVD list OrderedList in a specific order is used and the candidate BVD set is determined, in case that both horizontal and vertical components of the BVD are present, orders of the horizontal component and the vertical component may be interchanged.

Exemplarily, in the embodiment of the disclosure, it is assumed that the combination list is {(+, +), (+, -), (-, -), (-, +)}, and a corresponding cost list thereof is {Cost(+, +), Cost(+, -), Cost(-, -), Cost(-, +)}. Orders of members in the above two lists may be arranged arbitrarily.

Two arrays posiGrp and negaGrp are defined, the posiGrp stores sign combinations of two BVDs with a positive sign on the same component (vertical), and the negaGrp stores sign combinations of two BVDs with a negative sign on the same component (vertical).

It is assumed that posiGrp = {(+, +), (-, +)}, negaGrp = {(+, -), (-, -)}. Orders of members in the two lists posiGrp and negaGrp may be arranged arbitrarily.

First comparison: size of Cost(+, +) is compared to that of Cost(-, +), posiGrp[0] is set as a BVD combination with a smaller one of the two Cost, and posiGrp[1] is set as a BVD combination with a larger one of the two Cost.

Second comparison: size of Cost(+, -) is compared to that of Cost(-, -), negaGrp[0] is set as a a BVD combination with a smaller one of the two Cost, and negaGrp[1] is set as a BVD combination with a larger one of the two Cost.

Third comparison: size of the Cost corresponding to the posiGrp[0] is compared to that of the Cost corresponding to the negaGrp[0].

(1) If in the third comparison, the Cost corresponding to the posiGrp[0] is less than or equal to the Cost corresponding to the negaGrp[0]:

If bvd_sign[1] = 0, a $0^{th}$ bit is 0. Then, it is determined whether bvd_sign[0] is equal to posiGrp[0][0]. If bvd_sign[0] is equal to posiGrp[0] [0], a $1^{st}$ bit is 0; otherwise, the $1^{st}$ bit is 1.
If bvd_sign[1] = 1, the $0^{th}$ bit is 1. Then, it is determined whether bvd_sign[0] is equal to negaGrp[0][0]. If bvd_sign [0] is equal to negaGrp[0] [0], the $1^{st}$ bit is 0; otherwise, the $1^{st}$ bit is 1.

(2) If in the third comparison, the Cost corresponding to the posiGrp[0] is greater than the Cost corresponding to the negaGrp[0]:

If bvd_sign[1] = 0, the $0^{th}$ bit is 1. Then, it is determined whether bvd_sign[0] is equal to posiGrp[0] [0]. If bvd_sign [0] is equal to posiGrp[0][0], the $1^{st}$ bit is 0; otherwise, the $1^{st}$ bit is 1.
If bvd_sign[1] = 1, the $0^{th}$ bit is 0. Then, it is determined whether bvd_sign[0] is equal to negaGrp[0][0]. If bvd_sign [0] is equal to negaGrp[0] [0], the $1^{st}$ bit is 0; otherwise, the $1^{st}$ bit is 1.

Furthermore, in the embodiment of the disclosure, in case that both horizontal and vertical components of the BVD are present, with respect to an operation process where orders of the horizontal component and the vertical component may be interchanged, orders of the horizontal component and the vertical component may be determined according to a certain criterion, which includes but is not limited to the following method: orders of the horizontal component and the vertical component are determined according to sizes of absolute values of the horizontal component and the vertical component of the BVD or other criteria.

An embodiment of the disclosure provides an encoding method and a decoding method. At the decoding side, a bitstream is decoded, to determine an absolute value of a BVD of a current block and BVD sign index information of the current block; one or more candidate BVDs of the current block is sorted according to the absolute value of the BVD of the current block, to determine a sorting result; the BVD of the current block is determined according to the BVD sign index information and the sorting result; and a reconstruction value of the current block is determined according to the BVD of the current block. At the encoding side, one or more candidate BVDs of a current block is sorted according to an absolute value of a BVD of the current block, to determine a sorting result; BVD sign index information of the current block is determined according to BVD sign information of the current block and the sorting result; and the absolute value of the BVD and the BVD sign index information are written into a bitstream. It may be seen that in the embodiment of the disclosure, the one or more candidate BVDs of the current block may be effectively sorted according to the absolute value of the BVD of the current block, so that the BVD sign index information may be determined and transmitted by using the sorting result during coding, and the BVD sign information of the current block may be parsed by using the sorting result during decoding. Furthermore, the BVD sign information may be coded and decoded by using CABAC coding and decoding technologies, which may effectively reduce the bitrate required for transmission of signs of the BVD in the IBC mode, and thus may improve coding efficiency.

Based on the above embodiments, in yet another embodiment of the disclosure, based on the same inventive concept as the foregoing embodiments, FIG. 14 is a first schematic diagram of structures of an encoder. As shown in FIG. 14, the encoder 110 may include a first determination unit 111 and a coding unit 112.

The first determination unit 111 is configured to: sort, according to an absolute value of a BVD of a current block, one or more candidate BVDs of the current block, to determine a sorting result; and determine, according to BVD sign information of the current block and the sorting result, BVD sign index information of the current block.

The coding unit 112 is configured to write the absolute value of the BVD and the BVD sign index information into a bitstream.

It may be understood that in the embodiment, the "unit" may be part of a circuit, part of a processor, part of a program or software, or the like, and of course, the "unit" may also be a module, or may be non-modular. Furthermore, components in the embodiment may be integrated into a processing unit, or each unit may physically exist alone, or two or more units may be integrated into a unit. The above integrated unit may be implemented in form of hardware, or may be implemented in form of software function modules.

If the integrated unit is implemented in form of software function modules and is not sold or used as an independent product, the integrated unit may be stored in a computer-readable storage medium. Based on such understanding, the technical solution of the embodiment substantially or parts making contributions to the related art, or all or part of the technical solution may be embodied in form of a software product, and the computer software product is stored in a storage medium, and includes several instructions to enable a computer device (which may be a personal computer, a server, or a network device, etc.) or a processor to execute all or part of operations of the method described in the embodiment. The foregoing storage medium includes various media capable of storing program codes such as a U disk, a mobile hard disk, a Read Only Memory (ROM), a Random Access Memory (RAM), a magnetic disk, or an optical disk, etc.

Therefore, an embodiment of the disclosure provides a computer-readable storage medium, applied to the encoder 110. The computer-readable storage medium stores computer programs, which, when being executed by a first processor, implement the method of any one of the foregoing embodiments.

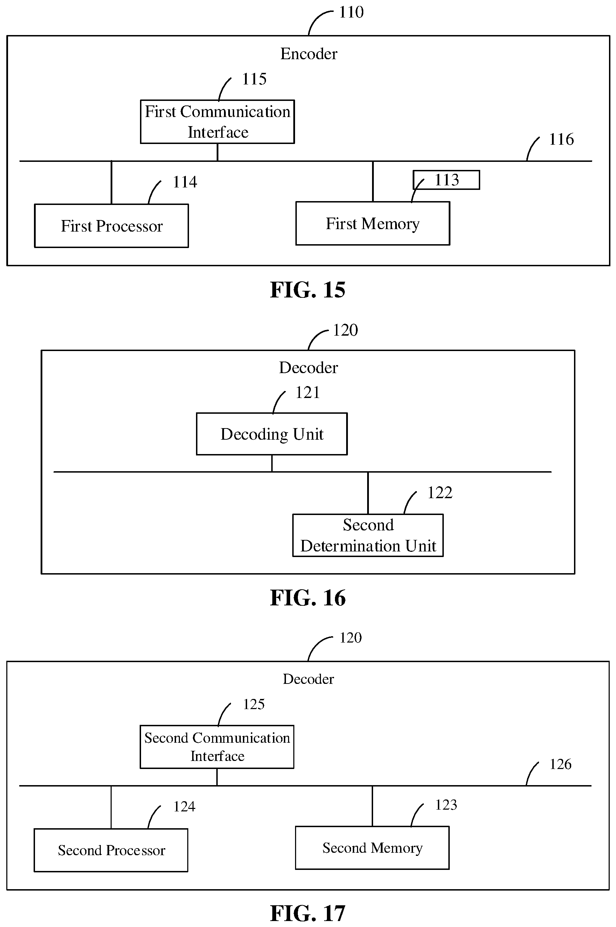

Based on the above composition of the encoder 110 and the computer-readable storage medium, FIG. 15 is a second schematic diagram of structures of a coder. As shown in FIG. 15, the encoder 110 may include a first memory 113, a first processor 114, a first communication interface 115, and a first bus system 116. The first memory 113, the first processor 114 and the first communication interface 115 are coupled together through the first bus system 116. It may be understood that the first bus system 116 is configured to implement connection and communication between these components. Besides a data bus, the first bus system 116 includes a power bus, a control bus and a status signal bus. However, for the sake of clear illustration, various buses are labeled as the first bus system 116 in FIG. 10.

The first communication interface 115 is configured to receive and send signals in a process of receiving/sending information from/to other external network elements.

The first memory 113 is configured to store computer programs executable on the first processor.

The first processor 114 is configured to when it executes the computer program, execute operations of: sorting, according to an absolute value of a BVD of a current block, one or more candidate BVDs of the current block, to determine a sorting result; determining, according to BVD sign information of the current block and the sorting result, BVD sign index information of the current block; and writing the absolute value of the BVD and the BVD sign index information into a bitstream.

It may be understood that the first memory 113 in the embodiment of the disclosure may be a volatile memory or a non-volatile memory, or may include both volatile and non-volatile memories. The non-volatile memory may be a ROM, a Programmable ROM (PROM), an Erasable PROM (EPROM), an Electrically EPROM (EEPROM), or a flash memory. The volatile memory may be a RAM, and used as an external cache. By way of exemplary rather than limiting descriptions, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The first memory 113 of the system and method described in the disclosure is intended to include, but is not limited to these and any other suitable types of memories.

The first processor 114 may be an integrated circuit chip with signal processing capabilities. During implementation, each operation of the above methods may be implemented by an integrated logic circuit in form of hardware or instructions in form of software in the first processor 114. The above first processor 114 may be a general-purpose processor, a Digital Signal Processor (DSP), an Application Specific Integrated Circuit (ASIC), a Field Programmable Gate Array (FPGA) or other programmable logic devices, a discrete gate or a transistor logic device, or a discrete hardware component. Each method, operation and logical block diagram disclosed in the embodiments of the disclosure may be implemented or executed. The general-purpose processor may be a microprocessor, or the processor may be any conventional processor, etc. Operations of the methods disclosed in combination with the embodiments of the disclosure may be directly embodied as being executed and completed by a hardware decoding processor, or executed and completed by a combination of hardware in the decoding processor and a software module. The software module may be located in a mature storage medium in this field such as a random memory, a flash memory, a ROM, a PROM or an electrically erasable programmable memory, a register, etc. The storage medium is located in the first memory 113, the first processor 114 reads information in the first memory 113 and performs operations of the above methods in combination with hardware thereof.

It may be understood that these embodiments described in the disclosure may be implemented with hardware, software, firmware, middleware, microcode, or a combination thereof. With respect to implementation with hardware, the processing unit may be implemented in one or more ASICs, DSPs, DSP Devices (DSPDs), Programmable Logic Devices (PLDs), FPGAs, general-purpose processors, controllers, microcontrollers, microprocessors, other electronic units configured to perform functions described in the disclosure, or a combination thereof. With respect to implementation with software, technologies described in the disclosure may be implemented by modules (such as procedures, functions, etc.) performing the functions described in the disclosure. Software codes may be stored in a memory and executed by a processor. The memory may be implemented in the processor or out of the processor.

Optionally, as another embodiment, the first processor 114 is further configured to perform the method of any one of the foregoing embodiments when it executes the computer programs.

FIG. 16 is a first schematic diagram of structures of a decoder. As shown in FIG. 16, the decoder 120 may include a decoding unit 121 and a second determination unit 122.

The decoding unit 121 is configured to decode a bitstream.

The second determination unit 122 is configured to: determine an absolute value of a BVD of a current block and BVD sign index information of the current block; sort, according to the absolute value of the BVD of the current block, one or more candidate BVDs of the current block, to determine a sorting result; determine, according to the BVD sign index information and the sorting result, the BVD of the current block; and determine, according to the BVD of the current block, a reconstruction value of the current block.

It may be understood that in the embodiment, the "unit" may be part of a circuit, part of a processor, part of a program or software, or the like, and of course, the "unit" may also be a module, or may be non-modular. Furthermore, components in the embodiment may be integrated into a processing unit, or each unit may physically exist alone, or two or more units may be integrated into a unit. The above integrated unit may be implemented in form of hardware, or may be implemented in form of software function modules.

If the integrated unit is implemented in form of software function modules and is not sold or used as an independent product, the integrated unit may be stored in a computer-readable storage medium. Based on such understanding, the technical solution of the embodiment substantially or parts making contributions to the related art, or all or part of the technical solution may be embodied in form of a software product, and the computer software product is stored in a storage medium, and includes several instructions to enable a computer device (which may be a personal computer, a server, or a network device, etc.) or a processor to execute all or part of operations of the method described in the embodiment. The foregoing storage medium includes various media capable of storing program codes such as a U disk, a mobile hard disk, a ROM, a RAM, a magnetic disk, or an optical disk, etc.

Therefore, an embodiment of the disclosure provides a computer-readable storage medium, applied to the decoder 120. The computer-readable storage medium stores computer programs, which when being executed by a first processor, implement the method of any one of the foregoing embodiments.

Based on the above composition of the decoder 120 and the computer-readable storage medium, FIG. 17 is a second schematic diagram of structures of a decoder. As shown in FIG. 17, the decoder 120 may include a second memory 123, a second processor 124, a second communication interface 125, and a second bus system 126. The second memory 123, the second processor 124 and the second communication interface 125 are coupled together through the second bus system 126. It may be understood that the second bus system 126 is configured to implement connection and communication between these components. Besides a data bus, the second bus system 126 includes a power bus, a control bus and a status signal bus. However, for the sake of clear illustration, various buses are labeled as the second bus system 126 in FIG. 12.

The second communication interface 125 is configured to receive and send signals in a process of receiving/-sending information from/to other external network elements.

The second memory 123 is configured to store computer programs executable on the second processor.

The second processor 124 is configured to when it executes the computer programs, execute operations of: decoding a bitstream, to determine an absolute value of a BVD of a current block and BVD sign index information of the current block; sorting, according to the absolute value of the BVD of the current block, one or more candidate BVDs of the current block, to determine a sorting result; determining, according to the BVD sign index information and the sorting result, the BVD of the current block; and determining, according to the BVD of the current block, a reconstruction value of the current block.

It may be understood that the second memory 123 in the embodiment of the disclosure may be a volatile memory or a non-volatile memory, or may include both volatile and non-volatile memories. The non-volatile memory may be a ROM, a PROM, an EPROM, an EEPROM, or a flash memory. The volatile memory may be a RAM, and used as an external cache. By way of exemplary rather than limiting descriptions, many forms of RAMs are available, such as a SRAM, a DRAM, a SDRAM, a DDRSDRAM, an ESDRAM, a SLDRAM, and a DRRAM. The second memory 123 of the system and method described in the disclosure is intended to include, but is not limited to these and any other suitable types of memories.

The second processor 124 may be an integrated circuit chip with signal processing capabilities. During implementation, each operation of the above method may be performed by an integrated logic circuit in form of hardware or instructions in form of software in the second processor 124. The above second processor 124 may be a general-purpose processor, a DSP, an ASIC, an FPGA or other programmable logic devices, a discrete gate or a transistor logic device, or a discrete hardware component. Each method, operation and logical block diagram disclosed in the embodiments of the disclosure may be implemented or executed. The general-purpose processor may be a microprocessor, or the processor may be any conventional processor, etc. Operations of the methods disclosed in combination with the embodiments of the disclosure may be directly embodied as being executed and completed by a hardware decoding processor, or executed and completed by a combination of hardware in the decoding processor and a software module. The software module may be located in a mature storage medium in this field such as a random memory, a flash memory, a ROM, a PROM or an electrically erasable programmable memory, a register, etc. The storage medium is located in the second memory 123, the second processor 124 reads information in the second memory 123 and completes operations of the above method in combination with hardware thereof.

It may be understood that these embodiments described in the disclosure may be implemented with hardware, software, firmware, middleware, microcode, or a combination thereof. With respect to implementation with hardware, the processing unit may be implemented in one or more ASICs, DSPs, DSPDs, PLDs, FPGAs, general-purpose processors, controllers, microcontrollers, microprocessors, other electronic units configured to perform functions described in the disclosure, or a combination thereof. With respect to implementation with software, technologies described in the disclosure may be implemented by modules (such as procedures, functions, etc.) performing the functions described in the disclosure. Software codes may be stored in a memory and executed by a processor. The memory may be implemented in the processor or out of the processor.

An embodiment of the disclosure provides an encoder and a decoder. At the decoding side, a bitstream is decoded, to determine an absolute value of a BVD of a current block and BVD sign index information of the current block; one or more candidate BVDs of the current block is sorted according to the absolute value of the BVD of the current block, to determine a sorting result; the BVD of the current block is determined according to the BVD sign index information and the sorting result; and a reconstruction value of the current block is determined according to the BVD of the current block. At the encoding side, one or more candidate BVDs of a current block is sorted according to an absolute value of a BVD of the current block, to determine a sorting result; BVD sign index information of the current block is determined according to BVD sign information of the current block and the sorting result; and the absolute value of the BVD and the BVD sign index information are written into a bitstream. It may be seen that in the embodiment of the disclosure, the one or more candidate BVDs of the current block may be effectively sorted according to the absolute value of the BVD of the current block, so that the BVD sign index information may be determined and transmitted by using the sorting result during encoding, and the BVD sign information of the current block may be parsed by using the sorting result during decoding. Furthermore, the BVD sign information may be encoded and decoded by using CABAC encoding and decoding technologies, which may effectively reduce the bitrate required for transmission of signs of the BVD in the IBC mode, and thus may improve coding efficiency.

It should be noted that in the embodiments of the disclosure, terms "include", "comprise" or any other variants thereof are intended to cover non-exclusive inclusion, so that a process, method, article or apparatus including a series of elements includes not only those elements, but also other elements which are not listed explicitly, or elements inherent to such process, method, article or apparatus. Without any further limitation, an element defined by a statement "includes a..." does not exclude presence of additional identical elements in a process, method, article or apparatus including the element.

The above serial numbers of the embodiments of the disclosure are only intended for descriptions, and do not represent advantages or disadvantages of the embodiments.

The methods disclosed in several method embodiments provided in the disclosure may be arbitrarily combined without conflict, to obtain new method embodiments.

The features disclosed in several product embodiments provided in the disclosure may be arbitrarily combined without conflict, to obtain new product embodiments.

The features disclosed in several method or device embodiments provided in the disclosure may be arbitrarily combined without conflict, to obtain new method or device embodiments.

The above descriptions are only specific implementations of the disclosure, however, the scope of protection of the disclosure is not limited thereto. Variations or replacements easily conceived by any technician familiar with the technical field within the technical scope disclosed in the disclosure, should fall within the scope of protection of the disclosure. Therefore, the scope of protection of the disclosure should be subject to the scope of protection of the claims.

Industrial Applicability

The embodiments of the disclosure provide an encoding method, a decoding method, an encoder, a decoder, and a storage medium. At the decoding side, a bitstream is decoded, to determine an absolute value of a BVD of a current block and BVD sign index information of the current block; one or more candidate BVDs of the current block is sorted according to the absolute value of the BVD of the current block, to determine a sorting result; the BVD of the current block is determined according to the BVD sign index information and the sorting result; and a reconstruction value of the current block is determined according to the BVD of the current block. At the encoding side, one or more candidate BVDs of a current block is sorted according to an absolute value of a BVD of the current block, to determine a sorting result; BVD sign index information of the current block is determined according to BVD sign information of the current block and the sorting result; the absolute value of the BVD and the BVD sign index information are written into a bitstream. It may be seen that in the embodiments of the disclosure, the one or more candidate BVDs of the current block may be effectively sorted according to the absolute value of the BVD of the current block, so that the BVD sign index information may be determined and transmitted by using the sorting result during encoding, and the BVD sign information of the current block may be parsed by using the sorting result during decoding. Furthermore, the BVD sign information may be encoded and decoded by using CABAC encoding and decoding technologies, which may effectively reduce the bitrate required for transmission of signs of the BVD in the IBC mode, and thus may improve coding efficiency.

**Claims**

1. A decoding method, applied to a decoder, comprising:

   decoding a bitstream, to determine an absolute value of a Block Vector Difference (BVD) of a current block and BVD sign index information of the current block;
   sorting, according to the absolute value of the BVD of the current block, one or more candidate BVDs of the current block, to determine a sorting result;
   determining, according to the BVD sign index information and the sorting result, the BVD of the current block; and
   determining, according to the BVD of the current block, a reconstruction value of the current block.

2. The method of claim 1, wherein the absolute value of the BVD comprises an absolute value of a first component absBvdX and an absolute value of a second component absBvdY,
   a candidate BVD comprises a first component candBvdX and a second component candBvdY.

3. The method of claim 2, further comprising:
   when the absBvdX is equal to 0, determining, according to the absBvdY, the one or more candidate BVDs.

4. The method of claim 2, further comprising:
   when the absBvdY is equal to 0, determining, according to the absBvdX, the one or more candidate BVDs.

5. The method of claim 2, further comprising:
   when both the absBvdX and the absBvdY are not equal to 0, determining, according to the absBvdX and the absBvdY, the one or more candidate BVDs.

6. The method of claim 2, wherein sorting, according to the absolute value of the BVD of the current block, the one or more candidate BVDs of the current block, to determine the sorting result comprises:

   determining, according to the absolute value of the BVD, one or more first cost values corresponding to the one or more candidate BVDs of the current block; and
   sorting, according to the one or more first cost values, the one or more candidate BVDs, to determine the sorting result.

7. The method of claim 6, further comprising:
   the one or more candidate BVDs comprises one or more BVDs for which the candBvdX is set to be equal to -absBvdX or absBvdX respectively, and the candBvdY is set to be equal to -absBvdY or absBvdY respectively.

8. The method of claim 7, wherein determining, according to the absolute value of the BVD of the current block, the one or more first cost values corresponding to the one or more candidate BVDs of the current block comprises:

   determining, according to a candidate BVD, a first matching template; and
   calculating a matching error between a first template of the current block and the first matching template according to a preset error criterion, to determine a first cost value corresponding to the candidate BVD.

9. The method of claim 8, further comprising:
the first template comprising one or more sample values in an adjacent decoded area of the current block.

10. The method of claim 8, wherein determining, according to the candidate BVD, the first matching template comprises:

determining a Block Vector Prediction (BVP) of the current block;
determining, according to the BVP and the candidate BVD, a candidate Block Vector (BV) of the current block, wherein the candidate BV is used to indicate a position of the first matching template; and
determining, according to the candidate BV, the first matching template.

11. The method of claim 10, wherein the BVP comprises a third component currBvpX and a fourth component currBvpY, and determining, according to the BVP and the candidate BVD, the candidate BV of the current block comprises:
setting a two-dimensional (2D) vector of the candidate BV as (currBvpX+candBvdX, currBvpY+candBvdY).

12. The method of claim 11, wherein determining, according to the candidate BV, the first matching template comprises:
determining, according to a position of a current point and the 2D vector of the candidate BV, the first matching template.

13. The method of claim 12, further comprising:
determining, by taking the position of the current point as a starting point, an area indicated by the 2D vector of the candidate BV, having the same shape and containing the same number of sample values as the first template, as the first matching template.

14. The method of claim 8, wherein the preset error criterion comprises any one of Sum of Absolute Differences (SAD), Sum of Absolute Transformed Differences (SATD), Sum of Squared Errors (SSE), Mean Absolute Differences (MAD), Mean Absolute Error (MAE), Mean Squared Error (MSE), or Rate Distortion Optimization (RDO).

15. The method of claim 8, wherein the sorting result is a candidate BVD list of the current block, and the method further comprises:
sorting, according to the one or more first cost values, the one or more candidate BVDs, to determine the candidate BVD list of the current block, wherein the candidate BVD list comprises at least one candidate BVD.

16. The method of claim 15, wherein sorting, according to the one or more first cost values, the one or more candidate BVDs, to determine the candidate BVD list of the current block comprises:
sorting, the one or more candidate BVDs in an ascending order of one or more matching errors indicated by the one or more first cost values according to the preset error criterion, to determine the candidate BVD list.

17. The method of claim 15, wherein sorting, according to the one or more first cost values, the one or more candidate BVDs, to determine the candidate BVD list of the current block comprises:

when both the absBvdX and the absBvdY are not equal to 0, storing the one or more candidate BVDs into a first array and a second array respectively;
based on the one or more first cost values, determining a first candidate BVD and a second candidate BVD from the first array, and a third candidate BVD and a fourth candidate BVD from the second array; and
storing, based on the one or more first cost values, the first candidate BVD, the second candidate BVD, the third candidate BVD and the fourth candidate BVD, to determine the candidate BVD list.

18. The method of claim 17, further comprising:

when a first cost value of the first candidate BVD is less than or equal to a first cost value of the third candidate BVD, setting the first candidate BVD as a first candidate BVD in the candidate BVD list, setting the third candidate BVD as a second candidate BVD in the candidate BVD list, setting the second candidate BVD as a third candidate BVD in the candidate BVD list, and setting the fourth candidate BVD as a fourth candidate BVD in the candidate BVD list; and
when the first cost value of the first candidate BVD is greater than the first cost value of the third candidate BVD, setting the third candidate BVD as a first candidate BVD in the candidate BVD list, setting the first candidate BVD as a second candidate BVD in the candidate BVD list, setting the fourth candidate BVD as a third candidate BVD in the candidate BVD list, and setting the second candidate BVD as a fourth candidate BVD in the candidate BVD list.

19. The method of claim 17, further comprising:

when a first cost value of the first candidate BVD is less than or equal to a first cost value of the third candidate BVD, setting the first candidate BVD as a first candidate BVD in the candidate BVD list, setting the second candidate BVD as a second candidate BVD in the candidate BVD list, setting the third candidate BVD as a third candidate BVD in the candidate BVD list, and setting the fourth candidate BVD as a fourth candidate BVD in the candidate BVD list; and
when the first cost value of the first candidate BVD is greater than the first cost value of the third candidate BVD, setting the third candidate BVD as a first candidate BVD in the candidate BVD list, setting the fourth candidate BVD as a second candidate BVD in the candidate BVD list, setting the first candidate BVD as a third candidate BVD in the candidate BVD list, and setting the second candidate BVD as a fourth candidate BVD in the candidate BVD list.

20. The method of claim 15, wherein sorting, according to the one or more first cost values, the one or more candidate BVDs, to determine the candidate BVD list of the current block comprises:
when the absBvdX is equal to 0 or the absBvdY is equal to 0, setting a candidate BVD with a minimum first cost value in the one or more candidate BVDs as a first candidate BVD in the candidate BVD list, and setting another candidate BVD in the one or more candidate BVDs as a second candidate BVD in the candidate BVD list.

21. The method of claim 8, wherein the sorting result is a candidate BVD set of the current block, and the method further comprises:
sorting, according to the one or more first cost values, the one or more candidate BVDs, to determine the candidate BVD set of the current block, wherein the candidate BVD set comprises at least one candidate BVD.

22. The method of claim 21, wherein sorting, according to the one or more first cost values, the one or more candidate BVDs, to determine the candidate BVD set of the current block comprises:

when both the absBvdX and the absBvdY are not equal to 0, storing the one or more candidate BVDs into a first array and a second array respectively;
determining a fifth candidate BVD with a minimum first cost value from the first array, and a sixth candidate BVD with a minimum first cost value from the second array; and
determining a candidate BVD with a minimum first cost value from the fifth candidate BVD and the sixth candidate BVD as a BVD with a minimum cost in the candidate BVD set.

23. The method of claim 21, wherein sorting, according to the one or more first cost values, the one or more candidate BVDs, to determine the candidate BVD set of the current block comprises:
when the absBvdX is equal to 0 or the absBvdY is equal to 0, determining a candidate BVD with a minimum first cost value from the one or more candidate BVDs as a BVD with a minimum cost in the candidate BVD set.

24. The method of any one of claims 16 to 20, wherein determining, according to the BVD sign index information and the sorting result, the BVD of the current block comprises:
determining a candidate BVD indicated by the BVD sign index information from the candidate BVD list as the BVD of the current block.

25. The method of claim 16, further comprising:
transforming the candidate BVD list, to determine an index transform list.

26. The method of claim 25, wherein determining, according to the BVD sign index information and the sorting result, the BVD of the current block comprises:

in case that both the absBvdX and the absBvdY are not 0, when a value of a first bit of the BVD sign index information is 0, determining that candBvdX of the BVD of the current block is the same as candBvdX of a first candidate BVD or a third candidate BVD in the index transform list; and
determining, according to the first candidate BVD or the third candidate BVD, candBvdY of the BVD of the current block.

27. The method of claim 26, further comprising:

when a value of a second bit of the BVD sign index information is 0, determining that the candBvdY of the BVD of the current block is the same as candBvdY of the first candidate BVD; and
when the value of the second bit is 1, determining that the candBvdY of the BVD of the current block is the same as candBvdY of the third candidate BVD.

28. The method of claim 25, wherein determining, according to the BVD sign index information and the sorting result, the BVD of the current block comprises:

in case that both the absBvdX and the absBvdY are not 0, when a value of a first bit of the BVD sign index information is 1, determining that a sign of the first component is the same as a sign of a first component of a second candidate BVD or a fourth candidate BVD in the index transform list; and
determining, according to the second candidate BVD or the fourth candidate BVD, candBvdY of the BVD of the current block.

29. The method of claim 28, further comprising:

when a value of a second bit of the BVD sign index information is 0, determining that the candBvdY of the BVD of the current block is the same as candBvdY of the second candidate BVD; and
when the value of the second bit is 1, determining that the candBvdY of the BVD of the current block is the same as candBvdY of the fourth candidate BVD.

30. The method of claim 25, wherein determining, according to the BVD sign index information and the sorting result, the BVD of the current block comprises:
in case that the absBvdX is 0, when a value of the BVD sign index information is 0, determining that candBvdY of the BVD of the current block is the same as candBvdY of a first candidate BVD in the index transform list; and when the value of the BVD sign index information is 1, determining that the candBvdY of the BVD of the current block is the same as candBvdY of a second candidate BVD in the index transform list.

31. The method of claim 25, wherein determining, according to the BVD sign index information and the sorting result, the BVD of the current block comprises:
in case that the absBvdY is 0, when a value of the BVD sign index information is 0, determining that candBvdX of the BVD of the current block is the same as candBvdX of a first candidate BVD in the index transform list; and when the value of the BVD sign index information is 1, determining that the candBvdX of the BVD of the current block is the same as candBvdX of a second candidate BVD in the index transform list.

32. The method of claim 16, wherein determining, according to the BVD sign index information and the candidate BVD list, the BVD of the current block comprises:

in case that both the absBvdX and the absBvdY are not 0, if a value of a first bit of the BVD sign index information is 0, determining that candBvdX of the BVD of the current block is the same as candBvdX of a first candidate BVD in the candidate BVD list; otherwise, determining that the candBvdX of the BVD of the current block is different from the candBvdX of the first candidate BVD in the candidate BVD list;
traversing the candidate BVD list, to determine a first one candidate BVD having the same candBvdX as the BVD of the current block; and
if a value of a second bit of the BVD sign index information is 0, determining that candBvdY of the BVD of the current block is the same as candBvdY of the first one candidate BVD; otherwise, determining that the candBvdY of the BVD of the current block is different from the candBvdY of the first candidate BVD.

33. The method of claim 16, wherein determining, according to the BVD sign index information and the candidate BVD list, the BVD of the current block comprises:
in case that the absBvdX is 0, when a value of the BVD sign index information is 0, determining that candBvdY of the BVD of the current block is the same as candBvdY of a first candidate BVD in the candidate BVD list; and when the value of the BVD sign index information is 1, determining that the candBvdY of the BVD of the current block is the same as candBvdY of a second candidate BVD in the candidate BVD list.

34. The method of claim 16, wherein determining, according to the BVD sign index information and the candidate BVD list, the BVD of the current block comprises:
in case that the absBvdY is 0, when a value of the BVD sign index information is 0, determining that candBvdX of the BVD of the current block is the same as candBvdX of a first candidate BVD in the candidate BVD list; and when the value of the BVD sign index information is 1, determining that the candBvdX of the BVD of the current block is the same as candBvdX of a second candidate BVD in the candidate BVD list.

35. The method of claim 21, wherein determining, according to the BVD sign index information and the sorting result, the BVD of the current block comprises:

in case that both the absBvdX and the absBvdY are not 0, when a value of a first bit of the BVD sign index information is 0, determining that candBvdX of the BVD of the current block is the same as candBvdX of a BVD with a minimum cost in the candidate BVD set; and
determining, according to the BVD with the minimum cost in the candidate BVD set, candBvdY of the BVD of the current block.

36. The method of claim 21, wherein determining, according to the BVD sign index information and the sorting result, the BVD of the current block comprises:

in case that both the absBvdX and the absBvdY are not 0, when a value of a first bit of the BVD sign index information is **1,** determining that candBvdX of the BVD of the current block has an opposite sign to candBvdX of a BVD with a minimum cost in the candidate BVD set; and
determining, according to a BVD with a minimum cost in another array other than an array, where the BVD with the minimum cost is located, in the candidate BVD set, candBvdY of the BVD of the current block.

37. The method of claim 35, further comprising:

when a value of a second bit of the BVD sign index information is 0, determining that the candBvdY of the BVD of the current block is the same as candBvdY of the BVD with the minimum cost in the candidate BVD set; and
when the value of the second bit is 1, determining that the candBvdY of the BVD of the current block has an opposite sign to the candBvdY of the BVD with the minimum cost in the candidate BVD set.

38. The method of claim 36, further comprising:

when a value of a second bit of the BVD sign index information is 0, determining that the candBvdY of the BVD of the current block is the same as candBvdY of the BVD with the minimum cost in the another array; and
when the value of the second bit is 1, determining that the candBvdY of the BVD of the current block has an opposite sign to the candBvdY of the BVD with the minimum cost in the another array.

39. The method of claim 21, wherein determining, according to the BVD sign index information and the sorting result, the BVD of the current block comprises:
in case that the absBvdX is 0, when a value of the BVD sign index information is 0, determining that candBvdY of the BVD of the current block is the same as candBvdY of a BVD with a minimum cost in the candidate BVD set; and when the value of the BVD sign index information is **1,** determining that the candBvdY of the BVD of the current block has an opposite sign to the candBvdY of the BVD with the minimum cost in the candidate BVD set.

40. The method of claim 21, wherein determining, according to the BVD sign index information and the sorting result, the BVD of the current block comprises:
in case that the absBvdY is 0, when a value of the BVD sign index information is 0, determining that absBvdX of the BVD of the current block is the same as absBvdX of a BVD with a minimum cost in the candidate BVD set; and when the value of the BVD sign index information is **1,** determining that the absBvdX of the BVD of the current block has an opposite sign to the absBvdX of the BVD with the minimum cost in the candidate BVD set.

41. The method of claim 2, further comprising:
when both the absBvdX and the absBvdY are not 0, determining that a number of bits of the BVD sign index information is 2; and when the absBvdX or the absBvdY is 0, determining that the number of bits of the BVD sign index information is 1.

**42.** The method of claim 2, further comprising:
the BVD sign index information is coded by using a truncated unary code, and a number of bits of the sign index information corresponding to different candidate BVDs is not exactly the same.

**43.** An encoding method, applied to an encoder, comprising:

sorting, according to an absolute value of a Block Vector Difference (BVD) of a current block, one or more candidate BVDs of the current block, to determine a sorting result;
determining, according to BVD sign information of the current block and the sorting result, BVD sign index information of the current block; and
writing the absolute value of the BVD and the BVD sign index information into a bitstream.

**44.** The method of claim 43, wherein the absolute value of the BVD comprises an absolute value of a first component absBvdX and an absolute value of a second component absBvdY,
a candidate BVD comprises a first component candBvdX and a second component candBvdY.

**45.** The method of claim 44, further comprising:
when the absBvdX is equal to 0, determining, according to the absBvdY, the one or more candidate BVDs.

**46.** The method of claim 44, further comprising:
when the absBvdY is equal to 0, determining, according to the absBvdX, the one or more candidate BVDs.

**47.** The method of claim 44, further comprising:
when both the absBvdX and the absBvdY are not equal to 0, determining, according to the absBvdX and the absBvdY, the one or more candidate BVDs.

**48.** The method of claim 44, wherein sorting, according to the absolute value of the BVD of the current block, the one or more candidate BVDs of the current block, to determine the sorting result comprises:

determining, according to the absolute value of the BVD, one or more first cost values corresponding to the one or more candidate BVDs of the current block; and
sorting, according to the one or more first cost values, the one or more candidate BVDs, to determine the sorting result.

**49.** The method of claim 48, further comprising:
the one or more candidate BVDs comprising one or more BVDs for which the candBvdX is set to be equal to -absBvdX or absBvdX respectively, and the candBvdY is set to be equal to -absBvdY or absBvdY respectively.

**50.** The method of claim 49, wherein determining, according to the absolute value of the BVD of the current block, the one or more first cost values corresponding to the one or more candidate BVDs of the current block comprises:

determining, according to a candidate BVD, a first matching template; and
calculating a matching error between a first template of the current block and the first matching template according to a preset error criterion, to determine a first cost value corresponding to the candidate BVD.

**51.** The method of claim 50, further comprising:
the first template comprising one or more sample values in an adjacent decoded area of the current block.

**52.** The method of claim 50, wherein determining, according to the candidate BVD, the first matching template comprises:

determining a Block Vector Prediction (BVP) of the current block;
determining, according to the BVP and the candidate BVD, a candidate Block Vector (BV) of the current block, wherein the candidate BV is used to indicate a position of the first matching template; and
determining, according to the candidate BV, the first matching template.

**53.** The method of claim 52, wherein the BVP comprises a third component currBvpX and a fourth component currBvpY, and determining, according to the BVP and the candidate BVD, the candidate BV of the current block comprises:
setting a two-dimensional (2D) vector of the candidate BV as (currBvpX+candBvdX, currBvpY+candBvdY).

**54.** The method of claim 53, wherein determining, according to the candidate BV, the first matching template comprises: determining, according to a position of a current point and the 2D vector of the candidate BV, the first matching template.

**55.** The method of claim 54, further comprising: determining, by taking the position of the current point as a starting point, an area indicated by the 2D vector of the candidate BV, having the same shape and containing the same number of sample values as the first template, as the first matching template.

**56.** The method of claim 50, wherein the preset error criterion comprises any one of Sum of Absolute Differences (SAD), Sum of Absolute Transformed Differences (SATD), Sum of Squared Errors (SSE), Mean Absolute Differences (MAD), Mean Absolute Error (MAE), Mean Squared Error (MSE), or Rate Distortion Optimization (RDO).

**57.** The method of claim 50, wherein the sorting result is a candidate BVD list of the current block, and the method further comprises: sorting, according to the one or more first cost values, the one or more candidate BVDs, to determine the candidate BVD list of the current block, wherein the candidate BVD list comprises at least one candidate BVD.

**58.** The method of claim 57, wherein sorting, according to the one or more first cost values, the one or more candidate BVDs, to determine the candidate BVD list of the current block comprises: sorting the one or more candidate BVDs in an ascending order of one or more matching errors indicated by the one or more first cost values according to the preset error criterion, to determine the candidate BVD list.

**59.** The method of claim 57, wherein sorting, according to the one or more first cost values, the one or more candidate BVDs, to determine the candidate BVD list of the current block comprises:

when both the absBvdX and the absBvdY are not equal to 0, storing the one or more candidate BVDs into a first array and a second array respectively;
based on the one or more first cost values, determining a first candidate BVD and a second candidate BVD from the first array, and a third candidate BVD and a fourth candidate BVD from the second array; and
sorting, based on the one or more first cost values, the first candidate BVD, the second candidate BVD, the third candidate BVD and the fourth candidate BVD, to determine the candidate BVD list.

**60.** The method of claim 59, further comprising:

when a first cost value of the first candidate BVD is less than or equal to a first cost value of the third candidate BVD, setting the first candidate BVD as a first candidate BVD in the candidate BVD list, setting the third candidate BVD as a second candidate BVD in the candidate BVD list, setting the second candidate BVD as a third candidate BVD in the candidate BVD list, and setting the fourth candidate BVD as a fourth candidate BVD in the candidate BVD list; and
when the first cost value of the first candidate BVD is greater than the first cost value of the third candidate BVD, setting the third candidate BVD as a first candidate BVD in the candidate BVD list, setting the first candidate BVD as a second candidate BVD in the candidate BVD list, setting the fourth candidate BVD as a third candidate BVD in the candidate BVD list, and setting the second candidate BVD as a fourth candidate BVD in the candidate BVD list.

**61.** The method of claim 59, further comprising:

when a first cost value of the first candidate BVD is less than or equal to a first cost value of the third candidate BVD, setting the first candidate BVD as a first candidate BVD in the candidate BVD list, setting the second candidate BVD as a second candidate BVD in the candidate BVD list, setting the third candidate BVD as a third candidate BVD in the candidate BVD list, and setting the fourth candidate BVD as a fourth candidate BVD in the candidate BVD list; and
when the first cost value of the first candidate BVD is greater than the first cost value of the third candidate BVD, setting the third candidate BVD as a first candidate BVD in the candidate BVD list, setting the fourth candidate BVD as a second candidate BVD in the candidate BVD list, setting the first candidate BVD as a third candidate BVD in the candidate BVD list, and setting the second candidate BVD as a fourth candidate BVD in the candidate BVD list.

**62.** The method of claim 57, wherein sorting, according to the one or more first cost values, the one or more candidate BVDs, to determine the candidate BVD list of the current block comprises:
when the absBvdX is equal to 0 or the absBvdY is equal to 0, setting a candidate BVD with a minimum first cost value in the one or more candidate BVDs as a first candidate BVD in the candidate BVD list, and setting another candidate BVD in the one or more candidate BVDs as a second candidate BVD in the candidate BVD list.

**63.** The method of claim 50, wherein the sorting result is a candidate BVD set of the current block, and the method further comprises:
sorting, according to the one or more first cost values, the one or more candidate BVDs, to determine the candidate BVD set of the current block, wherein the candidate BVD set comprises at least one candidate BVD.

**64.** The method of claim 62, wherein sorting, according to the one or more first cost values, the one or more candidate BVDs, to determine the candidate BVD set of the current block comprises:

when both the absBvdX and the absBvdY are not equal to 0, storing the one or more candidate BVDs into a first array and a second array respectively;
determining a fifth candidate BVD with a minimum first cost value from the first array, and a sixth candidate BVD with a minimum first cost value from the second array; and
determining a candidate BVD with a minimum first cost value from the fifth candidate BVD and the sixth candidate BVD as a BVD with a minimum cost in the candidate BVD set.

**65.** The method of claim 63, wherein sorting, according to the one or more first cost values, the one or more candidate BVDs, to determine the candidate BVD set of the current block comprises:
when the absBvdX is equal to 0 or the absBvdY is equal to 0, determining a candidate BVD with a minimum first cost value from the one or more candidate BVDs as a BVD with a minimum cost in the candidate BVD set.

**66.** The method of any one of claims 56 to 62, wherein determining, according to the BVD sign information of the current block and the sorting result, the BVD sign index information of the current block comprises:

determining a candidate BVD having the same BVD sign information as that of the current block, from the candidate BVD list; and
setting, according to an index value of the candidate BVD, the BVD sign index information.

**67.** The method of claim 58, further comprising:
transforming the candidate BVD list, to determine an index transform list.

**68.** The method of claim 67, wherein determining, according to the BVD sign information of the current block and the sorting result, the BVD sign index information of the current block comprises:
in case that both the absBvdX and the absBvdY are not 0, if a sign of a first component in the BVD sign information of the current block is the same as a sign of a first component of a first candidate BVD in the index transform list, determining that a value of a first bit of the BVD sign index information is 0; otherwise, determining that the value of the first bit is 1.

**69.** The method of claim 67, further comprises:

in case of determining that the value of the first bit is 0, if a sign of a second component in the BVD sign information of the current block is the same as a sign of a second component of a first candidate BVD in the index transform list, determining that a value of a second bit of the BVD sign index information is 0; otherwise, determining that the value of the second bit is 1; and
in case of determining that the value of the first bit is 1, if the sign of the second component in the BVD sign information of the current block is the same as a sign of a second component of a candidate BVD with an index of 1 from the index transform list, determining that the value of the second bit of the BVD sign index information is 0; otherwise, determining that the value of the second bit is 1.

**70.** The method of claim 67, wherein determining, according to the BVD sign information of the current block and the sorting result, the BVD sign index information of the current block comprises:
in case that the absBvdX is 0, if a sign of a first component in the BVD sign information of the current block is the same as a sign of a first component of a first candidate BVD in the index transform list, determining that a value of the BVD sign index information is 0; otherwise, determining that the value of the BVD sign index information is 1.

71. The method of claim 67, wherein determining, according to the BVD sign information of the current block and the sorting result, the BVD sign index information of the current block comprises:
in case that the absBvdY is 0, if a sign of a first component in the BVD sign information of the current block is the same as a sign of a first component of a first candidate BVD in the index transform list, determining that a value of the BVD sign index information is 0; otherwise, determining that the value of the BVD sign index information is 1.

72. The method of claim 58, wherein determining, according to the BVD sign information of the current block and the sorting result, the BVD sign index information of the current block comprises:

in case that both the absBvdX and the absBvdY are not 0, if a sign of a first component in the BVD sign information of the current block is the same as a sign of a first component of a first candidate BVD in the candidate BVD list, determining that a value of a first bit of the BVD sign index information is 0; otherwise, determining that the value of the first bit is 1;
traversing the candidate BVD list, to determine a first one candidate BVD having the same sign of the first component as the BVD sign information of the current block; and
if a sign of a second component in the BVD sign information of the current block is the same as a sign of a second component of the first one candidate BVD, determining that a value of a second bit of the BVD sign index information is 0; otherwise, determining that the value of the second bit is 1.

73. The method of claim 58, wherein determining, according to the BVD sign information of the current block and the sorting result, the BVD sign index information of the current block comprises:
in case that the absBvdX is 0, if a sign of a second component in the BVD sign information of the current block is the same as a sign of a second component of a first candidate BVD in the candidate BVD list, determining that a value of the BVD sign index information is 0; otherwise, determining that the value of the BVD sign index information is 1.

74. The method of claim 58, wherein determining, according to the BVD sign information of the current block and the sorting result, the BVD sign index information of the current block comprises:
in case that the absBvdY is 0, if a sign of a first component in the BVD sign information of the current block is the same as a sign of a first component of a first candidate BVD in the candidate BVD list, determining that a value of the BVD sign index information is 0; otherwise, determining that the value of the BVD sign index information is 1.

75. The method of claim 63, wherein determining, according to the BVD sign information of the current block and the sorting result, the BVD sign index information of the current block comprises:

in case that both the absBvdX and the absBvdY are not 0, when a sign of a first component in the BVD sign information of the current block is the same as a sign of a first component of a BVD with a minimum cost in the candidate BVD set, determining that a value of a first bit of the BVD sign index information is 0; and
determining, according to the BVD with the minimum cost in the candidate BVD set, a second bit of the BVD sign index information of the current block.

76. The method of claim 63, wherein determining, according to the BVD sign information of the current block and the sorting result, the BVD sign index information of the current block comprises:

in case that both the absBvdX and the absBvdY are not 0, when a sign of a first component in the BVD sign information of the current block is different from a sign of a first component of a BVD with a minimum cost in the candidate BVD set, determining that a value of a first bit of the BVD sign index information is 1; and
determining, according to a BVD with a minimum cost in another array other than an array, where the BVD with the minimum cost is located, in the candidate BVD set, a second bit of the BVD sign index information of the current block.

77. The method of claim 75, further comprising:

when a sign of a second component in the BVD sign information of the current block is the same as a sign of a second component of the BVD with the minimum cost in the candidate BVD set, determining that a value of the second bit of the BVD sign index information is 0; and
when the sign of the second component in the BVD sign information of the current block is different from the sign of the second component of the BVD with the minimum cost in the candidate BVD set, determining that the value of the second bit of the BVD sign index information is 1.

78. The method of claim 76, further comprising:

when a sign of a second component in the BVD sign information of the current block is the same as a sign of a second component of the BVD with the minimum cost in another array, determining that a value of the second bit of the BVD sign index information is 0; and

when the sign of the second component in the BVD sign information of the current block is different from the sign of the second component of the BVD with the minimum cost in another array, determining that the value of the second bit of the BVD sign index information is 1.

79. The method of claim 63, wherein determining, according to the BVD sign information of the current block and the sorting result, the BVD sign index information of the current block comprises:
in case that the absBvdX is 0, if a sign of a second component in the BVD sign information of the current block is the same as a sign of a second component of a BVD with a minimum cost in the candidate BVD set, determining that a value of the BVD sign index information is 0; otherwise, determining that the value of the BVD sign index information is 1.

80. The method of claim 63, wherein determining, according to the BVD sign information of the current block and the sorting result, the BVD sign index information of the current block comprises:
in case that the absBvdY is 0, if a sign of a first component in the BVD sign information of the current block is the same as a sign of a first component of a BVD with a minimum cost in the candidate BVD set, determining that a value of the BVD sign index information is 0; otherwise, determining that a value of the BVD sign index information is 1.

81. The method of claim 43, further comprising:
coding the absolute value of the BVD and the BVD sign index information by using Context-Adaptive Binary Arithmetic Coding (CABAC).

82. The method of claim 43, further comprising:
coding the absolute value of the BVD and the BVD sign index information by using a bypass mode.

83. An encoder, comprising:

a first determination unit, configured to: sort, according to an absolute value of a Block Vector Difference (BVD) of a current block, one or more candidate BVDs of the current block, to determine a sorting result; and determine, according to BVD sign information of the current block and the sorting result, BVD sign index information of the current block; and

a coding unit, configured to write the absolute value of the BVD and the BVD sign index information into a bitstream.

84. An encoder, comprising a first memory and a first processor,

wherein the first memory is configured to store computer programs executable on the first processor,

the first processor is configured to perform, when executing the computer programs, the method of any one of claims 41 to 79.

85. A decoder, comprising:

a decoding unit, configured to decode a bitstream;

a second determination unit, configured to: determine an absolute value of a Block Vector Difference (BVD) of a current block and BVD sign index information of the current block; sort, according to the absolute value of the BVD of the current block, one or more candidate BVDs of the current block, to determine a sorting result; determine, according to the BVD sign index information and the sorting result, the BVD of the current block; and determine, according to the BVD of the current block, a reconstruction value of the current block.

86. A decoder, comprising a second memory and a second processor,

wherein the second memory is configured to store computer programs executable on the second processor, the second processor is configured to perform, when executing the computer programs, the method of any one of claims 1 to 40.

87. A computer-readable storage medium having stored thereon computer programs, which implement, when being executed, the method of any one of claims 1 to 42 or the method of any one of claims 43 to 82.

```
┌─────────────────────────────┐
│        Derive a BV          │
└─────────────────────────────┘
               │
               ▼
┌─────────────────────────────┐
│  Derive a prediction sample │
│      by using the BV        │
└─────────────────────────────┘
               │
               ▼
┌─────────────────────────────┐
│   Derive a residual sample  │
└─────────────────────────────┘
               │
               ▼
┌─────────────────────────────┐
│ Derive a reconstructed sample by │
│ using the prediction sample and the │
│        residual sample      │
└─────────────────────────────┘
```

**FIG. 1**

```
                                    ┌────┐
                                    │ B₁ │
        ┌───────────────────────────┴────┘
        │                            │
        │                            │
        │        Current Block       │
        │                            │
        │                            │
     ┌──┴──┐                         │
     │ A₁  │                         │
     └──┬──┴─────────────────────────┘
```

**FIG. 2**

input video

divided
into CBs

101

Transform and
Quantization Unit

quantized transform coefficients

10

Inverse Transform
And Inverse
Quantization Unit

106

107

102

Intra
Estimation Unit

103

Filter Control
Analysis Unit

filter
control
data

109

Encoding
Unit

output
bitstream

inter/intra
selection

Intra Prediction
Unit

Filtering Unit

108

Motion
Compensation
Unit

104

intra prediction data

motion data

Motion
Estimation Unit

105

110

Decoded
Picture
Buffer Unit

output video
signal

**FIG. 3**

20

inter/intra
selection

Motion
Compensation
Unit

204

203

Intra
Prediction
Unit

205

206

Filtering
Unit

Decoded
Picture
Buffer Unit

output video
signal

input
bitstream

201

Decoding
Unit

202

Inverse Transform
And Inverse
Quantization Unit

**FIG. 4**

| Decode a bitstream, to determine an absolute value of a BVD of a current block and BVD sign index information of the current block | 101 |

| Sort, according to the absolute value of the BVD of the current block, candidate BVDs of the current block, to determine a sorting result | 102 |

| Determine, according to the BVD sign index information and the sorting result, the BVD of the current block | 103 |

| Determine, according to the BVD of the current block, a reconstruction value of the current block | 104 |

**FIG. 5**

**FIG. 6**

**FIG. 7**

**FIG. 8**

**FIG. 9**

```
┌─────────────────────────┐
│ Parse an absolute value of │─── 201
│        a BVD            │
└─────────────────────────┘
            │
            ▼
┌───────────────────────────────────────────────┐
│                                               │── 202
│     Parse a sign prediction index of the BVD   │
│                                               │
└───────────────────────────────────────────────┘
            │
            ▼
┌───────────────────────────────────────────────┐
│ Create a BVD combination list for possible     │── 203
│ signs of the BVD and the absolute value of the BVD │
└───────────────────────────────────────────────┘
            │
            ▼
┌───────────────────────────────────────────────┐
│ Perform template prediction according to the BVD │── 204
│ combination list and BVP of the current block,   │
│ calculate cost of each BVD combination in the    │
│ BVD combination list                           │
└───────────────────────────────────────────────┘
            │
            ▼
┌───────────────────────────────────────────────┐
│ Sort according to the calculated cost, obtain a │── 205
│ real BVD according to the sign prediction index, │
│ and perform motion compensation on the current block │
└───────────────────────────────────────────────┘
```

**FIG. 10**

$\lambda = 157$   $\neq$

| | | |
|---|---|---|
| 0 | Cost(0) = 2264 | } 8 |
| 1 | Cost(1) = 2272 | } 10 |
| 2 | Cost(2) = 2282 | } 88 |
| 3 | Cost(3) = 2366 | } 5 |
| 4 | Cost(4) = 2371 | } 379 |
| 5 | Cost(5) = 2750 | } 844 |
| 6 | Cost(6) = 3594 | |

$|5| < \lambda$

| | | |
|---|---|---|
| 0 | Cost(0) | = 2264 |
| 1 | Cost(1) | = 2272 |
| 2 | Cost(2) | = 2282 |
| 3 | Cost(3) | = 2366 |
| 5 | Cost(5) | = 2750 |
| 4 | Cost(4) | = 2371 |
| 6 | Cost(6) | = 3594 |

**FIG. 11**

```
┌───────────────────────────────────────────────┐
│ Sort, according to an absolute value of a BVD of │── 301
│ a current block, candidate BVDs of the current   │
│ block, to determine a sorting result            │
└───────────────────────────────────────────────┘
            │
            ▼
┌───────────────────────────────────────────────┐
│ Determine, according to BVD sign information of  │── 302
│ the current block and the sorting result, BVD    │
│ sign index information of the current block      │
└───────────────────────────────────────────────┘
            │
            ▼
┌───────────────────────────────────────────────┐
│ Write the absolute value of the BVD and the BVD  │── 303
│ sign index information into a bitstream          │
└───────────────────────────────────────────────┘
```

**FIG. 12**

Code an absolute value of a BVD — 401

Create a BVD combination list for possible signs of the BVD and the absolute value of the BVD — 402

Perform template prediction according to the BVD combination list and BVP of the current block, calculate cost of each BVD combination in the BVD combination list — 403

Sort according to the costs, obtain a sign prediction index of the BVD by using a real BVD sign and the sorted list — 404

Code the sign prediction index of the BVD — 405

**FIG. 13**

— 110

Encoder

/ 111

First Determination Unit

/ 112

Coding Unit

**FIG. 14**

110

Encoder

115

First Communication
Interface

116

114

First Processor

113

First Memory

**FIG. 15**

120

Decoder

121

Decoding Unit

122

Second
Determination Unit

**FIG. 16**

120

Decoder

125

Second Communication
Interface

126

124

Second Processor

123

Second Memory

**FIG. 17**

## INTERNATIONAL SEARCH REPORT

| International application No. |
| --- |
| **PCT/CN2022/125219** |

---

**A. CLASSIFICATION OF SUBJECT MATTER**

H04N19/52(2014.01)i; H04N19/86(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, ENTXT, DWPI, JVET: 块, 复制, 拷贝, 向量, 矢量, 差, 绝对值, 符号, 索引, 排序, 顺序, 成本, 代价, 失真, IBC, BVD, intra, block, copy, vector, difference, signal, index, syntax, +order+, cost, distort+

**C. DOCUMENTS CONSIDERED TO BE RELEVANT**

| Category* | Citation of document, with indication, where appropriate, of the relevant passages | Relevant to claim No. |
| --- | --- | --- |
| A | CN 106464904 A (QUALCOMM INC.) 22 February 2017 (2017-02-22) description, paragraphs [0006]-[0011] | 1-87 |
| A | CN 111866515 A (HANGZHOU HIKVISION DIGITAL TECHNOLOGY CO., LTD.) 30 October 2020 (2020-10-30) entire document | 1-87 |
| A | WO 2020245391 A1 (FRAUNHOFER-GESELLSCHAFT ZURFORDERUNG DER ANGEWANDTEN FORSCHUNG E.V.) 10 December 2020 (2020-12-10) entire document | 1-87 |
| A | US 2017332097 A1 (KT CORP.) 16 November 2017 (2017-11-16) entire document | 1-87 |
| A | SALEHIFAR, Mehdi et al. "CE8-Related : On MVD Coding (JVET-N0289)" *Joint Video Experts Team (JVET) of ITU-T SG 16 WP 3 and ISO/IEC JTC 1/SC 29/WG 11 14th Meeting: Geneva, CH, 19–27 March 2019*, 27 March 2019 (2019-03-27), entire document | 1-87 |

---

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 May 2023** | **25 May 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/125219** |

**C.    DOCUMENTS CONSIDERED TO BE RELEVANT**

| Category* | Citation of document, with indication, where appropriate, of the relevant passages | Relevant to claim No. |
| --- | --- | --- |
| A | SUN, Yucheng et al. "CE8-related: Simple BVD coding scheme without adding more context (JVET-O0325)"<br>*Joint Video Experts Team (JVET) of ITU-T SG 16 WP 3 and ISO/IEC JTC 1/SC 29/WG 11*<br>*15th Meeting: Gothenburg, SE, 3–12 July 2019,* 12 June 2019 (2019-06-12),<br>      entire document | 1-87 |

**INTERNATIONAL SEARCH REPORT**
Information on patent family members

International application No.

**PCT/CN2022/125219**

| Patent document cited in search report | | | Publication date (day/month/year) | Patent family member(s) | | | Publication date (day/month/year) |
|---|---|---|---|---|---|---|---|
| CN | 106464904 | A | 22 February 2017 | WO | 2015196087 | A1 | 23 December 2015 |
| | | | | EP | 3158750 | A1 | 26 April 2017 |
| | | | | US | 2015373370 | A1 | 24 December 2015 |
| | | | | JP | 2017519447 | A | 13 July 2017 |
| | | | | IN | 201647039848 | A | 23 December 2016 |
| CN | 111866515 | A | 30 October 2020 | WO | 2020221317 | A1 | 05 November 2020 |
| WO | 2020245391 | A1 | 10 December 2020 | EP | 3981147 | A1 | 13 April 2022 |
| | | | | US | 2022094925 | A1 | 24 March 2022 |
| | | | | CN | 114026853 | A | 08 February 2022 |
| US | 2017332097 | A1 | 16 November 2017 | KR | 20160063996 | A | 07 June 2016 |
| | | | | KR | 20200132829 | A | 25 November 2020 |
| | | | | WO | 2016085231 | A1 | 02 June 2016 |
| | | | | CN | 107005696 | A | 01 August 2017 |
| | | | | VN | 53858 | A | 25 September 2017 |
| | | | | CN | 111031323 | A | 17 April 2020 |

Form PCT/ISA/210 (patent family annex) (July 2022)